# EUROPEAN PATENT APPLICATION

(11) **EP 2 611 150 A1**
(43) Date of publication of application: **03.07.2013**
(21) Application number: 11819852.2
(22) Date of filing: 18.08.2011
(51) Int. Cl.: H04N 7/173

(54) **TRANSMISSION APPARATUS AND METHOD, RECEPTION APPARATUS AND METHOD, AND TRANSMISSION/RECEPTION SYSTEM**

(30) Priority: 24.03.2011 US 201113071238; 27.08.2010 US 377808 P
(71) Applicant: Sony Corporation, Tokyo 108-0075 (JP)
(72) Inventor: YAMAGISHI Yasuaki, Tokyo 108-0075 (JP)
(74) Representative: Körber, Martin Hans
(86) International application number: PCT/JP2011/068678
(87) International publication number: WO 2012/026389

(57) **Abstract**

The present invention relates to a transmission apparatus and method, a reception apparatus and method, and a transmission and reception system by which content which meets the needs at the time can be acquired.

A server 11 generates a PDI-Q representative of a question about the tastes of a user of a client 12, and transmits the PDI-Q and a provider side PDI-BA representative of an answer set by a provider providing content to the question about the tastes of the user and represented in a bitmap index to the client 12. The client 12 generates, in response to the PDI-Q transmitted thereto from the server 11, a user side PDI-BA representative of an answer of the user to the question and represented in a bitmap index. Then, the client 12 carries out matching between the user side PDI-BA and the provider side PDI-BA transmitted from the server 11 with each other to determine acquisition of content distributed from the server 11. The present invention can be applied to a broadcasting system which broadcasts a digital television program.

## Description

### [Technical Field]

The present invention relates to a transmission apparatus and method, a reception apparatus and method, and a transmission and reception system, and particularly to a transmission apparatus and method, a reception apparatus and method, and a transmission and reception system wherein content can be acquired in response to metadata.

### [Background Art]

In recent years, in accordance with digitalization of television broadcasting, the amount of information which can be broadcast at the same time has increased drastically. Therefore, various kinds of data are broadcast at the same time together with a television broadcast (content) which is viewed on the real time basis.

Further, as a communication path of content, a content download service has been proposed wherein the television broadcasting described above and the Internet through which data can be downloaded at a high speed are used properly (for example, refer to Patent Literature 1).

Incidentally, in a general content download service, a filtering attribute (hereinafter referred to as filtering index, filtering metadata or the like) set in a server on the provider (content provider or service provider) side which provides (distributes) content is applied as metadata to content. Consequently, filtering (selection) of content in a client who receives (acquires) content is carried out.

The filtering attribute is set as a value regarding an element of metadata selected from within a metadata set prescribed by a standardization organization such as ATSC (Advanced Television Standard Committee) or ARIB (Association of Radio Industries and Businesses).

In particular, for example, content to which a filtering attribute that an "expected viewer" is selected as an element of metadata and "teen" is set as a value regarding the element of the metadata is applied is provided to a client which carries out filtering so as to acquire "content for viewers 'whose expected viewer is teens.'"

### [Citation List]

### [Patent Literature]

[PTL 1]
   Japanese Patent Laid-Open No. 2010-21988

### [Summary]

### [Technical Problems]

However, metadata (filtering attribute) which is not included in the metadata set prescribed by a standardization organization is not applied to content.

For example, even if the provider side desires to distribute "content for viewers 'whose expected viewer is teens' and besides 'who are interested in job hunting,'" if a metadata set prescribed by a standardization organization does not include "whether or not a viewer is interested in job hunting" as an element of the metadata, a filtering attribute that "a viewer is interested in job hunting" is set as an element of the metadata cannot be applied to content.

Accordingly, the provider side cannot distribute content to which a matter of concern of a viewer is applied as metadata and which meets the needs at the time (for example, with a fashion taken into consideration).

Further, in such a case as just described, the client side cannot carry out filtering so as to acquire content which meets the needs at the time.

The present invention has been made in view of such a situation as described above, and it is an object of the present invention to make it possible to acquire content which meets the needs at the time.

### [Solution to Problems]

According to a first aspect of the present invention, there is provided a transmission apparatus which distributes content to a client, including:
question generation means for generating question information which is information representative of a question about the tastes of a user of the client; and
transmission means for transmitting the question information and provider side answer information, which is information of a bit string representative of an answer set by a provider providing the content to the client, to the question about the tastes of the user.

The transmission apparatus may further include metadata generation means for generating metadata including the provider side answer information as metadata of the content corresponding to the answer set by the provider, and the transmission means transmits the metadata to the client.

According to the first aspect of the present invention, there is provided a transmission method for a transmission apparatus which distributes content to a client, including:
a question generation step of generating question information which is information representative of a question about the tastes of a user of the client; and
a transmission step of transmitting the question information and provider side answer information, which is information of a bit string representative of an answer set by a provider providing the content to the client, to the question about the tastes of the user.

In the first aspect of the present invention, question information which is information representative of a question about the tastes of a user of the client is generated. Then, the question information and provider side answer information, which is information of a bit string representative of an answer set by a provider providing the content, to the question about the tastes of the user is transmitted to the client.

According to a second aspect of the present invention, there is provided a reception apparatus which acquires content distributed from a server, including:
answer generation means for generating, in response to question information which is transmitted from the server and is information representative of a question about the tastes of a user, user side answer information which is information of a bit string representative of an answer of the user to the question; and
matching means for carrying out matching between the answer information and provider side answer information, which is transmitted from the server and is information of a bit string representative of an answer set by a provider providing the content, to the question to determine acquisition of the content distributed from the server.

The matching means may carry out the matching to determine acquisition of the content corresponding to metadata including the provider side answer information.

According to the second aspect of the present invention, there is provided a reception method for a reception apparatus which acquires content distributed from a server, including:
an answer generation step of generating, in response to question information which is transmitted from the server and is information representative of a question about the tastes of a user, user side answer information which is information of a bit string representative of an answer of the user to the question; and
a matching step of carrying out matching between the answer information and provider side answer information, which is transmitted from the server and is information of a bit string representative of an answer set by a provider providing the content, to the question to determine acquisition of the content distributed from
the server.

In the second aspect of the present invention, in response to question information which is transmitted from the server and is information representative of a question about the tastes of the user, user side answer information which is information of a bit string representative of an answer of the user to the question is generated. Then, matching between the answer information and provider side answer information, which is transmitted from the server and is information of a bit string representative of an answer set by a provider providing the content to the question is carried out to determine acquisition of the content distributed from the server.

According to a third aspect of the present invention, there is provided a transmission and reception system including a transmission apparatus which distributes content and a reception apparatus which acquires the content distributed from the transmission apparatus, wherein
the transmission apparatus includes
question generation means for generating question information which is information representative of a question about the tastes of a user of the reception apparatus, and
transmission means for transmitting to the reception apparatus the question information and provider side answer information, which is information of a bit string representative of an answer set by a provider providing the content, to the question about the tastes of the user, and
the reception apparatus includes
answer generation means for generating, in response to the question information transmitted from the transmission apparatus, user side answer information which is information of a bit string representative of an answer of the user to the question, and
matching means for carrying out matching between the user side answer information and the provider side answer information transmitted from the transmission apparatus to determine acquisition of the content distributed from the transmission apparatus.

In the third aspect of the present invention, question information which is information representative of a question about the tastes of a user of the reception apparatus is generated. Then, the question information and provider side answer information, which is information of a bit string representative of an answer set by a provider providing the content, to the question about the tastes of the user are transmitted to the reception apparatus. In response to the question information transmitted from the transmission apparatus, user side answer information which is information of a bit string representative of an answer of the user to the question is generated. Then, matching between the user side answer information and the provider side answer information transmitted from the transmission apparatus is carried out to determine acquisition of the content distributed from the transmission apparatus.

### [Advantageous Effect of Invention]

With the first to third aspects of the present invention, content which meets the needs at the time can be acquired.

### [Brief Description of Drawings]

[FIG. 1]

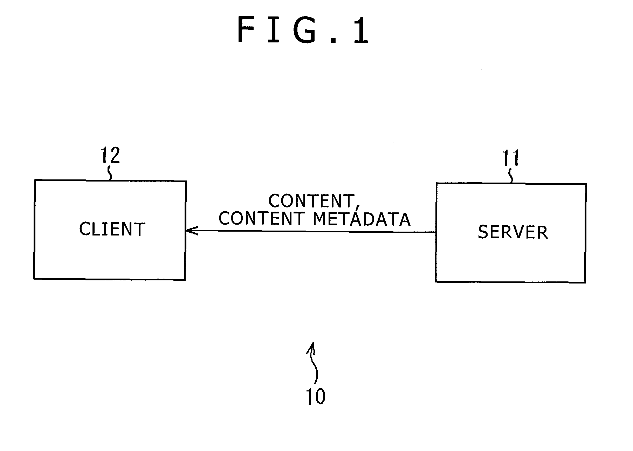

   FIG. 1 is a block diagram showing an example of a configuration of a broadcasting system according to a first embodiment of the present invention.
[FIG. 2]

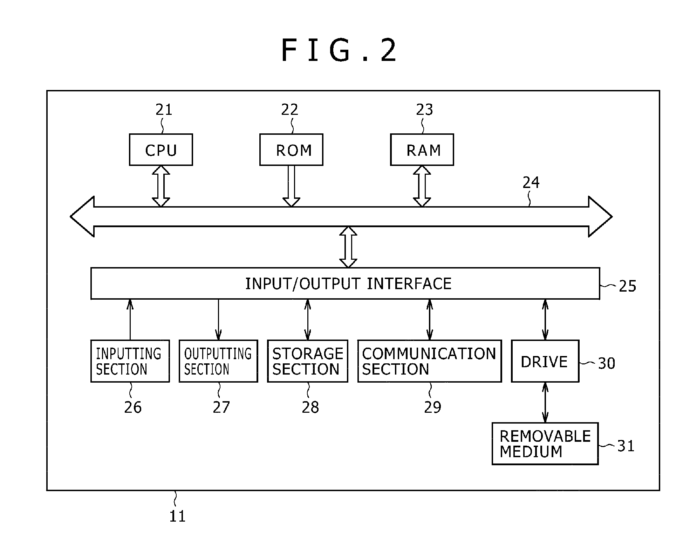

   FIG. 2 is a block diagram showing an example of a hardware configuration of a server.
[FIG. 3]

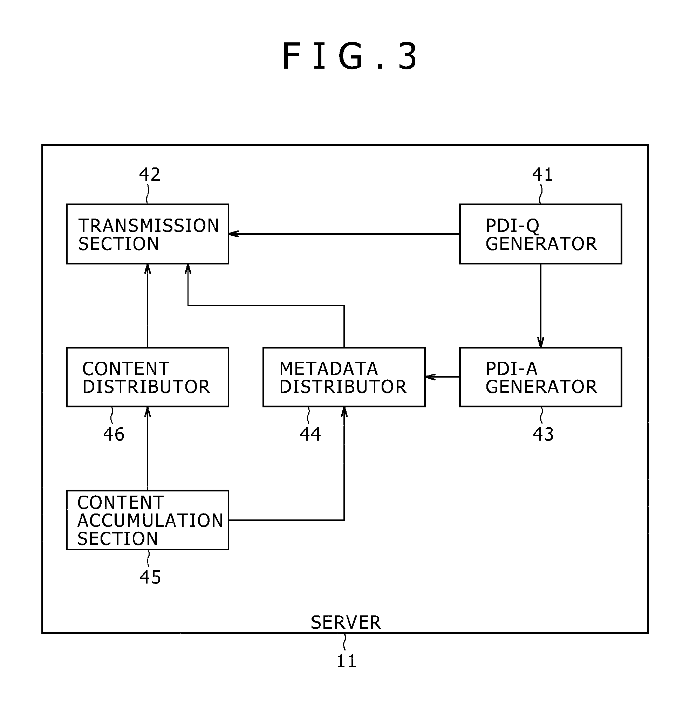

   FIG. 3 is a block diagram showing an example of a functional configuration of the server.
[FIG. 4]

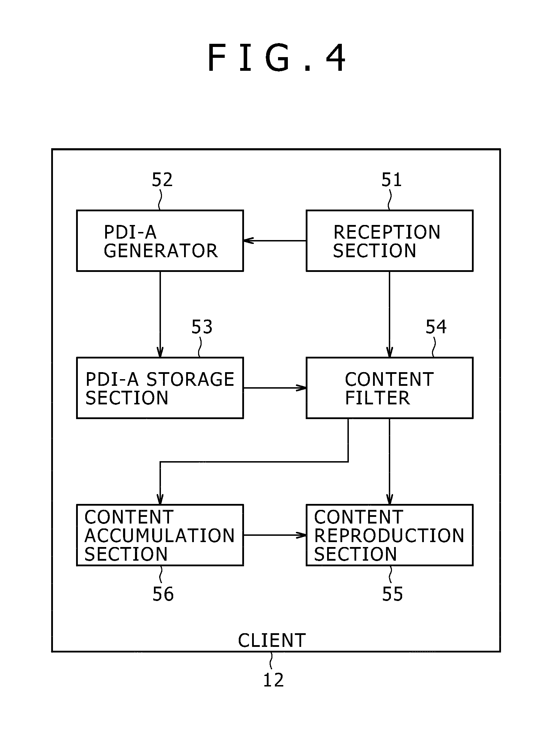

   FIG. 4 is a block diagram showing an example of a functional configuration of a client.
[FIG. 5]

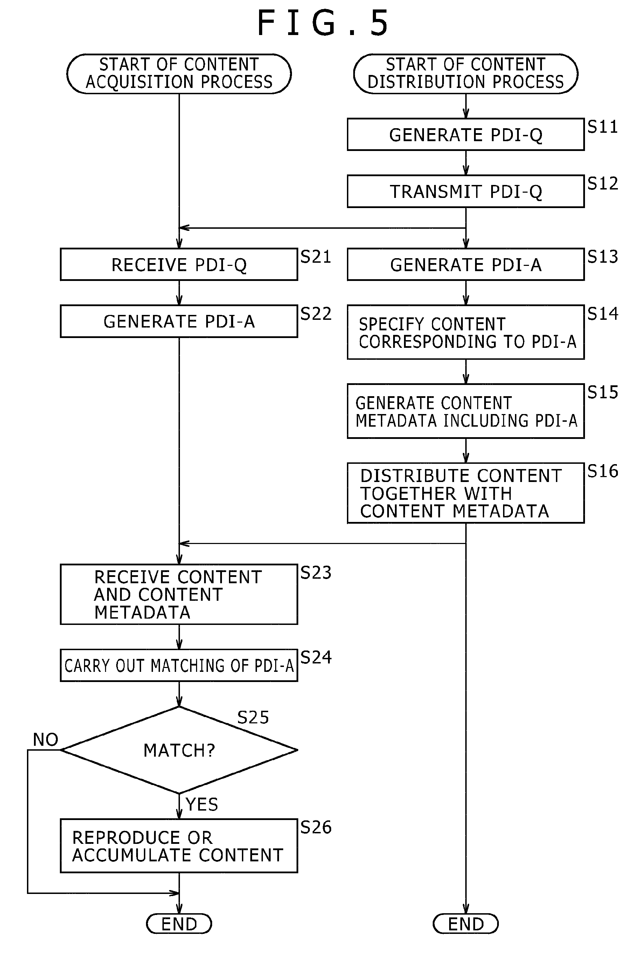

   FIG. 5 is a flow chart illustrating a transmission and reception process of content.
[FIG. 6]

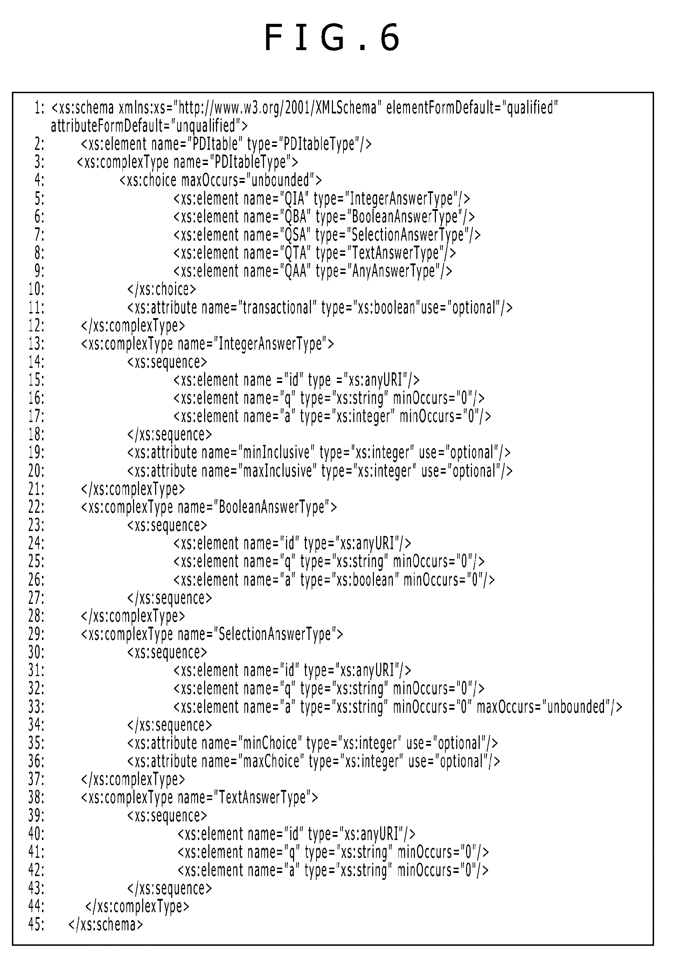

   FIG. 6 is a view illustrating an example of syntax of an XML schema.
[FIG. 7]

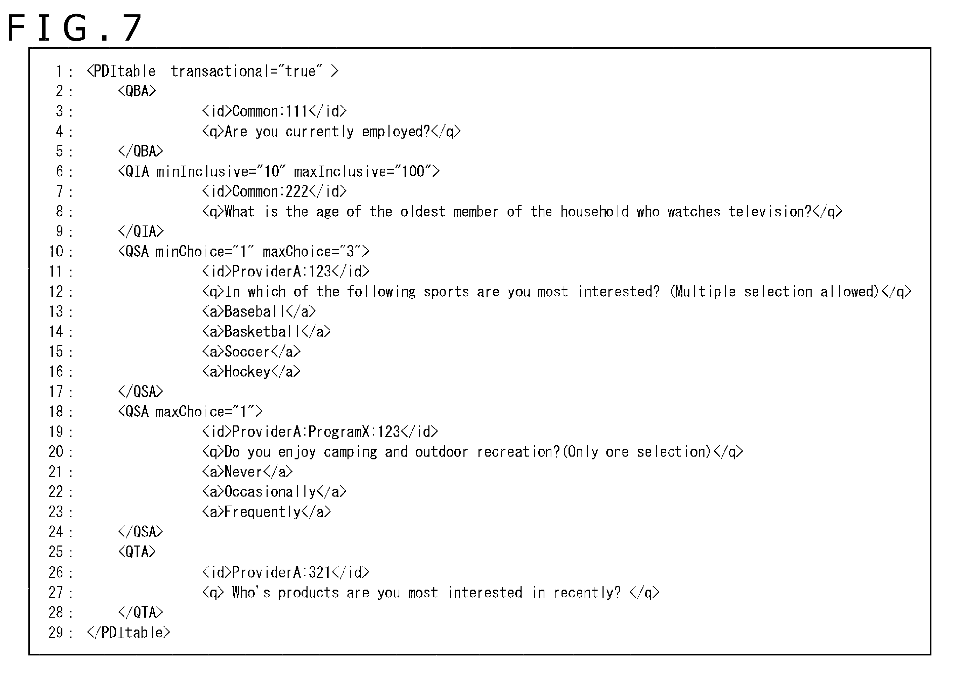

   FIG. 7 is a view illustrating an example of a PDI-Q.
[FIG. 8]

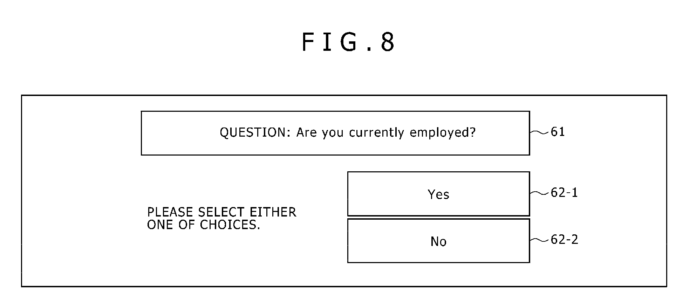

   FIG. 8 is a view illustrating an example of a screen display in an interaction with a user.
[FIG. 9]

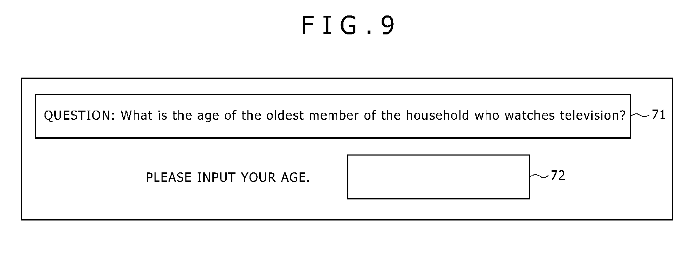

   FIG. 9 is a view illustrating another example of a screen display in an interaction with a user.
[FIG. 10]

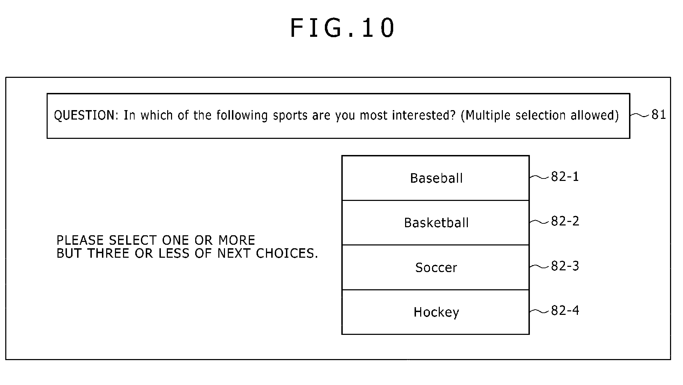

   FIG. 10 is a view illustrating a further example of a screen display in an interaction with a user.
[FIG. 11]

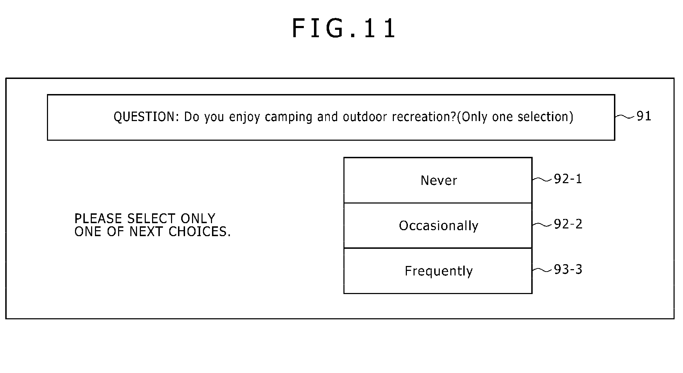

   FIG. 11 is a view illustrating a still further example of a screen display in an interaction with a user.
[FIG. 12]

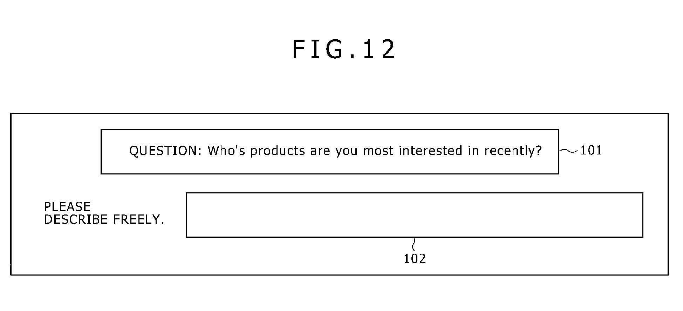

   FIG. 12 is a view illustrating a yet further example of a screen display in an interaction with a user.
[FIG. 13]

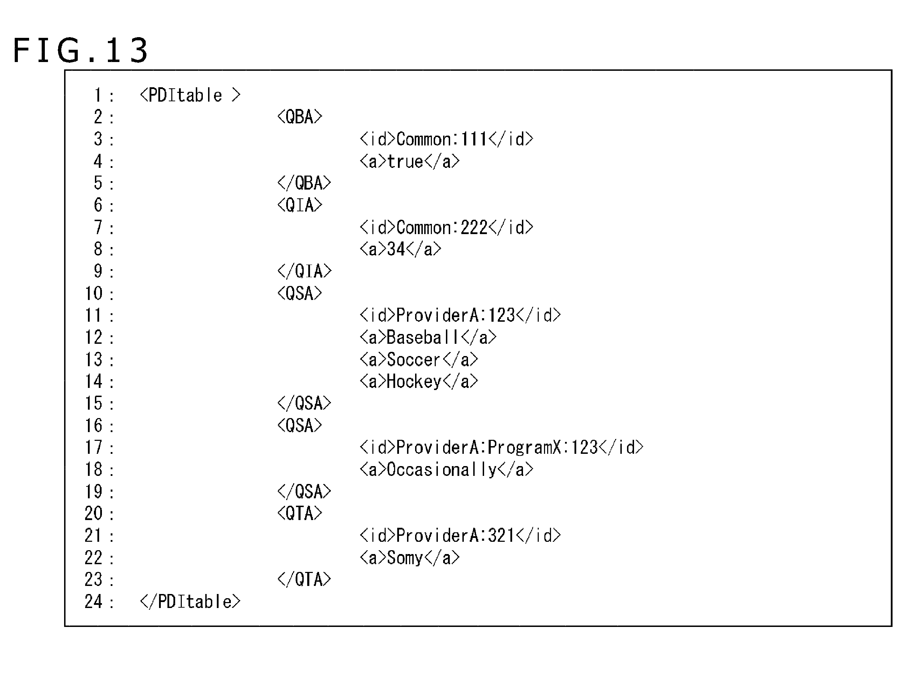

   FIG. 13 is a view illustrating an example of a PDI-A.
[FIG. 14]

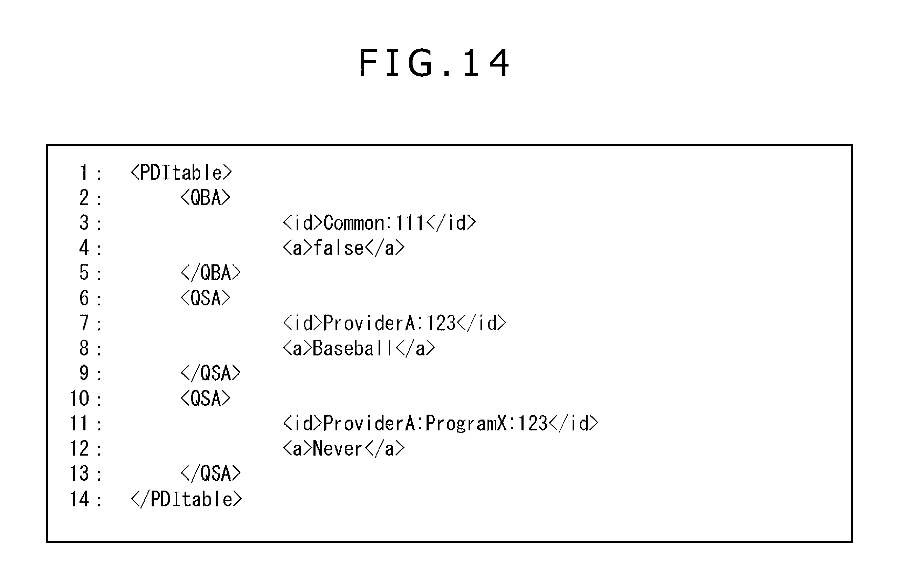

   FIG. 14 is a view illustrating an example of a provider side PDI-A.
[FIG. 15]

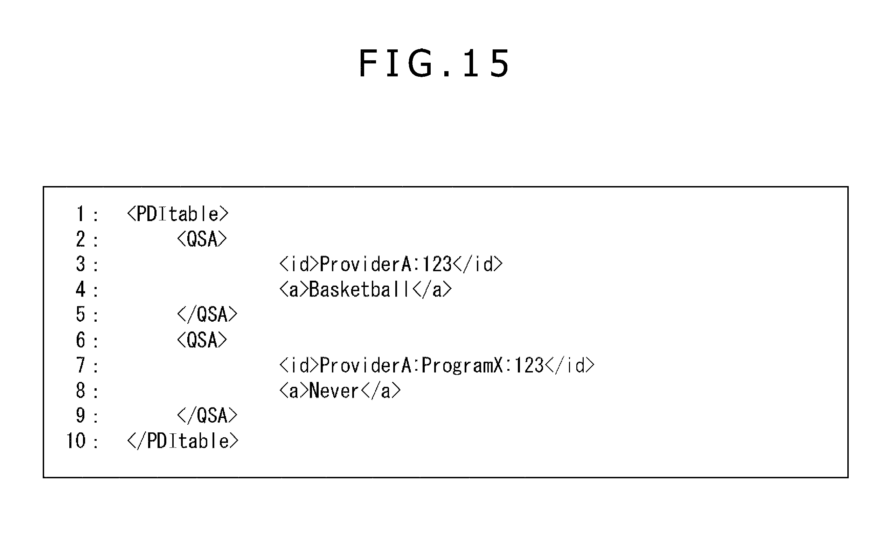

   FIG. 15 is a view illustrating another example of a provider side PDI-A.
[FIG. 16]

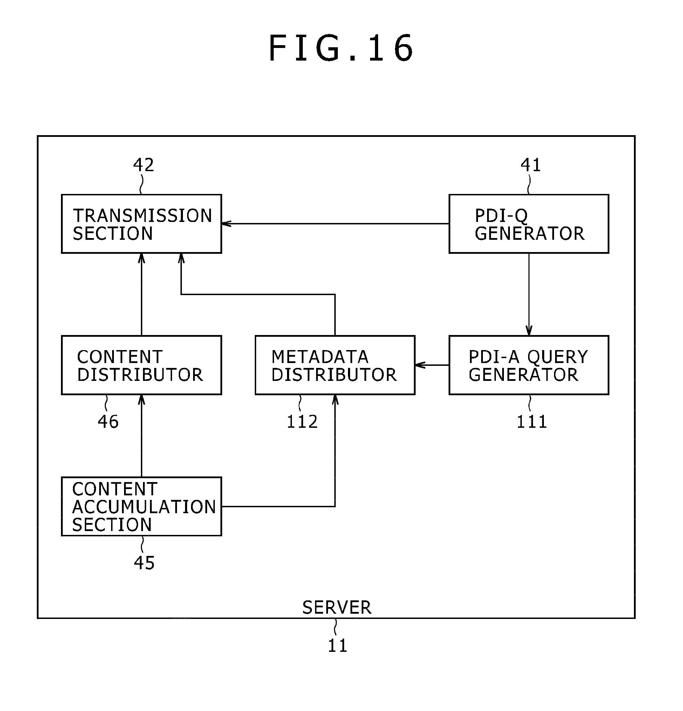

   FIG. 16 is a block diagram showing another example of a functional configuration of the server.
[FIG. 17]

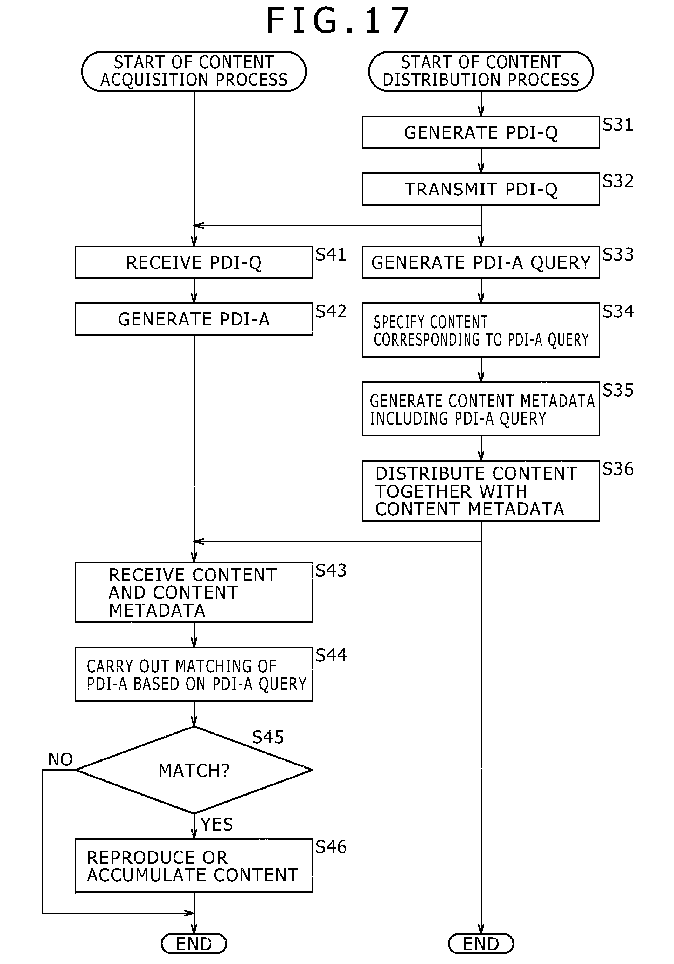

   FIG. 17 is a flow chart illustrating a transmission and reception process of content.
[FIG. 18]

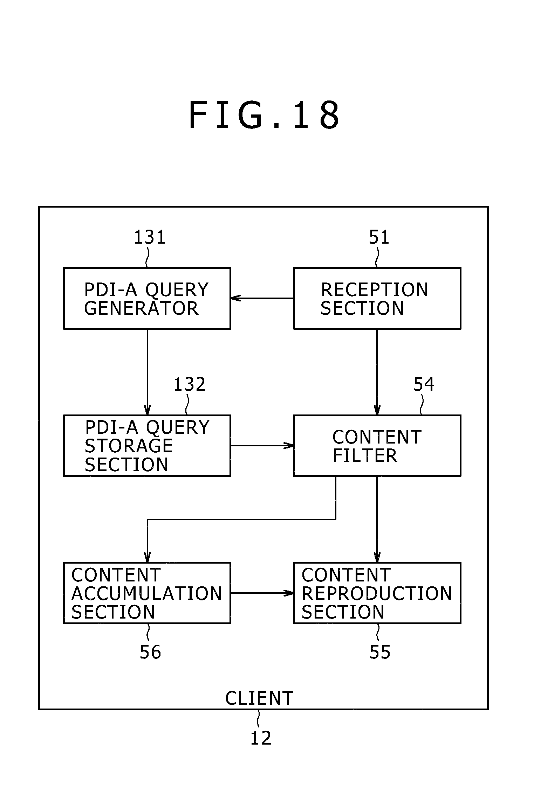

   FIG. 18 is a block diagram showing another example of a functional configuration of the client.
[FIG. 19]

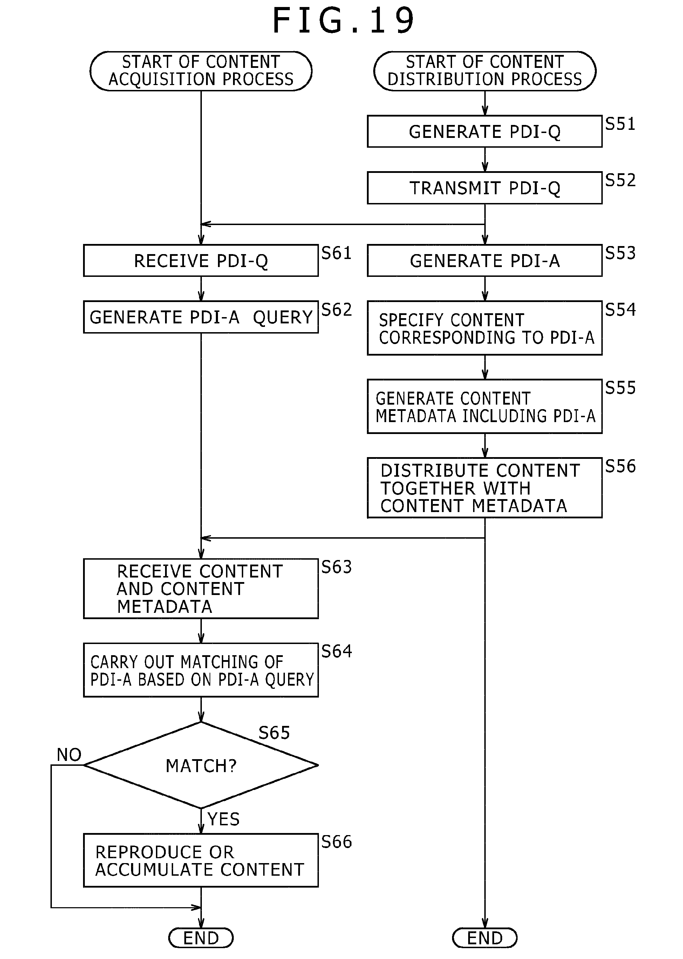

   FIG. 19 is a flow chart illustrating a transmission and reception process of content.
[FIG. 20]

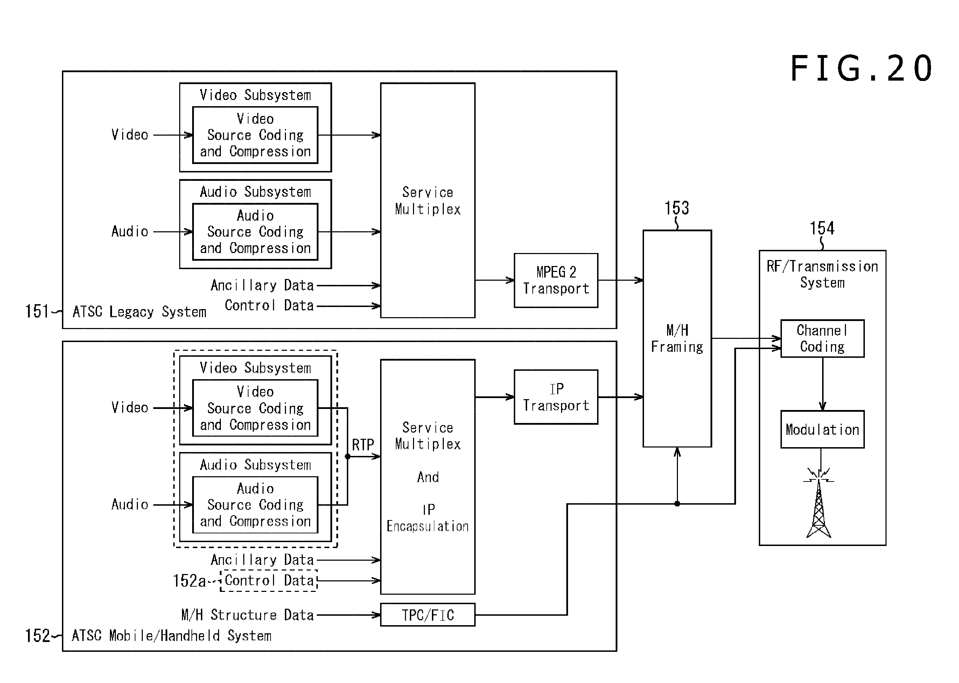

   FIG. 20 is a block diagram showing an example of a configuration of a broadcasting system which carries out broadcasting with an ATSC-M/H system and to which the present invention is applied.
[FIG. 21]

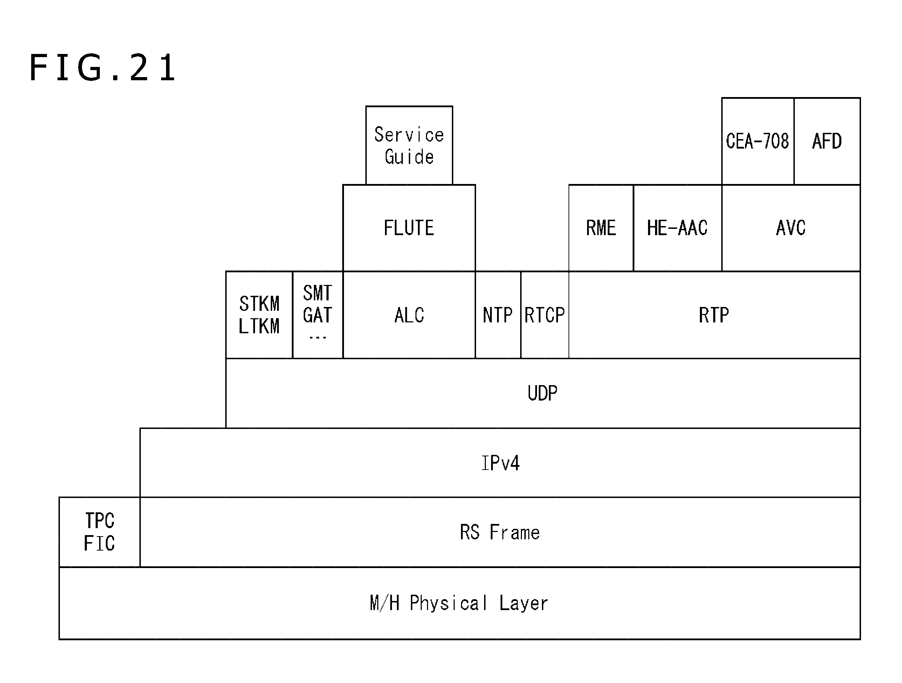

   FIG. 21 is a view illustrating a protocol stack in a signal of a broadcasting wave transmitted by the ATSC-M/H system.
[FIG. 22]

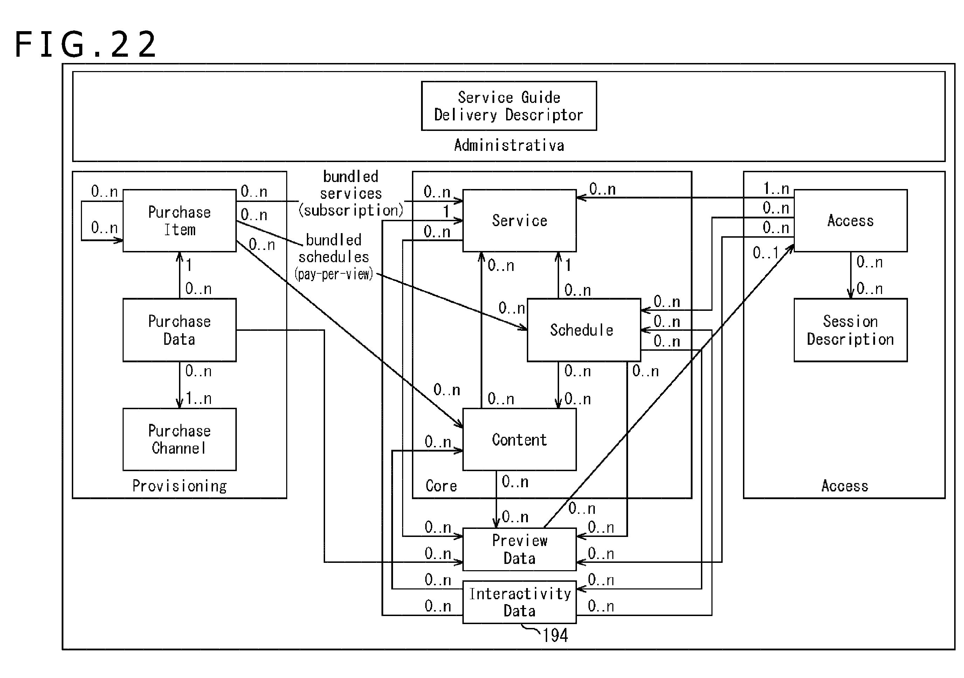

   FIG. 22 is a view illustrating a data configuration of Service Guide.
[FIG. 23]

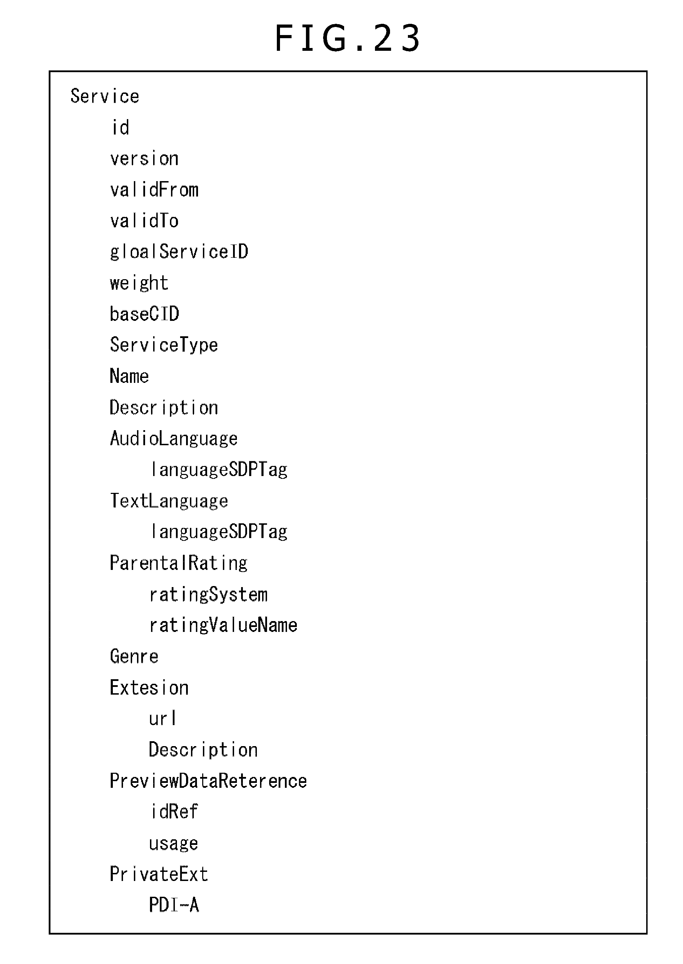

   FIG. 23 is a view illustrating a configuration of a Service fragment.
[FIG. 24]

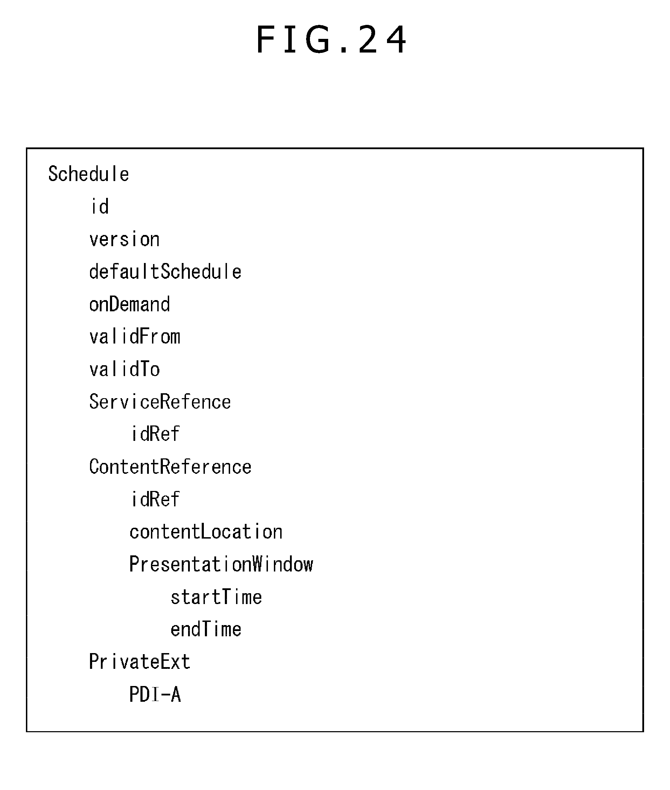

   FIG. 24 is a view illustrating a configuration of a Schedule fragment.
[FIG. 25]

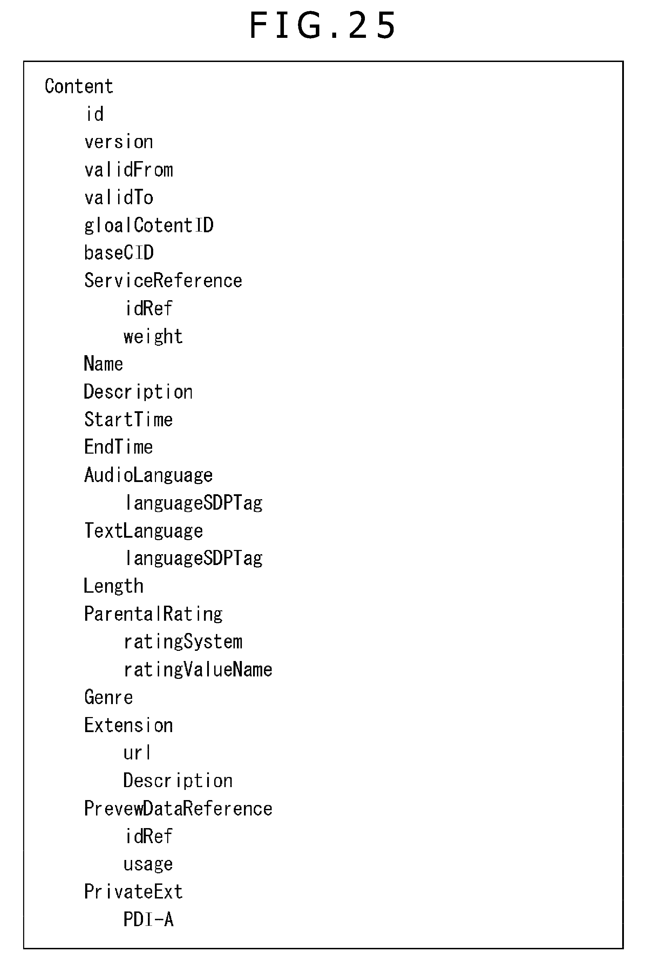

   FIG. 25 is a view illustrating a configuration of a Content fragment.
[FIG. 26]

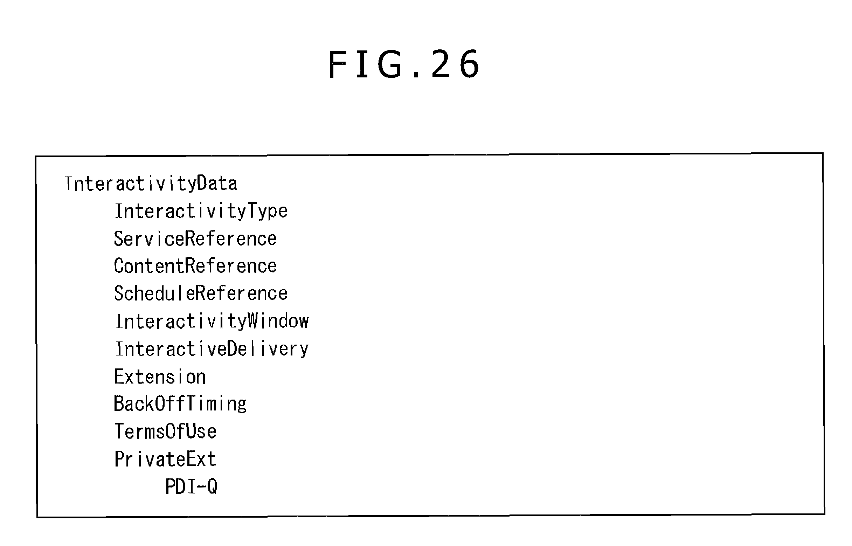

   FIG. 26 is a view illustrating a configuration of an Interactivity Data fragment.
[FIG. 27]

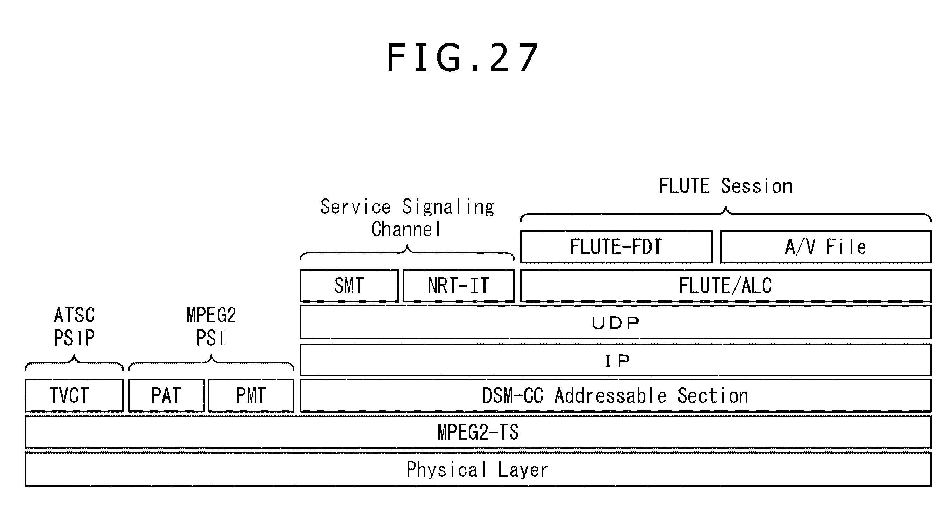

   FIG. 27 is a view illustrating a protocol stack in a signal of a broadcasting wave transmitted by NRT broadcasting.
[FIG. 28]

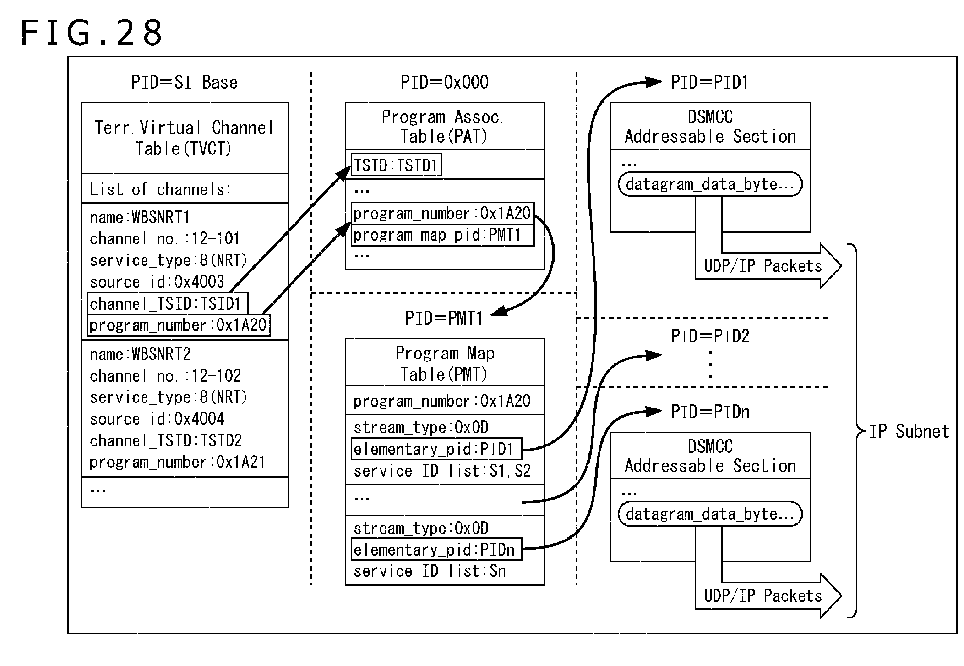

   FIG. 28 is a view illustrating a data structure of a TVCT, a PAT, a PMT and a DSM-CC Addressable Section.
[FIG. 29]

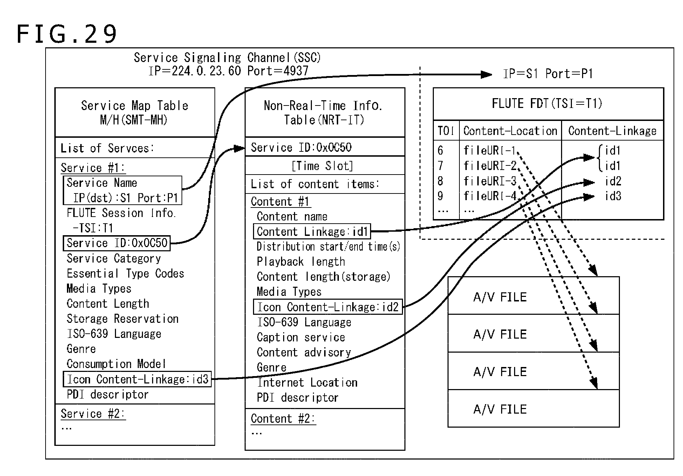

   FIG. 29 is a view showing data structures of SMT, NRT-IT and FLUTE FDT.
[FIG. 30]

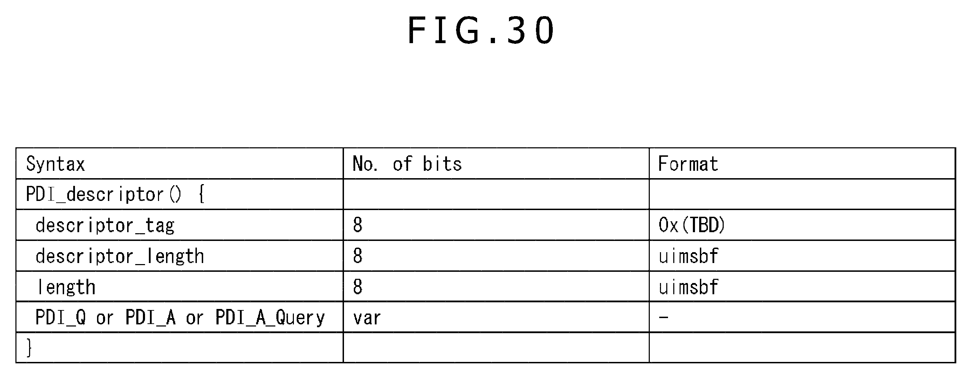

   FIG. 30 is a view illustrating an example of syntax of a PDI descriptor.
   [FIG. 31]

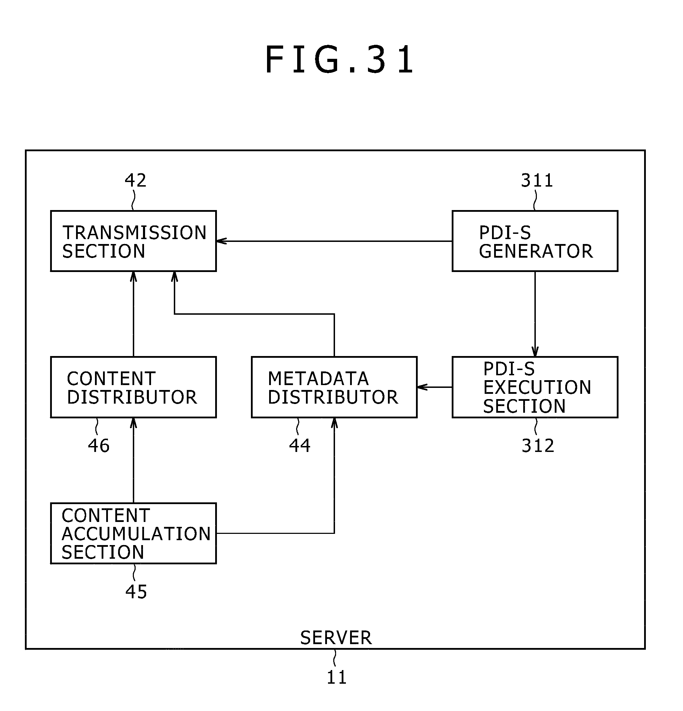

   FIG. 31 is a block diagram showing an example of a functional configuration of a server according to a second embodiment of the present invention.
[FIG. 32]

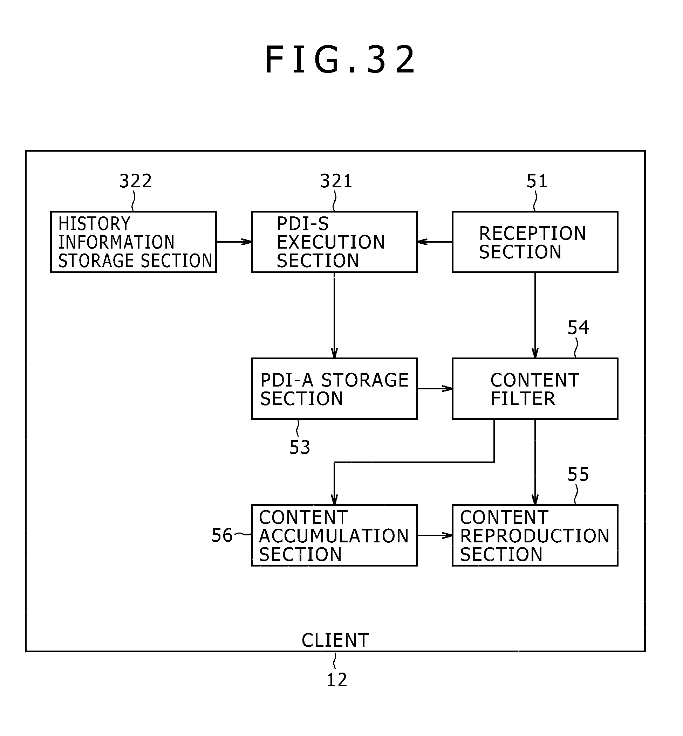

   FIG. 32 is a block diagram showing an example of a functional configuration of a client according to the second embodiment of the present invention.
[FIG. 33]

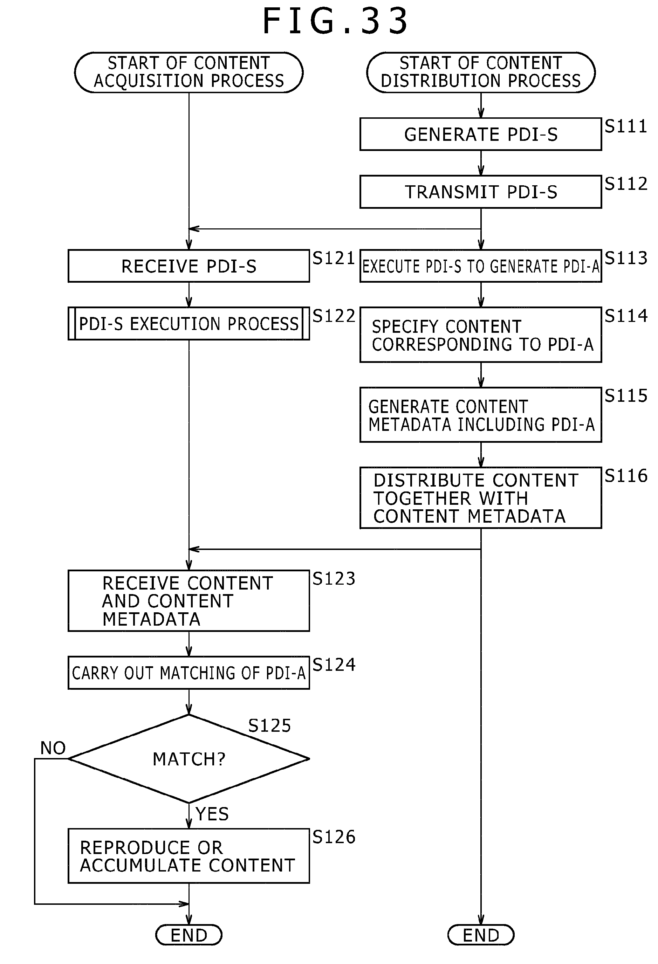

   FIG. 33 is a flow chart illustrating a transmission and reception process of content.
[FIG. 34]

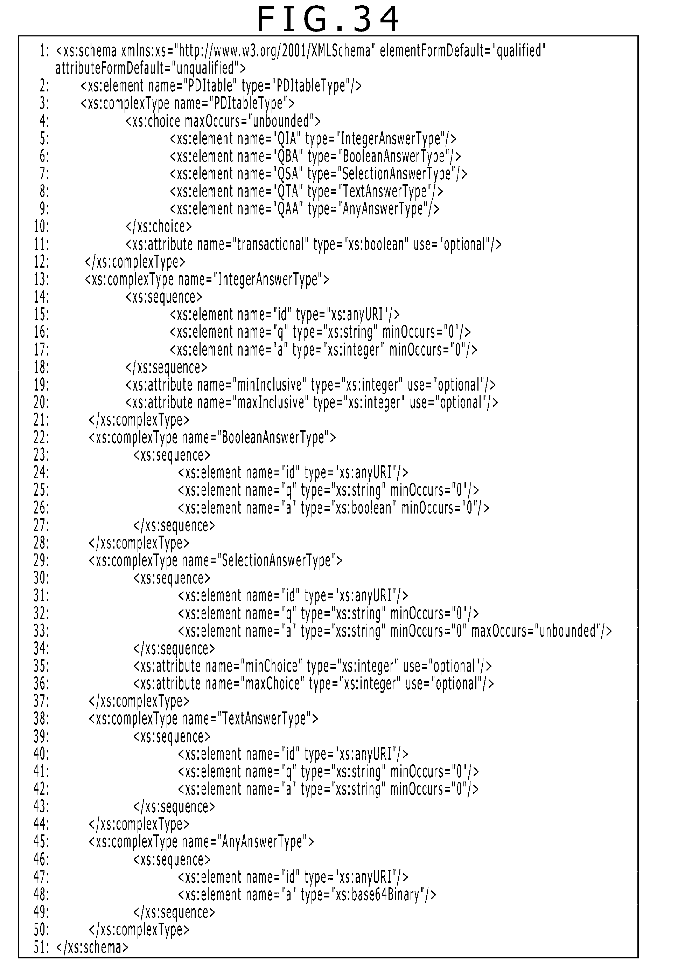

   FIG. 34 is a view illustrating another example of syntax of an XML schema.
[FIG. 35]

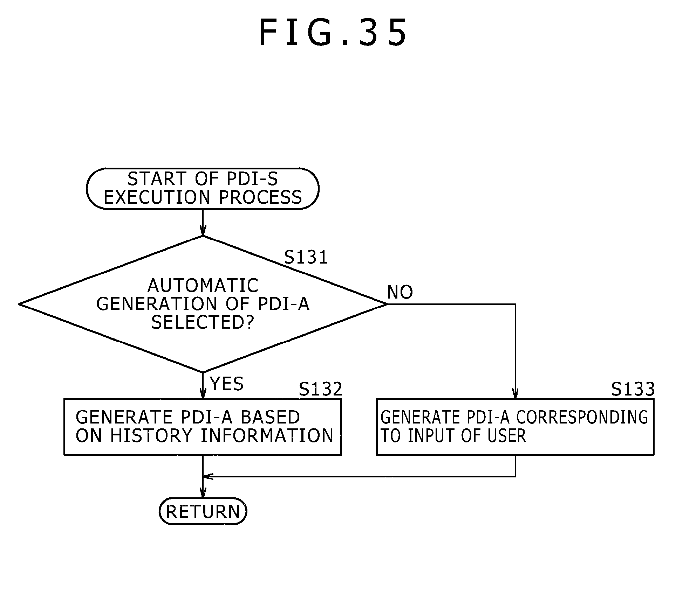

   FIG. 35 is a flow chart illustrating details of a PDI-S execution process.
[FIG. 36]

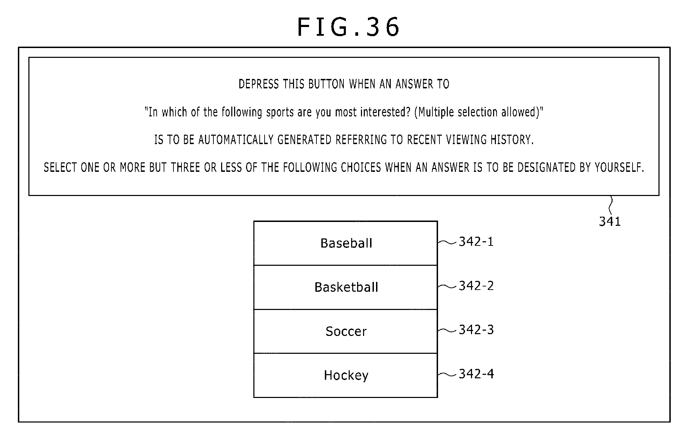

   FIG. 36 is a view illustrating an example of a screen display in an interaction with a user.
[FIG. 37]

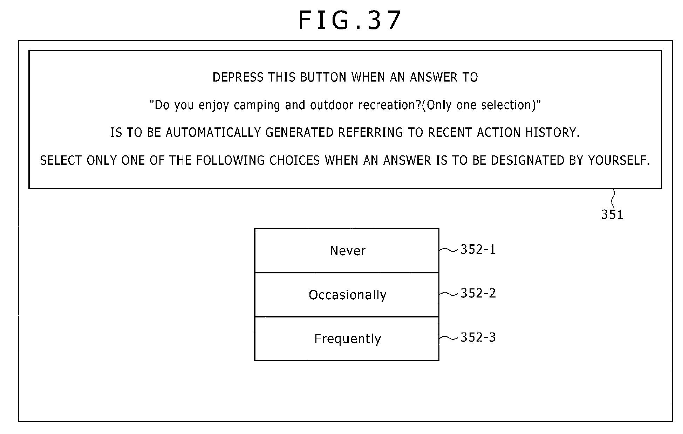

   FIG. 37 is a view illustrating another example of a screen display in an interaction with a user.
[FIG. 38]

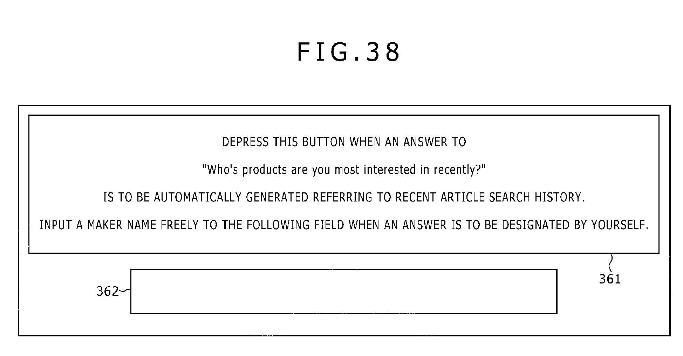

   FIG. 38 is a view illustrating a further example of a screen display in an interaction with a user.
[FIG. 39]

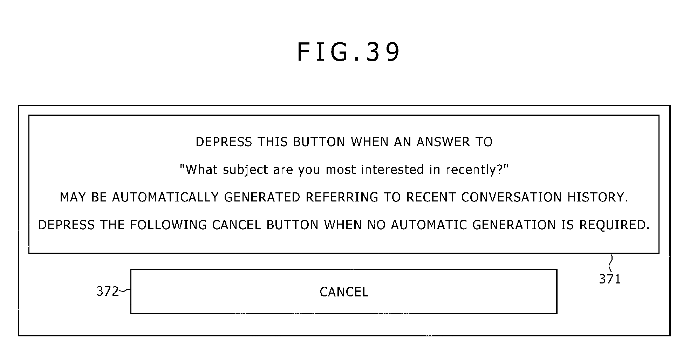

   FIG. 39 is a view illustrating a still further example of a screen display in an interaction with a user.
[FIG. 40]

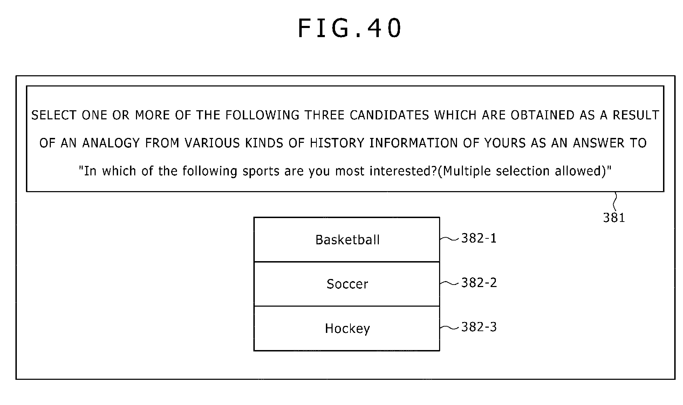

   FIG. 40 is a view illustrating a yet further example of a screen display in an interaction with a user.
[FIG. 41]

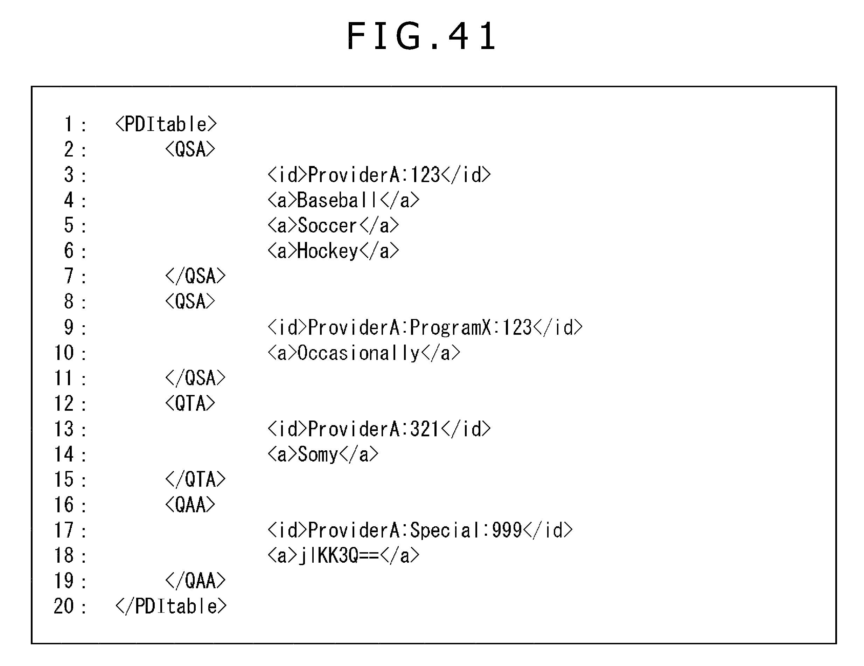

   FIG. 41 is a view illustrating an example of a user side PDI-A.
[FIG. 42]

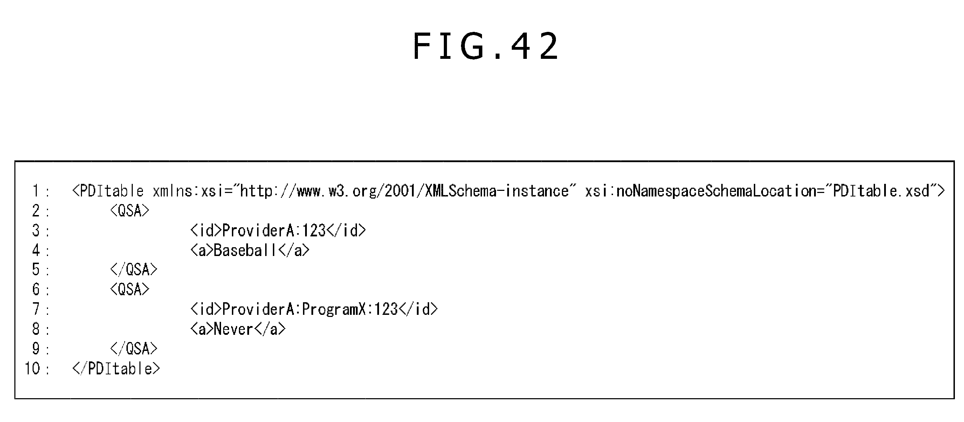

   FIG. 42 is a view illustrating an example of a provider side PDI-A.
[FIG. 43]

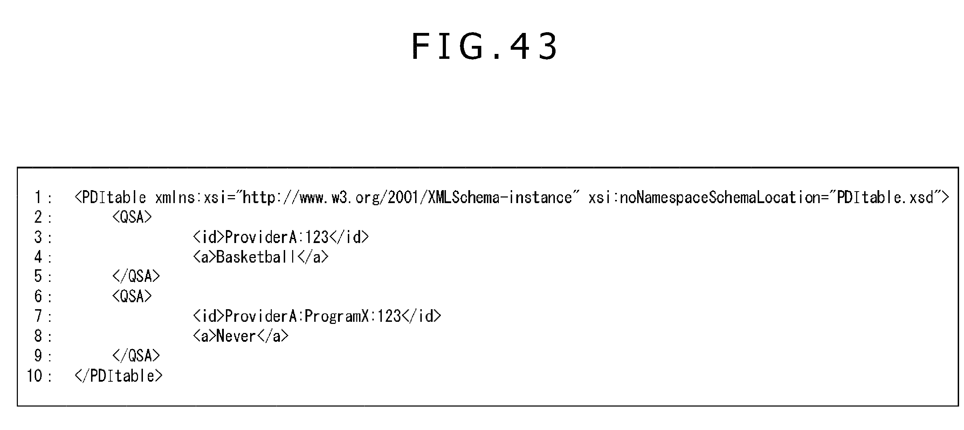

   FIG. 43 is a view illustrating another example of a provider side PDI-A.
[FIG. 44]

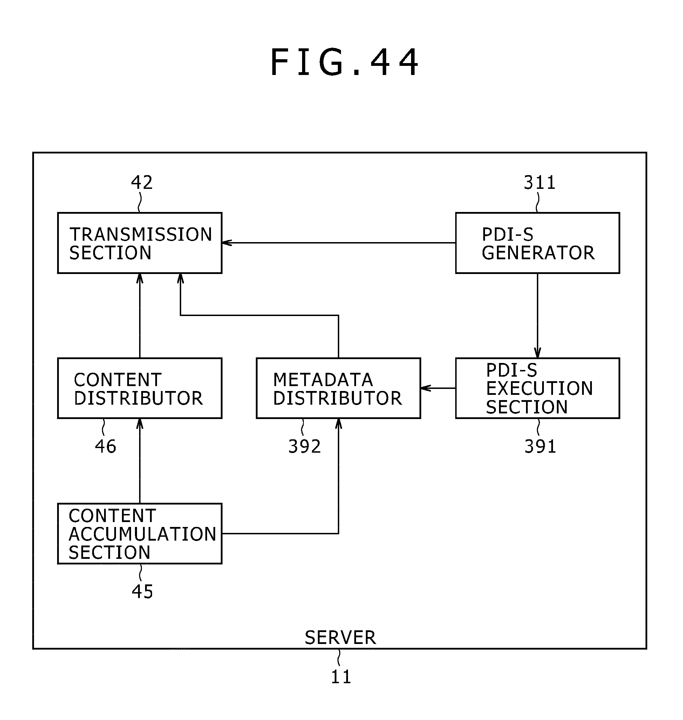

   FIG. 44 is a block diagram showing another example of a functional configuration of the server.
[FIG. 45]

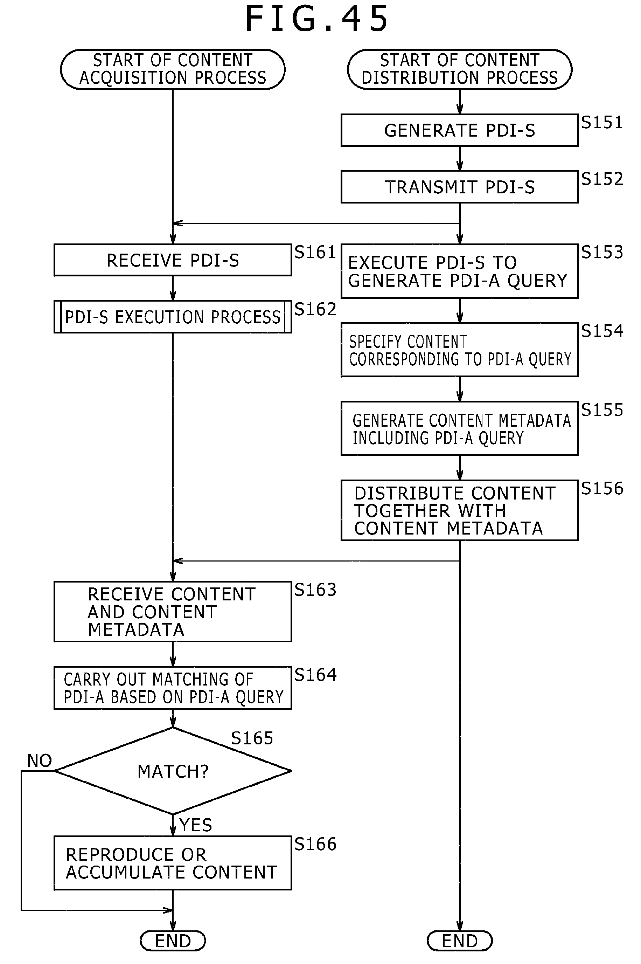

   FIG. 45 is a flow chart illustrating a transmission and reception process of content.
[FIG. 46]

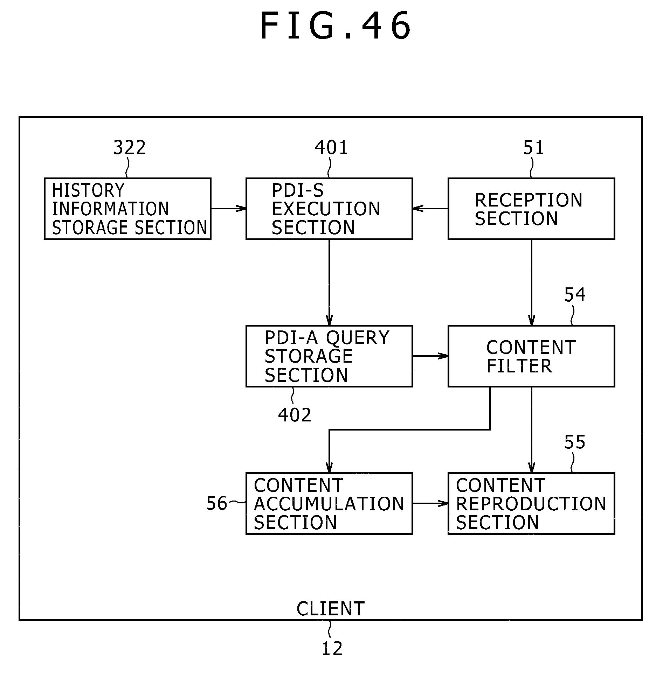

   FIG. 46 is a block diagram showing another example of a functional configuration of the client.
[FIG. 47]

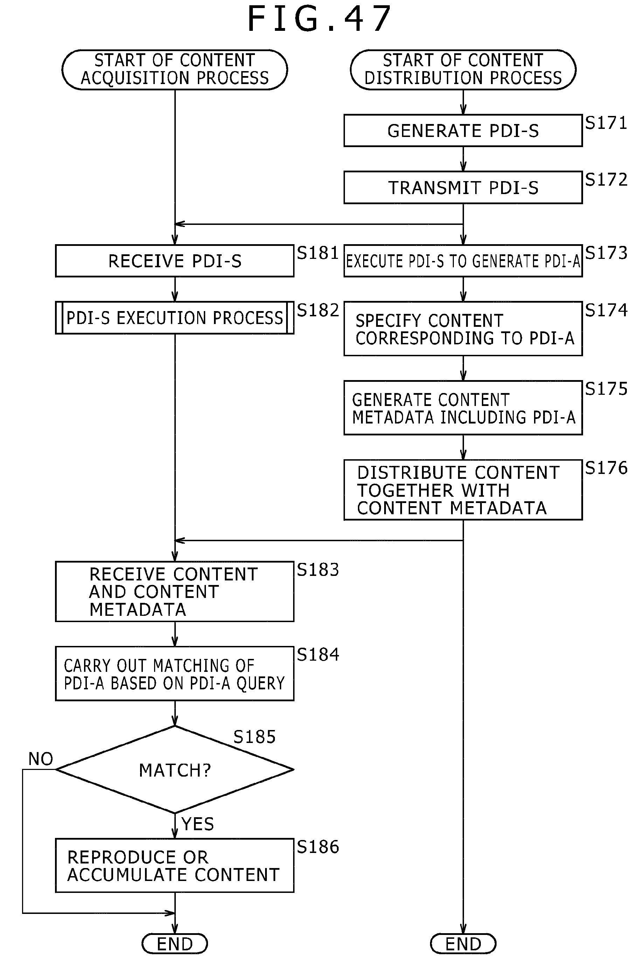

   FIG. 47 is a flow chart illustrating a transmission and reception process of content.
[FIG. 48]

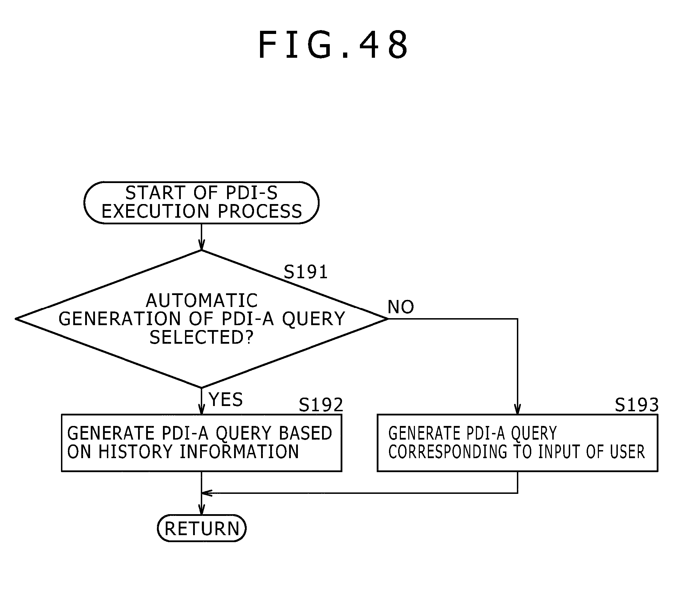

   FIG. 48 is a flow chart illustrating details of a PDI-S execution process.
[FIG. 49]

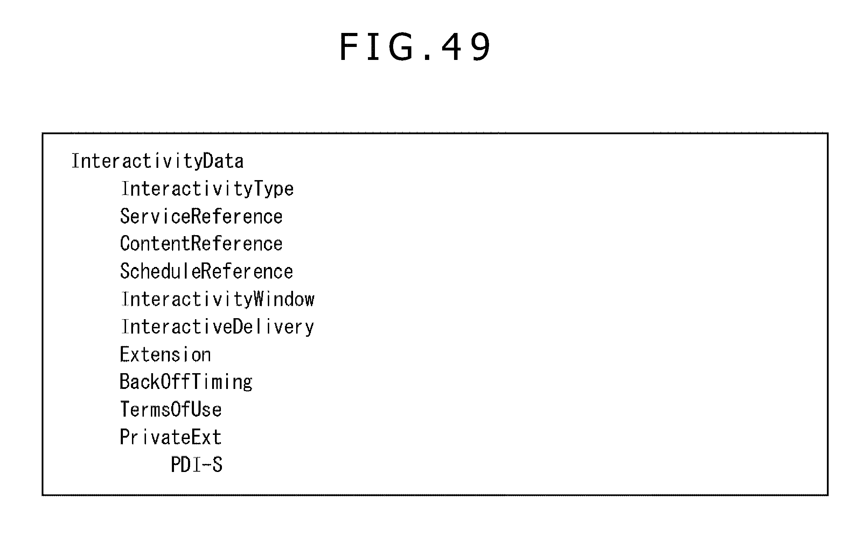

   FIG. 49 is a view illustrating a configuration of an Interactivity Data fragment.
[FIG. 50]

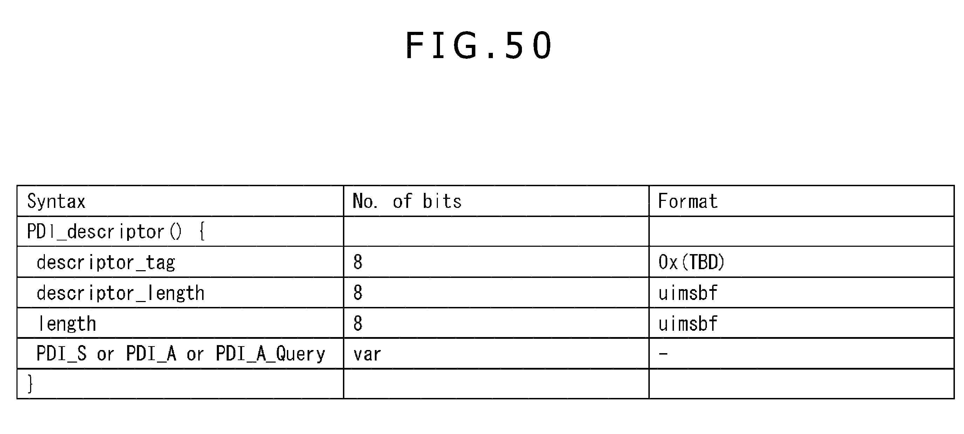

   FIG. 50 is a view illustrating an example of syntax of a PDI descriptor.
[FIG. 51]

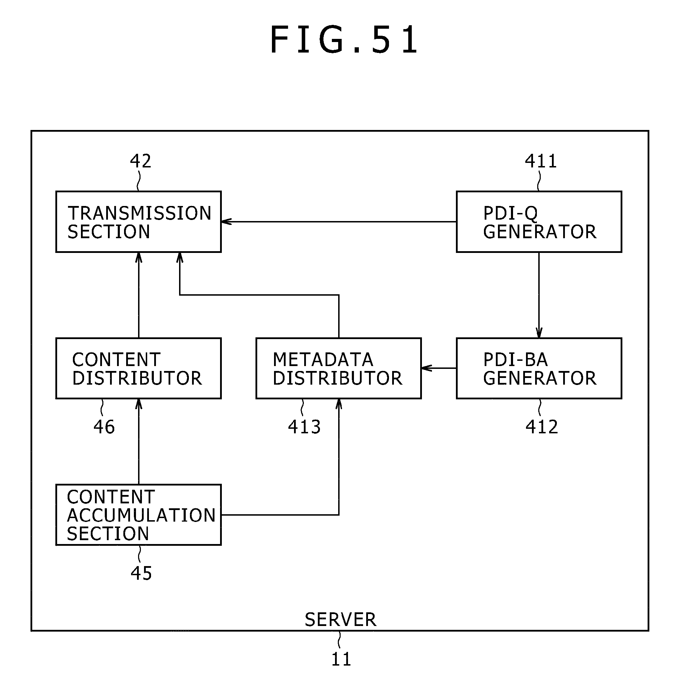

   FIG. 51 is a block diagram showing an example of a functional configuration of a server according to a third embodiment of the present invention.
[FIG. 52]

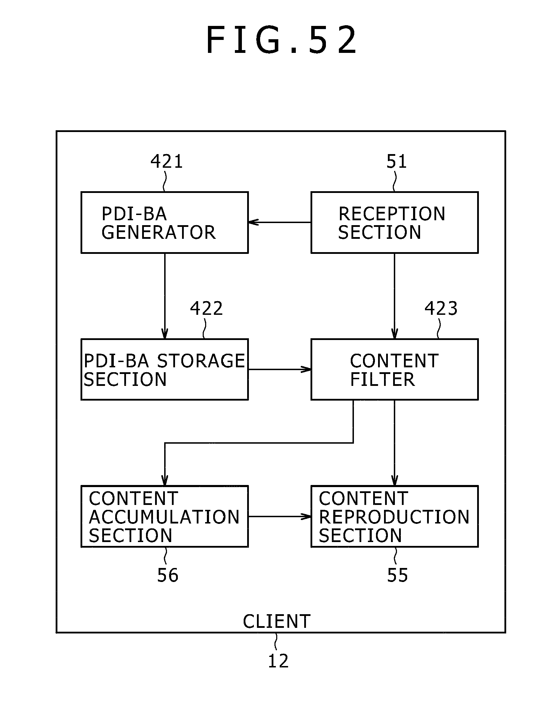

   FIG. 52 is a block diagram showing an example of a functional configuration of a client according to the third embodiment of the present invention.
[FIG. 53]

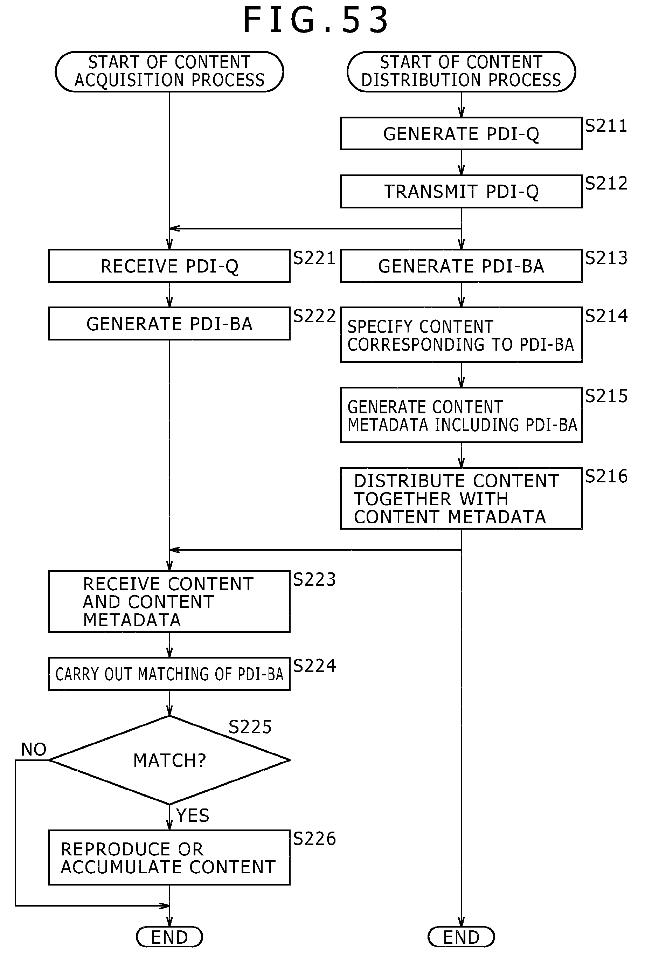

   FIG. 53 is a flow chart illustrating a transmission and reception process of content.
[FIG. 54]

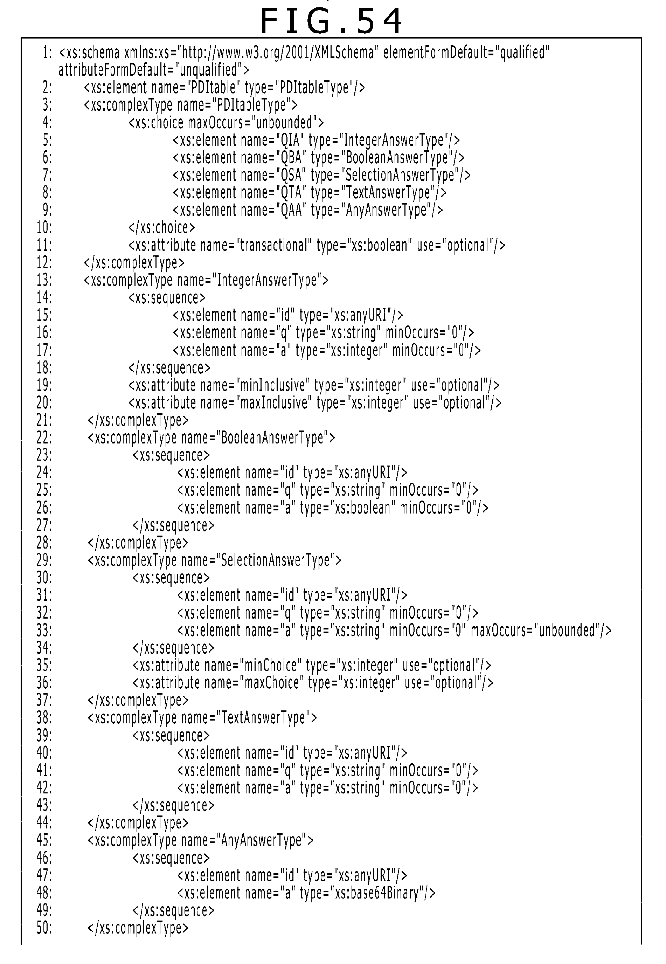

   FIG. 54 is a view illustrating a further example of syntax of an XML schema.
[FIG. 55]

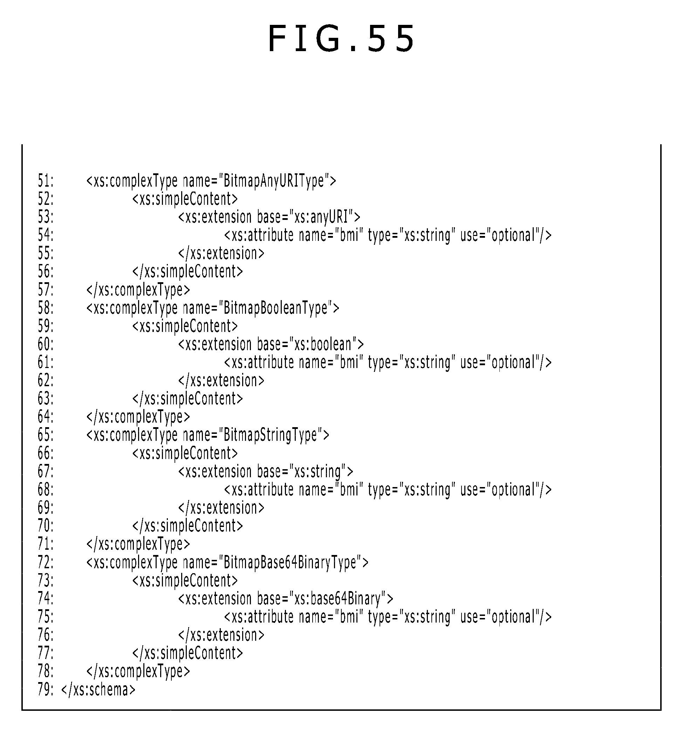

   FIG. 55 is a view illustrating a still further example of syntax of an XML schema.
[FIG. 56]

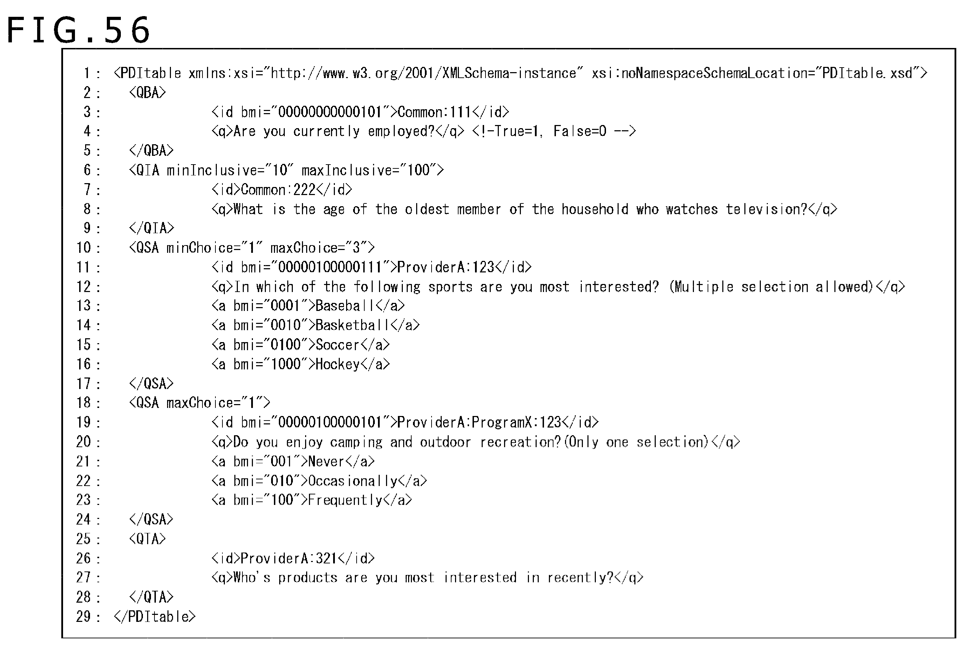

   FIG. 56 is a view illustrating an example of a PDI-Q.
[FIG. 57]

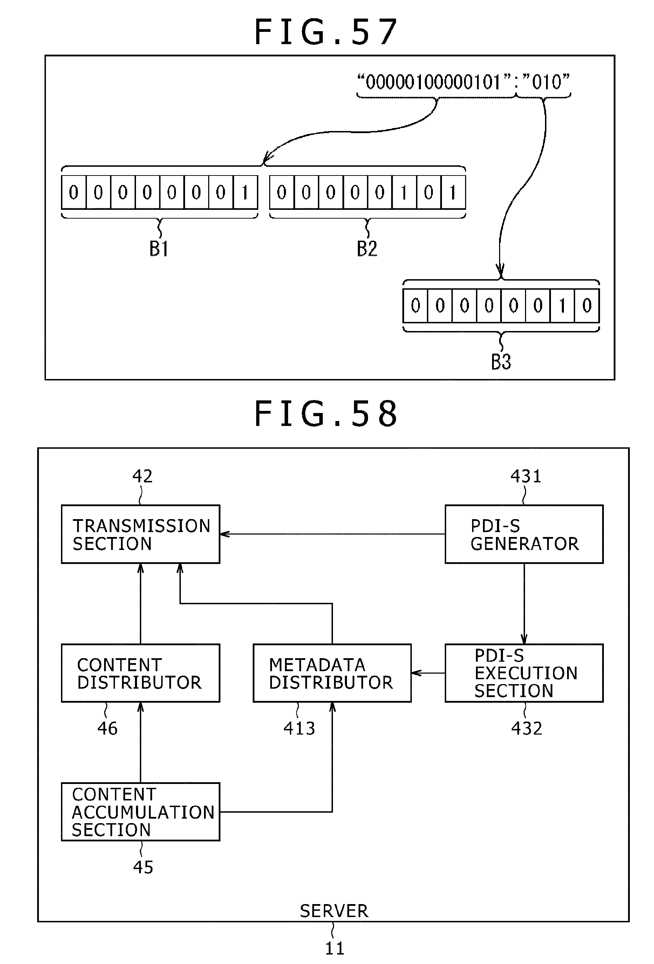

   FIG. 57 is a view illustrating an example of mapping of a PDI-BA.
[FIG. 58]
   FIG. 58 is a block diagram showing another example of a functional configuration of the server.
[FIG. 59]

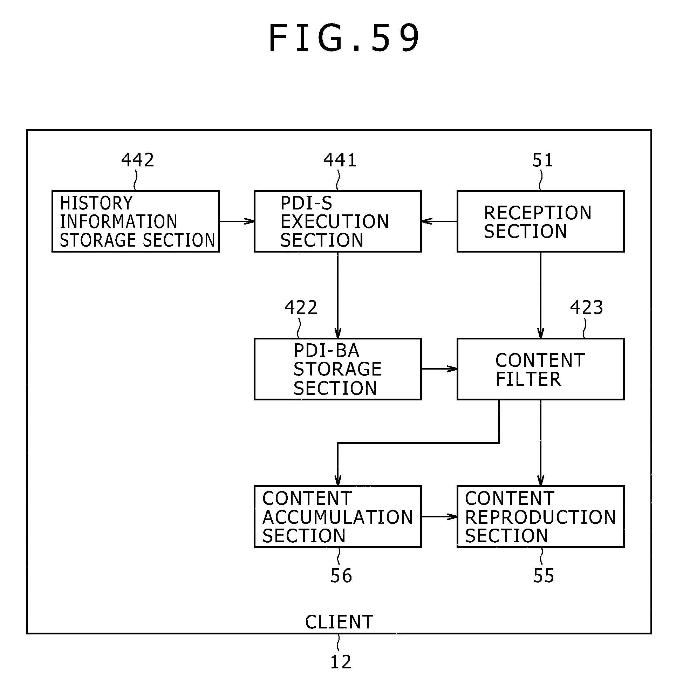

   FIG. 59 is a block diagram showing another example of a functional configuration of the client.
[FIG. 60]

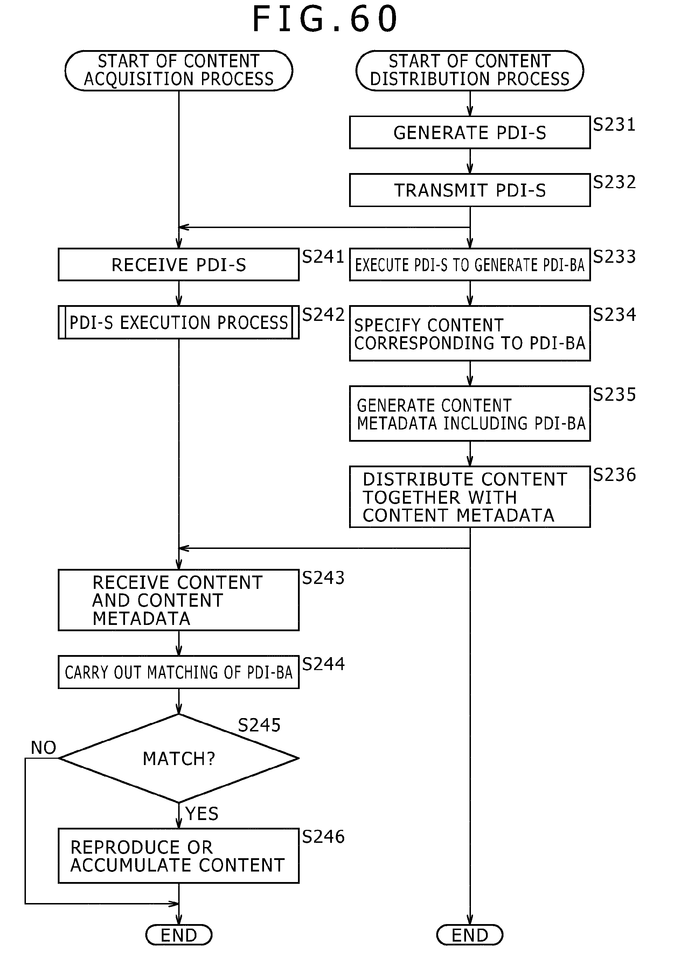

   FIG. 60 is a flow chart illustrating a transmission and reception process of content.
[FIG. 61]

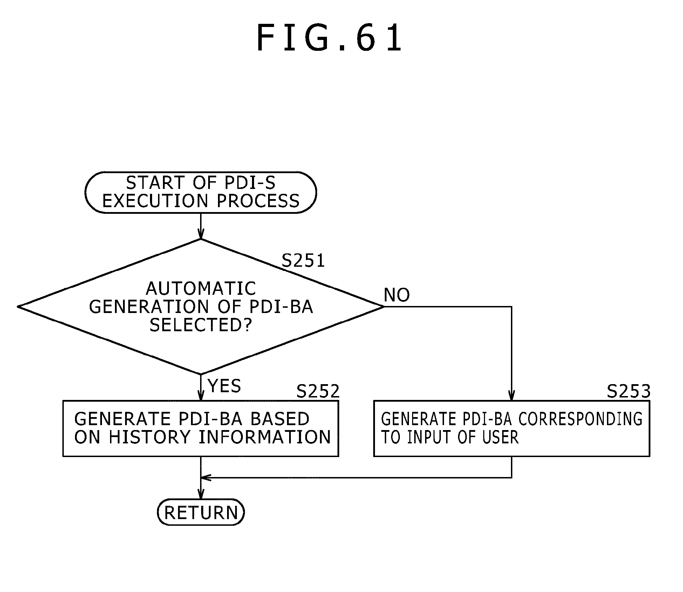

   FIG. 61 is a flow chart illustrating details of a PDI-S execution process.
[FIG. 62]

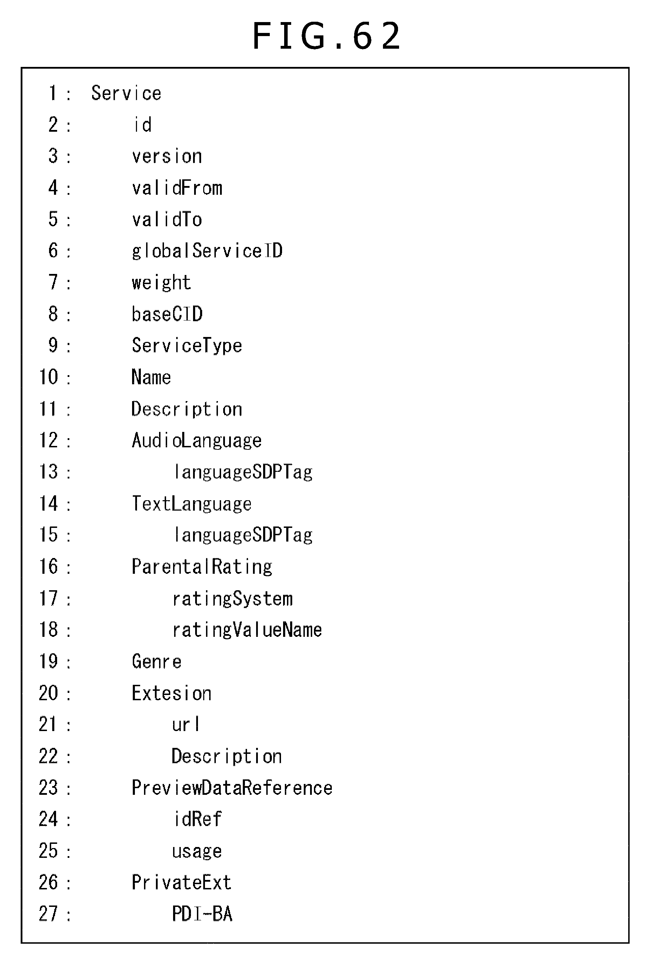

   FIG. 62 is a view illustrating a configuration of a Service fragment.
[FIG. 63]

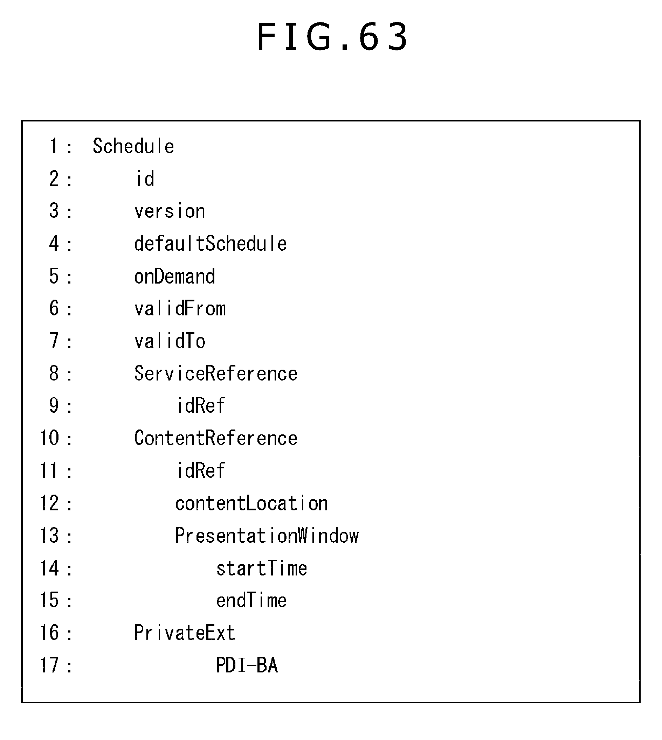

   FIG. 63 is a view illustrating a configuration of a Schedule fragment.
[FIG. 64]

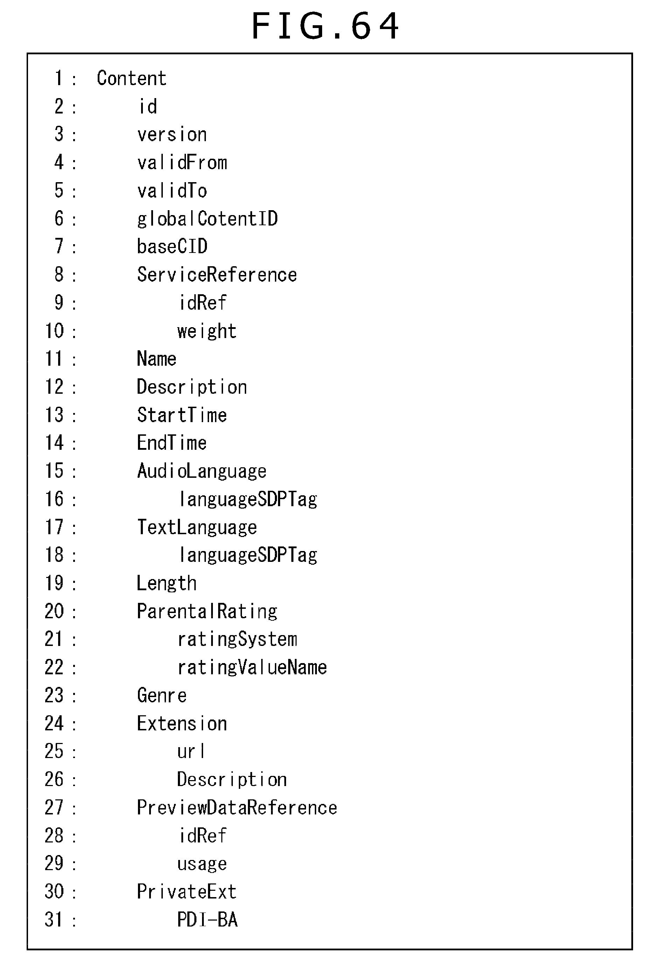

   FIG. 64 is a view illustrating a configuration of a Content fragment.
[FIG. 65]

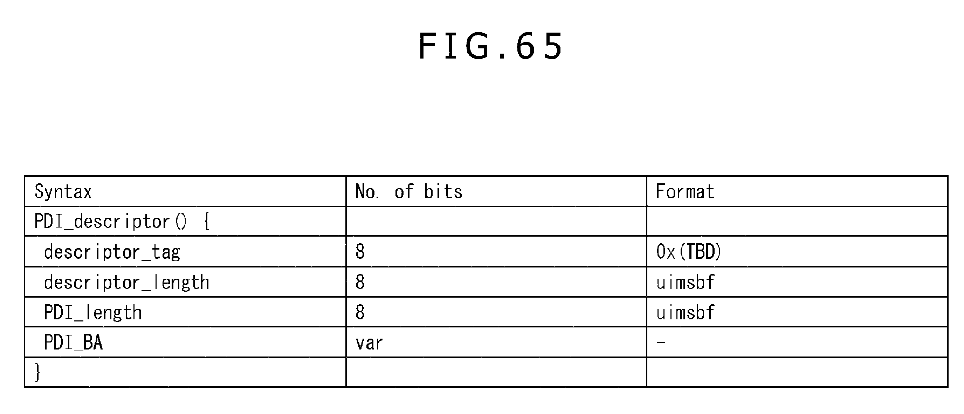

   FIG. 65 is a view showing an example of syntax of a PDI descriptor.

### [Description of Embodiments]

In the following, embodiments of the present invention are described with reference to the drawings. It is to be noted that the description is given in the following order:
1. First Embodiment
2. Second Embodiment
3. Third Embodiment

### <1. First Embodiment>

### [Example of Configuration of Broadcasting System]

FIG. 1 shows an example of a configuration of a broadcasting system according to an embodiment of the present invention.

A broadcasting system 10 of FIG. 1 is configured from a server 11 provided on the provider side which broadcasts (provides) a digital television program (hereinafter referred to suitably as content) such as a broadcasting organization and a client terminal (hereinafter referred to simply as client) 12 provided in a house of a user who views broadcast content. It is to be noted that, while it is assumed that the client 12 is provided in each of a plurality of user houses, the client 12 may be configured as a portable terminal apparatus such as a portable telephone set or a PDA (Personal Digital Assistant).

In the broadcasting system 10, the server 11 signals, together with content, content metadata about the content as a signal of a digital broadcasting wave to the client 12. The client 12 carries out filtering of the content based on the content metadata signaled thereto together with the content to reproduce or accumulate only content desired by the user. It is to be noted that the content metadata may not be signaled together with the content but may be signaled before the content is signaled.

### [Example of Hardware Configuration of Server]

FIG. 2 shows an example of a hardware configuration of the server 11. In FIG. 2, the server 11 is configured, for example, on the basis of a computer.

A CPU (Central Processing Unit) 12 executes various processes in accordance with a program stored in a ROM (Read Only Memory) 22 or a program loaded in a RAM (Random Access Memory) 23 from a storage section 28. In the RAM 23, data necessary for execution of the various processes by the CPU 21 and so forth are suitably stored.

The CPU 21, ROM 22 and RAM 23 are connected to each other through a bus 24. Also an input/output interface 25 is connected to the bus 24.

To the input/output interface 25, an inputting section 26 configured from a keyboard, a mouse and so forth, an outputting section 27 including a display unit configured from a CRT (Cathode Ray Tube), an LCD (Liquid Crystal Display) unit or the like and a speaker, the storage section 28 configured from a hard disk drive or the like and a communication section 29 configured from a modem, a terminal adapter or the like are connected. The communication section 29 communicates with an external apparatus through a network not shown. Further, a program may be acquired through the communication section 29 and stored into the storage section 28.

A drive 30 is connected to the input/output interface 25 as occasion demands and a removable medium 31 such as a magnetic disk, an optical disk, a magneto-optical disk or a semiconductor memory is suitably loaded into the input/output interface 25. Thus, a computer program read out from the removable medium 31 is installed into the storage section 28 as occasion demands.

It is to be noted that, though not shown, also hardware of the client 12 is configured similarly as shown in FIG. 2.

### [Example of Functional Configuration of Server]

Now, an example of a functional configuration of the server 11 is described with reference to FIG. 3.

The server 11 is configured from a PDI-Q generator 41, a transmission section 42, a PDI-A generator 43, a metadata distributor 44, a content accumulation section 45 and a content distributor 46.

The PDI-Q generator 41 generates a PDI-Q (Preference Demographic and Interest-Question) which is information representing a question about the tastes of the user (viewer) of the client 12. Further, the PDI-Q generator 41 transmits the generated PDI-Q to the client 12 through the transmission section 42 and supplies the generated PDI-Q to the PDI-A generator 43.

The transmission section 42 transmits various data supplied thereto from the PDI-Q generator 41, metadata distributor 44 and content distributor 46 to the client 12.

The PDI-A generator 43 generates, based on the PDI-Q from the PDI-Q generator 41, a PDI-A (Preference Demographic and Interest-Answer) which is information representing an answer set on the provider side to the question about the tastes of the user of the client 12 described above and corresponds to the PDI-Q. The PDI-A generator 43 supplies the generated PDI-A to the metadata distributor 44.

The metadata distributor 44 specifies (inquires about) content corresponding to the answer set on the provider side from within content accumulated in the content accumulation section 45 based on the PDI-A from the PDI-A generator 43. The metadata distributor 44 generates content metadata including the PDI-A as content metadata of the specified content and transmits the generated metadata to the client 12 through the transmission section 42.

The content accumulation section 45 accumulates various kinds of content to be distributed to the client 12 therein.

The content distributor 46 acquires content specified by the metadata distributor 44 from within the content accumulated in the content accumulation section 45 and transmits the acquired content to the client 12 through the transmission section 42.

### [Example of Functional Configuration of Client]

Now, an example of a functional configuration of the client 12 is described with reference to FIG. 4.

The client 12 is configured from a reception section 51, a PDI-A generator 52, a PDI-A storage section 53, a content filter 54, a content reproduction section 55 and a content accumulation section 56.

The reception section 51 receives various data transmitted thereto from the server 11 and supplies the received data to the PDI-A generator 52 or the content filter 54.

The PDI-A generator 52 generates, based on the PDI-Q transmitted thereto from the server 11, a PDI-A which represents an answer of the user to the question about the tastes of the user of the client 12 and corresponds to the PDI-Q, and supplies the generated PDI-A to the PID-A storage section 53.

The PDI-A storage section 53 stores the PDI-A from the PDI-A generator 52. The PDI-A stored in the PDI-A storage section 53 is suitably read out into the content filter 54.

The content filter 54 reads out the PDI-A from the PDI-A storage section 53 and carries out filtering of content based on the read out PDI-A and the PDI-A included in the content metadata of the content transmitted from the server 11. The content filter 54 supplies the filtered content to the content reproduction section 55 or the content accumulation section 56 in response to a result of the filtering.

The content reproduction section 55 reproduces content from the content filter 54. Further, the content reproduction section 55 acquires content from the content accumulation section 56 and reproduces the acquired content.

The content accumulation section 56 accumulates (records) the content from the content filter 54.

### [Example of Transmission and Reception Process of Content]

Now, a transmission and reception process of content in the broadcasting system 10 is described with reference to a flow chart of FIG. 5. In the transmission and reception process in the broadcasting system 10, a content distribution process is executed by the server 11 to distribute content, and a content acquisition process is executed by the client 12 to acquire the content.

On the provider side such as a broadcasting organization, when, for example, a sponsor of content to be broadcast (distributed) or the broadcasting organization itself requests distribution of content to a viewer having a particular taste or attribute, the PDI-Q generator 41 of the server 11 generates, at step S11, in response to an operation of the staff on the provider side, a PDI-Q for inquiring of a viewer, that is, of a user of the client 12, about what taste or attribute the user has.

### [Example of Syntax of XML Schema]

Here, an example of syntax of an XML (Extensible Markup Language) schema for configuring a PDI-Q and a PDI-A is described with reference to FIG. 6.

Referring to FIG. 6, the first row indicates a declaration or definition for the identification of the PDI-Q, and the second row indicates a declaration of a title and a type of all questions defined as the PDI-Q.

The 3rd to 12th rows indicate a declaration of a title and a type of each of the questions declared in the second row. In particular, the type "IntergerAnswerType" of the question defined by the name of "QIA" in the fifth row indicates that the question requests an answer of the integer type, and the type "BooleanAnswerType" of the question defined by the name of "QBA" in the sixth row indicates that the question requests an answer of the Boolean type. Further, the type "SelectionAnswerType" of the question defined by the name of "QSA" in the seventh row indicates that the question requests an answer of the answer selection type, and the type "TextAnswerType" of the question defined by the name of "QTA" in the eighth row indicates that the question requests an answer of the character string type. Further, the type "AnyAnswerType" of the question defined by the name of "QAA" in the ninth row indicates that the question does not restrict the type of the answer.

The 13th to 44th lines indicate a declaration of elements of the questions defined by the names of "QIA," "QBA," "QSA" and "QTA" from among the questions as declared in such a manner as described above. Particularly, the id elements indicated in the 15th, 24th, 31rd and 40th rows represent IDs (identifiers) for identifying the items of the questions and are defined as
"common: [category:]question-ID"
as a first format. In this first format, "common" represents that the question identified with the id element is defined commonly irrespective of a provider, and "category" represents a category of the question and "question-ID" represents an identifier of the question. It is to be noted that "category" may be represented in a hierarchical nest structure like
"common: [category 1:category2:category3:... ]question-ID"
as occasion demands.

Further, the id element is defined as
"providerName:[category:]question-ID"
as a second format. In this second format, "providerName" represents a name of a provider which sets the question identified by the id element. It is to be noted that "category" and "question-ID" are similar to those in the first format.

A question defined as a PDI-Q in this manner is distinguished by the id element between a question which does not depend upon a provider which provides content (which is common to providers) and a question defined uniquely to a provider which provides content.

In the following description, each of a question which does not depend upon a provider which provides content and an answer to the question is suitably referred to as provider-common filtering parameter. Meanwhile, each of a question defined uniquely to a provider which provides content and an answer to the question is suitably referred to as provider-unique filtering parameter.

Since a provider-common filtering parameter is defined commonly to providers without depending upon individual providers as described above, it is usually provided by a vendor (maker or the like) of the client 12. Accordingly, although it is possible for the PDI-Q generator 41 of the server 11 to be provided by the provider side, also it is possible for the PDI-Q generator 41 of the server 11 to be provided by a vendor of the client 12.

It is to be noted that the syntax which configures a PDI-Q and a PDI-A is not limited to the example illustrated in FIG. 6.

### [Example of PDI-Q]

Now, an example of a PDI-Q configured based on the syntax of FIG. 6 is described with reference to FIG. 7.

Referring to FIG. 7, the "transactional" in the first row indicates a value representative of whether or not, when questions (question group) defined by the PDI-Q are updated by the client 12 from which they have been transmitted, in the case where all of the substance of the items of the PDI-Q is not recorded/updated by some accident (interruption of processing by a disk writing error or an increase of the processing load or the like) during processing of recording/updating the substance of the items of the PDI-Q into a storage area not shown of the client 12, the recording/updating process is to be nullified (so-called rollback) going back to the state immediately before the substance of the items of the PDI-Q was recorded/updated. When the "transactional" is "true," the PDI-Q is rolled back.

The second to fifth rows define a question which asks for an answer of the Boolean type, and <id>Common: 111</id> in the third row represents an id element of the question, and <q>Are you currently employed?</q> in the fourth row represents the question itself.

The sixth to ninth rows define a question which asks for an answer of the integer type, and <id>Common:222</id> in the seventh row represents an id element of the question and <q>What is the age of the oldest member of the household who watches television?</q> in the eighth row represents the question itself. It is to be noted that the minInclusive="10" maxInclusive="100" in the sixth row represents that an answer to the question is restricted to an integral value equal to or higher than 10 but equal to or lower than 100.

The 10th to 17th rows define a question which asks for an answer of the answer selection type, and <id>ProviderA:123</id> in the 11th row represents an id element of the question, and <q>In which of the following sports are you most interested? (Multiple selection allowed)</q> in the 12th row represents the question itself. <a>Baseball</a> in the 13th row, <a>Basketball</a> in the 14th row, <a>Soccer</a> in the 15th row and <a>Hockey</a> in the 16th row represents choices for an answer to the question. It is to be noted that the minChoice="1" maxChoice="3" in the tenth row represents that the number of answers to the question is restricted to one or more but three or less.

The 18th to 24th rows define a question which asks for an answer of the answer selection type, and <id>ProviderA:ProgramX:123</id> in the 19th row represents an id element of the question. Further, <q>Do you enjoy camping and outdoor recreation? (Only one selection)</q> in the 20th row represents the question itself. <a>Never</a> in the 21st row, <a>Occasional</a> in the 22nd row and <a>Frequently</a> in the 23rd row represent choices for an answer to the question. It is to be noted that the maxChoice="1" in the 18th row represents that the number of answers to the question is restricted to one.

In this manner, in the PDI-Q, proposed answers to the question and also a restriction condition to the answer are defined depending upon the type of the question.

The 25th to 28th rows define a question which asks for an answer of the character string type, and <id>ProviderA:321</id> in the 26th row represents an id element of the question and <q>Who's products are you most interested in recently?</q> in the 27th row represents the question itself.

In the following description, each of questions defined by the PDI-Q in FIG. 7 is referred to as question of the id element. In particular, the question defined by the second to fifth rows is referred to as question of "Common: 111"; the question defined by the sixth to ninth rows is referred to as question of "Common:222"; the question defined by the 10th to 17th rows is referred to as question of "ProviderA:123"; the question defined by the 18th to 24th rows is referred to as question of "ProviderA:ProgramX:123"; and the question defined by the 25th to 28th rows is referred to as question of "ProviderA:321."

At this time, the question of "Common:111" and the question of "Common:222" are identified to provider-common filtering parameters, and the question of "ProviderA:123," the question of the "ProviderA:ProgramX:123" and the question of "ProviderA:321" are identified into provider-unique filtering parameters. For example, the question of "Common:111" indicates that the question is set commonly to the providers and has the identifier of "111." Meanwhile, the question of "ProviderA:ProgramX:123" indicates that the question is set by a provider of "ProviderA" and has the category (program ID) of "ProgramX" and the identifier of"123."

Referring back to the flow chart of FIG. 5, at step S12, the PDI-Q generator 41 of the server 11 transmits the generated PDI-Q to the client 12 through the transmission section 42 and supplies the generated PDI-Q to the PDI-A generator 43.

At step S21, the reception section 51 of the client 12 receives the PDI-Q transmitted thereto from the server 11 and supplies the received PDI-Q to the PDI-A generator 52.

It is to be noted that the PDI-Q is received by the client 12, for example, every time it is broadcast (transmitted) at predetermined time intervals from a broadcasting station as a provider in which the server 11 is provided. Or, the PDI-Q may be received by the client 12 when the channel of the client 12 is adjusted to a channel of the broadcasting station in which the server 11 is provided.

At step S22, the PDI-A generator 52 of the client 12 generates a PDI-A to a question defined in the PDI-Q received by the reception section 51. In particular, when the PDI-Q from the server 11 is received, then the PDI-A generator 52 causes a display section not shown to display a screen image corresponding to a question defined in the PDI-Q and causes a user (viewer) of the client 12 to input or select an answer to the question to generate a PDI-A representative of the answer. In other words, the PDI-A generator 52 interacts with the user to generate a PDI-A representative of an answer to a question defined in the PDI-Q.

### [Example of Screen Display in Interaction with User by PDI-A Generator]

Here, examples of the screen display in an interaction with a user by the PDI-A generator 52 is described with reference to FIGS. 8 to 12. It is to be noted that it is assumed here that the client 12 receives the PDI-Q described hereinabove with reference to FIG. 7 and screen images corresponding to the question group defined in the received PDI-Q are successively displayed on the display section not shown of the client 12.

FIG. 8 shows a screen display example corresponding to the question of "Common:111" from among the questions defined in the PDI-Q described hereinabove with reference to FIG. 7. In FIG. 8, the question "Are you currently employed?" indicated in the fourth row of FIG. 7 is displayed in a question presentation field 61. Further, a message "Please select one of choices" for urging the user to input an answer to the question and a selection button 62-1 for allowing the user to select "Yes" as an answer to the question and another selection button 62-2 for allowing the user to select "No" as an answer to the question are displayed.

FIG. 9 shows a screen display example corresponding to the question of "Common:222" from among the questions defined in the PDI-Q described hereinabove with reference to FIG. 7. In FIG. 9, the question "What is the age of the oldest member of the household who watches television?" indicated in the eighth row of FIG. 7 is displayed in a question presentation field 71. Further, a message "Please input your age." for urging the user to input an answer to the question and an answer inputting field 72 for allowing the user to input an integer value as an answer to the question are displayed.

FIG. 10 shows a screen display example corresponding to the question of "ProviderA:123" from among the questions defined in the PDI-Q described hereinabove with reference to FIG. 7. In FIG. 10, the question "In which of the following sports are you most interested? (Multiple selection allowed)" indicated in the 12th row of FIG. 7 is displayed in a question presentation field 81. Further, a message "Please select one or more but three or less of next choices." for urging the user to input an answer to the question and selection buttons 82-1 to 82-4 for allowing the user to select choices "Baseball," "Basketball," "Soccer" and "Hockey" as an answer to the question are displayed.

FIG. 11 shows a screen display example corresponding to the question of "ProviderA:ProgramX:123" from among the questions defined in the PDI-Q described hereinabove with reference to FIG. 7. In FIG. 11, the question "Do you enjoy camping and outdoor recreation? (Only one selection)" indicated in the 20th row of FIG. 7 is displayed in a question presentation field 91. Further, a message "Please select only one of next choices." for urging the user to input an answer to the question and selection buttons 92-1 to 92-3 for allowing the user to select choices "Never," "Occasionally" and "Frequently" as an answer to the question are displayed.

FIG. 12 shows a screen display example corresponding to the question of "ProviderA:321" from among the questions defined in the PDI-Q described hereinabove with reference to FIG. 7. In FIG. 12, the question "Who's products are you most interested in recently?" indicated in the 27th row of FIG. 7 is displayed in a question presentation field 101. Further, a message "Please describe freely." for urging the user to input an answer to the question and an answer inputting field 102 for allowing the user to input a character string as an answer to the question are displayed.

The PDI-A generator 52 allows the user to input or select an answer to the questions defined in the PDI-Q through the screen displays described above with reference to FIGS. 8 to 12 in this manner to generate a PDI-A corresponding to the PDI-Q.

It is to be noted that the screen displays described above with reference to FIGS. 8 to 12 may be displayed shortly after the PDI-Q is received or, after reception of the PDI-Q, the PDI-Q may be retained into the storage section not shown such that they are displayed when an instruction to display a setting screen is issued by the user or in a like case.

### [Example of PDI-A]

Here, an example of a PDI-A generated by the PDI-A generator 52 is described with reference to FIG. 13. The PDI-A shown in FIG. 13 is generated based on selection or inputting of an answer by a user on the screen displays shown in FIGS. 8 and 12.

In particular, the second to fifth rows indicate an answer of a user to the question presented by the screen display described hereinabove with reference to FIG. 8. In particular, <id>Common:111 </id> indicates an id element of the question presented by the screen display of FIG. 8, and <a>true</a> in the fourth row indicates that, as an answer to the question, the selection button 62-1 (answer of "Yes") is selected on the screen display of FIG. 8 by the user.

The sixth to ninth rows indicate an answer of the user to the question presented by the screen display described hereinabove with reference to FIG. 9. In particular, <id>Common:222</id> in the seventh row indicates an id element of the question presented by the screen display of FIG. 9, and <a>34</a> in the eighth row indicates that, as an answer to the question, "34" is inputted as an integer value to the answer inputting field 72 on the screen display of FIG. 9 by the user.

The 10th to 15th rows indicate an answer of the user to the question presented by the screen display described hereinabove with reference to FIG. 10. In particular, <id>ProviderA:123</id> in the 11th row indicates an id element of the question presented by the screen display of FIG. 10, and <a>Baseball</a> in the 12th row, <a>Soccer</a> in the 13th row and <a>Hockey</a> in the 14th row indicate that, as an answer to the question, the selection buttons 82-1, 82-3 and 82-4 are selected on the display screen of FIG. 10 by the user.

The 16th to 19th rows indicate an answer of the user to the question presented by the screen display described hereinabove with reference to FIG. 11. In particular, <id>ProviderA:ProgramX:123</yid> in the 17th row indicates an id element of the question presented by the screen display of FIG. 11, and <a>Occasionally</a> in the 18th row indicates that, as an answer to the question, the selection button 92-2 is selected on the screen display of FIG. 11 by the user.

The 20th to 23rd rows indicate an answer of the user to the question presented by the screen display described hereinabove with reference to FIG. 12. In particular, <id>ProviderA:321</id> in the 21st row indicates an id element of the question presented by the screen display of FIG. 12, and <a>Somy</a> in the 22nd row indicates that, as an answer to the question, "Somy" is inputted as a character string to the answer inputting field 102 on the screen display of FIG. 12 by the user.

The PDI-A generator 52 supplies the PDI-A generated in this manner to the PDI-A storage section 53 so as to be stored. The PDI-A stored in the PDI-A storage section 53 is used when it is decided whether or not content distributed from the server 11 matches the tastes of the user of the client 12 as hereinafter described.

Referring back to the flow chart of FIG. 5, at step S 13, the PDI-A generator 43 of the server 11 generates a PDI-A to the question defined in the PDI-Q from the PDI-Q generator 41 and supplies the PDI-Q to the metadata distributor 44. In particular, when a PDI-Q is generated by an operation of the staff of the broadcasting station (provider side), the PDI-A generator 43 causes the display section not shown to display, for example, such a screen image corresponding to the question defined in the PDI-Q as described hereinabove with reference to FIGS. 8 to 12 and then causes the staff of the broadcasting station to input or select an answer to the question to generate a PDI-A representative of the answer. At this time, the staff of the broadcasting station would input or select an answer corresponding to content to be distributed as an answer to the question defined in the PDI-Q. In other words, the PDI-A generated by the PDI-A generator 43 represents information (answer) for causing the provider side to allow the viewer to view the content to be distributed later taking the tastes of the user (viewer) of the client 12 into consideration.

At step S 14, the metadata distributor 44 specifies (inquires about), based on the PDI-A from the PDI-A generator 43, content corresponding to the PDI-A from among content accumulated in the content accumulation section 45. The content specified here may be that content with regard to which the content metadata has a higher degree of similarity to the PDI-A from the PDI-A generator 43 than a predetermined value from within the accumulated content to which the content metadata are applied in advance or may be that content selected in advance as content to be viewed by the user by the staff of the broadcasting station. It is to be noted that the content specified by the metadata distributor 44 is acquired from the content accumulation section 45 by the content distributor 46.

At step S 15, the metadata distributor 44 newly generates content metadata which includes the PDI-A based on the content metadata applied in advance to the content specified at step S15 and the PDI-A from the PDI-A generator 43.

At step S16, the transmission section 42 distributes the content acquired by the content distributor 46 together with the content metadata generated by the metadata distributor 44. At this time, as the content metadata, content metadata prescribed by a standardization organization may be transmitted in addition to the content metadata generated by the metadata distributor 44.

In this manner, as an answer to the question defined in the PDI-Q, content whose content metadata includes a PDI-A representative of an answer intended by the provider side, in other words, content which matches the tastes of the user and of which the provider side expects viewing by the user is distributed.

It is to be noted that the processes at steps S13 to S16 need not be executed immediately after the process at step S12 but may be executed before the client 12 owned by each user generates and stores a PDI-A.

Further, while it is described that, at step S16, the content is distributed together with the content metadata, the content may not be distributed together with the content metadata, but after the content metadata including the PDI-A is transmitted in advance, the content corresponding to the content metadata may be transmitted.

When the content and the content metadata are distributed from the server 11 in this manner, at step S23, the reception section 51 of the client 12 receives the content and the content metadata distributed thereto from the server 11 and supplies them to the content filter 54.

At step S24, the content filter 54 carries out matching between the PDI-A stored in the PDI-A storage section 53 and the PDI-A included in the content metadata from the server 11. It is to be noted that, in the following description, in order to distinguish the PDI-A stored in the PDI-A storage section 53 and the PDI-A included in the content metadata from the server 11 from each other, the former is referred to as user side PDI-A and the latter is referred to as provider side PDI-A.

### [Example of Matching Process by Content Filter]

Here, it is assumed that, as the user side PDI-A, the PDI-A described hereinabove with reference to FIG. 13 is generated and stored and, as the provider side PDI-A, the PDI-A illustrated in FIG. 14 has been transmitted from the server 11.

The provider side PDI-A illustrated in FIG. 14 has a basic configuration same as that of the user side PDI-A illustrated in FIG. 13. Although detailed description of the same is omitted herein, the provider side PDI-A indicates that "false" is selected as an answer to the question of "Common:111"; "Baseball" is selected as an answer to the question of "ProviderA:123"; and "Never" is selected as an answer to the question of the "ProviderA:ProgramX:123."

At this time, the content filter 54 compares the user side PDI-A and the provider side PDI-A with each other, and if at least one of the answers to the questions indicates coincidence, then it is decided that the user side PDI-A and the provider side PDI-A match each other. However, if none of the answers to the questions indicates coincidence, then it is decided that the user side PDI-A and the provider side PDI-A do not match each other. In this instance, since the answer to the question of "ProviderA:123" in the user side PDI-A illustrated in FIG. 13 and the answer to the question of "providerA:123" in the provider side PDI-A illustrated in FIG. 14 coincide with each other in that both of them include "Baseball," it is decided that the user side PDI-A and the provider side PDI-A match each other.

Then, it is assumed that a PDI-A illustrated in FIG. 15 is transmitted as the provider side PDI-A from the server 11.

The provider side PDI-A illustrated in FIG. 15 indicates that "Basketball" is selected as an answer to the question of "ProviderA:123" and "Never" is selected as an answer to the question of "ProviderA:ProgramX:123."

In this instance, since none of the answers to the questions in the user side PDI-A illustrated in FIG. 13 and the answers to the questions in the provider side PDI-A illustrated in FIG. 15 coincide with each other, it is decided that the user side PDI-A and the provider side PDI-A do not match each other.

The content filter 54 carries out a matching process between the user side PDI-A and the provider side PDI-A in this manner.

At step S25, the content filter 54 decides whether or not the user side PDI-A and the provider side PDI-A match each other. If it is decided at step S25 that the user side PDI-A and the provider side PDI-A match each other, then the content filter 54 decides that the content distributed from the server 11 matches the tastes of the user (viewer) of the client 12 and supplies the content to the content reproduction section 55 or the content accumulation section 56. Then, the processing advances to step S26.

If the content distributed from the server 11 is supplied from the content filter 54 to the content reproduction section 55, then the content reproduction section 55 reproduces the content at step S26. Further, if the content distributed from the server 11 is supplied from the content filter 54 to the content accumulation section 56, then the content accumulation section 56 accumulates (records) the content at step S26. The accumulated content is suitably supplied to and reproduced by the content reproduction section 55 in response to an operation instruction of the user.

On the other hand, if it is decided at step S25 that the user side PDI-A and the provider side PDI-A do not match each other, then the content filter 54 decides that the content distributed from the server 11 does not match the tastes of the user (viewer) of the client 12, and discards (deletes) the content, thereby ending the processing.

According to the process described above, in a broadcasting system, on the provider side, a PDI-Q representative of a question regarding the tastes of a user is generated by a server, and the PDI-Q is transmitted to a client terminal. In response to the PDI-Q, a provider side PDI-A representative of an answer set by the provider side is distributed as content metadata of corresponding content. Consequently, as the content metadata, content metadata which meets the needs at the time other than content metadata prescribed by a standardization organization can be applied to content. On the other hand, on the user side, a user side PDI-A representative of an answer of the user to the PDI-Q from the server is generated by the client apparatus, and matching between the generated user side PDI-A and the provider side PDI-A from the server is carried out to determine whether or not the content distributed from the server is to be acquired. Consequently, content can be filtered with content metadata which meets the needs at the time other than content metadata prescribed by a standardization organization. Accordingly, content which meets the needs at the time can be acquired.

It is to be noted that, in the foregoing description, the client 12 carries out matching of PDI-As on the real time basis upon distribution of content from the server 11. However, all content may be accumulated upon distribution of content from the server 11 such that matching of PDI-As is carried out on the background of processing and content corresponding to a PDI-A (provider side PDI-A) which exhibits matching from within the accumulated content is reproduced or content which corresponds to a PDI-A which does not exhibit matching is deleted.

Further, in the foregoing description, the content filter 54 compares the user side PDI-A and the provider side PDI-A represented as instances with each other and carries out matching between the user side PDI-A and the provider side PDI-A depending upon whether or not at least one of the answers to the questions exhibits matching. However, one of the user side PDI-A and the provider side PDI-A is represented as a query which evaluates the PDI-A to compare the user side PDI-A and the provider side PDI-A.

In the following, a configuration wherein one of the user side PDI-A and the provider side PDI-A is represented as a query to compare the user side PDI-A and the provider side PDI-A with each other is described.

### [Example 1 of Matching Process by Query Wherein PDI-A Is Evaluated]

First, a configuration wherein the provider side PDI-A is represented as a query to compare the user side PDI-A and the provider side PDI-A with each other is described.

FIG. 16 shows an example of a functional configuration of the server 11 wherein the provider side PDI-A is represented as a query.

The server 11 of FIG. 16 is configured from a PDI-Q generator 41, a transmission section 42, a content accumulation section 45, a content distributor 46, a PDI-A query generator 111 and a metadata distributor 112.

It is to be noted that components of the server 11 of FIG. 16 which have functions similar to those provided in the server 11 of FIG. 3 are denoted by like names and like reference characters, and description of them is suitably omitted herein.

In particular, the server 11 of FIG. 16 is different from the server 11 of FIG. 3 in that it includes the PDI-A query generator 111 and the metadata distributor 112 in place of the PDI-A generator 43 and the metadata distributor 44.

The PDI-A query generator 111 generates, based on a PDI-Q from the PDI-Q generator 41, a PDI-A (provider side PDI-A) corresponding to the PDI-Q, generates a PDI-A query in which the generated provider side PDI-A is applied to a predetermined conditional statement, and supplies the PDI-A query to the metadata distributor 112.

The metadata distributor 112 specifies (inquires about) content corresponding to the PDI-A query from within the content accumulated in the content accumulation section 45 based on the PDI-A query from the PDI-A query generator 111. The metadata distributor 112 generates, as content metadata of the specified content, content metadata which includes the PDI-A query, and transmits the generated content metadata to the client 12 through the transmission section 42.

Further, the client 12 in this example is same as the client 12 of FIG. 4 except that the content filter 54 of FIG. 4 reads out a PDI-A (user side PDI-A) from the PDI-A storage section 53 and filters content based on the read out user side PDI-A and a PDI-A query included in content metadata transmitted thereto from the server 11. Therefore, description of the client 12 in the present example is omitted herein.

Now, a content transmission and reception process of the broadcasting system 10 which includes the server 11 of FIG. 16 is described with reference to a flow chart of FIG. 17.

It is to be noted that processes at steps S31, S32, S36, S41 to S43, S45 and S46 of the flow chart of FIG. 17 are basically similar to the processes at steps S11, S12, S16, S21 to S23, S25 and S26 of the flow chart of FIG. 5, respectively, and therefore, description of them is omitted herein.

In particular, at step S33, the PDI-A query generator 111 of the server 11 generates a provider side PDI-A to a question defined in a PDI-Q from the PDI-Q generator 41, generates a PDI-A query in which the generated provider side PDI-A is applied to a predetermined conditional expression, and supplies the PDI-A query to the metadata distributor 112. More particularly, for example, if a PDI-Q is generated by operation of the staff of the broadcasting station (provider side), then the PDI-A query generator 111 causes the display section not shown to display, for example, such a screen image corresponding to a question defined in the PDI-Q as described hereinabove with reference to any of FIGS. 8 to 12. Then, the PDI-A query generator 111 causes the staff of the broadcasting station to input or select an answer to the question. Further, the PDI-A query generator 111 causes the staff to determine a combination (filtering condition) of such answers to generate a PDI-A query representative of the combination of the answers. At this time, the staff of the broadcasting station would input or select an answer corresponding to content to be distributed and then determine a combination of such answers as an answer to the questions defined in the PDI-Q. In particular, the PDI-A query generated by the PDI-A query generator 111 represents information (combination of answers) for allowing a user (viewer) of the client 12 to view content to be distributed later taking the tastes of the viewer into consideration on the provider side.

At step S34, the metadata distributor 112 specifies (inquires about), based on the PDI-A query from the PDI-A query generator 111, content corresponding to the PDI-A query from within the content accumulated in the content accumulation section 45. The content specified here may be that content with regard to which the content metadata has a higher degree of similarity to the PDI-A query from the PDI-A query generator 111 than a predetermined value from within the accumulated content to which the content metadata are applied in advance or may be that content selected in advance as content to be viewed by the user by the staff of the broadcasting station. It is to be noted that the content specified by the metadata distributor 112 is acquired from the content accumulation section 45 by the content distributor 46.

At step S35, the metadata distributor 112 newly generates, based on content metadata applied in advance to the content specified at step S34 and the PDI-A query from the PDI-A query generator 111, content metadata including the PDI-A query.

Then at step S44, the content filter 54 of the client 12 carries out, based on the PDI-A included in the content metadata from the server 11, matching of the PDI-A stored in the PDI-A storage section 53.

Here, it is assumed that the PDI-A described hereinabove with reference to FIG. 13 has been generated and stored as the user side PDI-A and a PDI-A query given below has been transmitted from the server 11.
"//QBA[id='Common:111' and a='true'] and //QSA[id='ProviderA:123' and a='Baseball']"

The PDI-A query given above indicates that the user side PDI-A evaluates whether or not "true" is selected as an answer to the question of "Common:111" and "Baseball" is selected as an answer to the question of "ProviderA:123."

At this time, the content filter 54 evaluates the user side PDI-A based on the PDI-A query, and if the user side PDI-A satisfies (is true to) the PDI-A query, then the content filter 54 decides that the user side PDI-A and the PDI-A query match each other. However, if the user side PDI-A does not satisfy (is false to) the PDI-A query, the content filter 54 decides that the user side PDI-A and the PDI-A query do not match each other.
In this instance, in the user side PDI-A illustrated in FIG. 13, since "true" is selected as an answer to the question of "Common:111" and "Baseball" is selected as an answer to the question of "providerA:123," the user side PDI-A and the PDI-A query are decided to match each other.

Since a more complicated filtering condition is represented by a PDI-A query set by the provider side in this manner, it is possible to allow a user (viewer) to acquire content expected by the provider side with a higher degree of certainty.

### [Example 2 of Matching Process by Query Wherein PDI-A Is Evaluated]

Now, a configuration wherein a user side PDI-A is represented as a query and the user side PDI-A and a provider side PDI-A are compared with each other is described.

FIG. 18 shows an example of a functional configuration of the client 12 wherein a user side PDI-A is represented as a query.

The client 12 of FIG. 18 is configured from a reception section 51, a content filter 54, a content reproduction section 55, a content accumulation section 56, a PDI-A query generator 131 and a PDI-A query storage section 132.

It is to be noted that, in the client 12 of FIG. 18, components having functions similar to those provided in the client 12 of FIG. 4 are denoted by like names and like reference characters, and description of them is suitably omitted herein.

In particular, the client 12 of FIG. 18 is different from the client 12 of FIG. 4 in that it includes the PDI-A query generator 131 and the PDI-A query storage section 132 in place of the PDI-A generator 52 and the PDI-A storage section 53.

The PDI-A query generator 131 generates, based on a PDI-Q transmitted thereto from the server 11, a PDI-A (user side PDI-A) which corresponds to the PDI-Q and represents an answer of a user of the client 12 to a question about the tastes of the user. Then, the PDI-A query generator 131 generates a PDI-A query in which the generated user side PDI-A is applied to a predetermined conditional expression and supplies the generated PDI-A query to the PDI-A query storage section 132.

The PDI-A query storage section 132 stores the PDI-A query from the PDI-A query generator 131. The PDI-A query stored in the PDI-A query storage section 132 is read out to the content filter 54.

It is to be noted that the content filter 54 of FIG. 18 reads out the PDI-A query from the PDI-A storage section 53 and filters content based on the PDI-A query and a provider side PDI-A included in content metadata transmitted from the server 11.

Further, the server 11 in the present example is same as the server 11 of FIG. 3, and therefore, description of the same is omitted herein.

Now, a content transmission and reception process in the broadcasting system 10 which includes the client 12 of FIG. 18 is described with reference to a flow chart of FIG. 19.

It is to be noted that processes at steps S51 to S61, S63, S65 and S66 of the flow chart of FIG. 19 are basically similar to the processes at steps S11 to S21, S23, S25 and S26 of the flow chart of FIG. 5, and therefore, description of them is omitted herein.

In particular, at step S62, the PDI-A query generator 131 of the client 12 generates a user side PDI-A to a question defined in a PDI-Q received by the reception section 51 and then generates a PDI-A query in which the generated user side PDI-A is applied to a predetermined conditional expression. In particular, when a PDI-Q is received from a broadcasting station, for example, the PDI-A query generator 131 causes the display section not shown to display such a screen image corresponding to a question defined in the PDI-Q as described hereinabove with reference to any of FIGS. 8 to 12. Then, the PDI-A query generator 131 causes the user (viewer) of the client 12 to input or select an answer to the question and causes the user to determine a combination of such answers (filtering condition) to generate a PDI-A query representative of the combination of the answers. In other words, the PDI-A query generator 131 interacts with the user to generate a PDI-A query representative of a combination of answers to the questions defined in the PDI-Q.

Then at step S64, the content filter 54 carries out, based on the PDI-A query stored in the PDI-A query storage section 132, matching of the provider side PDI-A included in content metadata from the server 11.

Here, it is assumed that, as the provider side PDI-A, the PDI-A described hereinabove with reference to FIG. 14 has been transmitted from the server 11, and a PDI-A query given below has been generated and stored.
"//QBA[id='Common:111' and a='false'] and //QSA[id='ProviderA:123' and a='Baseball']"

The PDI-A query described above indicates that the provider side PDI-A evaluates whether or not "false" is selected as an answer to the question of "Common:111" and besides "Baseball" is selected as an answer to the question of "ProviderA:123."

At this time, the content filter 54 evaluates the provider side PDI-A based on the PDI-A query, and if the provider side PDI-A satisfies (is true to) the PDI-A query, then the content filter 54 decides that the provider side PDI-A and the PDI-A query match each other. However, if the provider side PDI-A does not satisfy (is false to) the PDI-A query, then the content filter 54 decides that the provider side PDI-A and the PDI-A query do not match each other. In this instance, in the provider side PDI-A illustrated in FIG. 14, since "false" is selected as an answer to the question of "Common:111" and "Baseball" is selected as an answer to the question of "providerA:123," the user side PDI-A and the PDI-A query are decided to match each other.

Since a more complicated filtering condition is represented by a PDI-A query set by the user side in this manner, it is possible to allow a user to acquire content expected by the user side with a higher degree of certainty.

Incidentally, while the present invention can be applied to a broadcasting system which broadcasts a digital television program, as an example, the present invention can be applied to a broadcasting system which broadcasts in accordance with the ATSC-M/H (Mobile/Handheld) system which is an expanded form of the ATSC (Advanced Television Standard Committee) system to mobile reception.

### [Example of Adaptation to Broadcasting System Which Broadcasts in Accordance with ATSC-M/H System]

FIG. 20 is a view showing an example of a configuration of a broadcasting system which broadcasts a digital television program in accordance with the conventional ATSC system and the ATSC-M/H system and to which the present invention is applied.

The broadcasting system of FIG. 20 corresponds to the server 11 in the broadcasting system 10 of FIG. 1 and includes an ATSC Legacy System 151, an ATSC M/H System 152, an M/H Framing 153 and an RF/Transmission System 154.

The ATSC Legacy System 151 signals a broadcasting stream in the form of an MPEG2-TS (Moving Picture Experts Group 2 Transport Stream) in accordance with the conventional ATSC system. The ATSC M/H System 152 signals a broadcasting stream of IP packets in accordance with the ATSC-M/H system. Control Data 152a of the ATSC M/H System 152 are control information relating to a broadcasting stream (A/V (Audio/Video) content) signaled from the ATSC M/H System 152.

Such broadcasting streams as described above are multiplexed by the W/H Framing 153 and transmitted as a broadcasting wave by the RF/Transmission System 154. It is to be noted that, since details of the functions of the blocks are described in the specification of the ATSC, description of the same is omitted herein.

FIG. 21 illustrates a protocol stack in a signal of a broadcasting wave transmitted in accordance with the ATSC-M/H system.

Although detailed description is omitted herein, one of uppermost layers is set as "Service Guide" and prescribes metadata of content provided in accordance with the ATSC-M/H system. The Control Data 152a shown in FIG. 20 are transmitted as content metadata defined by the "Service Guide" (such metadata is hereinafter referred to merely as Service Guide). In particular, in the broadcasting system of FIG. 20, a PDI-A (provider side PDI-A), a PDI-A query and a PDI-Q transmitted from the server 11 to the client 12 in the broadcasting system 10 described hereinabove are placed into and transmitted together with the Service Guide.

It is to be noted that, in FIG. 21, a lower layer "FLUTE" adjacent the "Service Guide" and a lower layer "ALC" adjacent the "FLUTE" are layers for transferring the Service Guide packetized in accordance with the UDP/IP (User Datagram Protocol/Internet Protocol).

As the specification for this Service Guide, a data configuration illustrated in FIG. 22 is defined by the OMA (Open Mobile Alliance). It is to be noted that, since details of the configuration of the Service Guide illustrated in FIG. 22 are prescribed in "'Service Guide for Mobile Broadcast Services,' Open Mobile Alliance, OMA-TSBCAST_ServiceGuide-V1_0, Candidate Version 1.0," description of them is omitted herein.

A PDI-A (provider side PDI-A) or a PDI-A query is placed in at least one of a "Service" fragment, "Schedule" fragment and a "Content" fragment from among elements which configure the Service Guide illustrated in FIG. 22.

The "Service" fragment is metadata including control information relating to the substance of a channel service, and FIG. 23 illustrates details of a configuration of the same. A PDI-A or a PDI-A query is placed into the "Service" fragment illustrated in FIG. 23 by newly adding a "PDI-A" element to a "PrivateExt" element defined at the lowermost stage. In particular, for example, a "PDI-A" element is represented and encoded in a character string of <xs:element name = "PDI-A" type = "xs:string" xmlns:xs = "http://www.w3.org/2001/XMLSchema"/> by an XML schema.

The "Schedule" fragment is metadata including control information relating to a distribution schedule of content (digital television program), and FIG. 24 illustrates details of a configuration of the same. A PDI-A or a PDI-A query is placed into the "Schedule" fragment illustrated in FIG. 24 by newly adding a "PDI-A" element to the "PrivateExt" element defined at the lowermost stage. In particular, for example, a "PDI-A" element is represented and encoded in a character string as <xs:element name = "PDI-A" type = "xs:string" xmlns:xs = "http://www.w3.org/2001/XMLSchema"/> by an XML schema.

The "Content" fragment is metadata including control information relating to the substance of content (digital television program), and FIG. 25 illustrates details of a configuration of the "Content" fragment. A PDI-A or a PDI-A query is placed into the "Content" fragment illustrated in FIG. 25 by newly adding a "PDI-A" element to the "PrivateExt" element defined at the lowermost stage. In particular, for example, the "PDI-A" element is represented in a character string of <xs:element name = "PDI-A" type = "xs:string" xmlns:xs = "http://www.w3.org/2001/XMLSchema"/> by an XML schema.

Further, the PDI-Q is placed into the "Interactivity Data" fragment from among elements which configure the Service Guide illustrated in FIG. 22.

The "Interactivity Data" fragment is metadata regarding an application relating to a channel service or content (television program), and FIG. 26 illustrates details of a configuration of the same. The PDI-Q is placed into the "Interactivity Data" fragment illustrated in FIG. 26 by newly adding a "PDI-Q" element to the "PrivateExt" element defined at the lowermost stage. In particular, for example, the "PDI-Q" element is represented and encoded in a character string of <xs:element name = "PDI-Q" type = "xs:string" xmlns:xs = "http://www.w3.org/2001/XMLSchema"/> by an XML schema.

While, in the foregoing, an example wherein the present invention is applied to a broadcasting system which broadcasts in the ATSC-M/H system is described, also it is possible to apply the present invention to a broadcasting system which carries out NRT (Non-RealTime) broadcasting in accordance with the conventional ATSC system. Since the NRT broadcasting does not presuppose viewing of content on the real time basis, there is no necessity to reproduce content in synchronism with broadcasting time of content which is broadcast through a broadcasting signal as data.

### [Example of Application to Broadcasting System Which Carries Out NRT Broadcasting]

FIG. 27 illustrates a protocol stack in a signal of a broadcasting wave transmitted by NRT broadcasting.
Although detailed description is omitted, the lowermost hierarchical layer is "physical Layer," and a frequency band of the broadcasting wave corresponds to this. An upper layer adjacent the "Physical Layer" is "MPEG2-TS," and a broadcasting stream broadcast as a broadcasting wave corresponds to this.

As an upper layer adjacent the "MPEG2-TS," "ATSC-PSIP (Program and System Information Protocol)" and "MPEG2-PSI (Program Specific Information)" are indicated. The "ATSC-PSIP" is a hierarchy which has a TVCT, and the "MPEG2-PSI" is a hierarchy having a PAT (Program Association Table) and a PMT (Program Map Table).

Further, as an upper layer adjacent the "MPEG2-TS," "DSM-CC (Digital Storage Media Command and Control) Addressable Section" is indicated. The "DSM-CC Addressable Section" is used as an adaptation layer for transferring an IP packet on the MPEG2-TS of a broadcasting stream.

FIG. 28 illustrates a data structure of the TVCT, PAT, PMT and DSM-CC Addressable Section. In the TVCT, control information relating to a broadcasting stream broadcast by the MPEG2-TS is described, and an MPEG2-TS for transferring the DSM-CC Addressable Section for transferring an IP packet stream (UDP/IP Packets) is specified based on the TVCT.

Referring back to FIG. 27, as an upper hierarchy adjacent the "DSM-CC Addressable Section," "IP" is indicated, and a further upper hierarchy adjacent the "IP," "UDP" is indicated.

As an upper layer adjacent the "UDP," "Service Signaling Channel" and "FLUTE/ALC (File Delivery over Unidirectional Transport/Asynchronous Layered Coding Protocol)" are indicated. The "Service Signaling Channel" is a layer having an SMT (Service Map Table) and an NRT-IT (NRT Information Table). As an upper layer adjacent the "FLUTE/ALC," "FLUTE Session" is indicated. The "FLUTE Session" is a layer having a FLUTE-FDT (File Delivery Table and an A/V File.

FIG. 29 illustrates a data structure of the SMT, NRT-IT and FLUTE FDT. In the SMT, metadata relating to a channel is described, and in the NRT-IT, metadata relating to content is described. The SMT and the NRT-IT are transferred by the "Service Signaling Channel" described hereinabove. In the FLUTE FDT, information for identifying A/V files is described. It is to be noted that an A/V file is transferred by the "FLUTE/ALC" described hereinabove.

Here, in a broadcasting system which carries out NRT broadcasting, a PDI-A (provider side PDI-A), a PDI-A query or a PDI-Q to be transmitted from the server 11 to the client 12 in the broadcasting system 10 described hereinabove is placed in or transmitted together with the SMT or NRT-IT.

In particular, in the case where filtering of content to be distributed is carried out in a unit of a channel (broadcasting station), "PDI descriptor" for placing a PDI-A, a PDI-A query or a PDI-Q is defined newly in a descriptor loop (in the figure, the lowermost stage of "Service #1") of a service level of the SMT.

On the other hand, in the case where filtering of content to be distributed is carried out in a unit of a content, "PDI descriptor" for placing a PDI-A, a PDI-A query or a PDI-Q is defined newly in a descriptor loop (in the figure, the lowermost stage of "Content #1") of the service level of the NRT-IT.

FIG. 30 illustrates an example of syntax of the "PDI descriptor." In FIG. 30, each of descriptors to be described is defined together with a bit number (No. of Bits) and a format (Format).

According to the syntax illustrated in FIG. 30, a PDI-A, a PDI-A query or a PDI-Q is described in a descriptor "PDI_Q or PDI_A or PDI_A_Query" of variable bits.

It is to be noted that the syntax of the "PDI descriptor" is not limited to the example illustrated in FIG. 30.

In this manner, also it is possible to apply the present invention to a broadcasting system which carries out NRT broadcasting.

It is to be noted that the present invention may naturally be applied to a broadcasting system which broadcasts in accordance with the ATSC-M/H system described hereinabove or a broadcasting system which broadcasts the NRT broadcasting by a system other than the line broadcasting systems.

Incidentally, the client 12 in the broadcasting system 10 described hereinabove interacts with a user to generate a user side PDI-A through a screen display corresponding to a question defined in the PDI-Q from the server 11. If the question set (generated) by the provider side has simple substance, then the client 12 can interact with the user through a screen display shown in any of FIGS. 8 to 12. However, if a question set by the provider side has substance which requires a high degree of interactivity (for example, such substance that complicated conditional branching is required in response to selection of the user), then there is the possibility that sufficient interaction with the user cannot be carried out with such screen displays as shown in FIGS. 8 to 12. In such an instance, since it becomes impossible to generate a PDI-A which reflects the tastes of the user with a high degree of accuracy, an accurate filtering condition cannot be obtained either. After all, it becomes impossible to acquire content which meets to the needs at the time.

Therefore, in the following, an embodiment of a broadcasting system wherein, even if a question set by the provider side has the substance which requires a high degree of interactivity, interaction with the user is carried out sufficiently is described.

### <2. Second Embodiment>

### [Example of Functional Configuration of Server]

First, an example of a functional configuration of a server 11 in a broadcasting system 10 wherein a script is executed to carry out interaction with a user is described with reference to FIG. 31.

The server 11 of FIG. 31 is configured from a transmission section 42, a metadata distributor 44, a content storage section 45, a content distributor 46, a PDI-S generator 311 and a PDI-S execution section 312.

It is to be noted that components of the server 11 of FIG. 31 which have functions similar to those provided in the server 11 of FIG. 3 are denoted by like names and like reference characters, and description of them is omitted herein suitably.

In particular, the server 11 of FIG. 31 is different from the server 11 of FIG. 3 in that it includes the PDI-S generator 311 and the PDI-S execution section 312 in place of the PDI-Q generator 41 and the PDI-A generator 43.

The PDI-S generator 311 generates a PDI-S (Preference Demographic and Interest Script) which is a script for obtaining a user side PDI-A representative of an answer of a user (viewer) of the client 12 to a question about the tastes of the user. Then, the PDI-S generator 311 transmits the generated PDI-S to the client 12 through the transmission section 42 and supplies the PDI-S to the PDI-S execution section 312. The PDI-S includes a Web browser and other applications.

The PDI-S execution section 312 executes the PDI-S from the PDI-S generator 311 to generate a provider side PDI-A representative of an answer set by the provider side to the question about the tastes of the user of the client 12 and supplies the provider side PDI-A to the metadata distributor 44.

### [Example of Functional Configuration of Client]

Now, an example of a functional configuration of the client 12 in the broadcasting system 10 wherein a script is executed to carry out interaction with a user is described with reference to FIG. 32.

The client 12 of FIG. 32 is configured from a reception section 51, a PDI-A storage section 53, a content filter 54, a content reproduction section 55, a content accumulation section 56, a PDI-S execution section 321 and a history information storage section 322.

It is to be noted that components of the client 12 of FIG. 32 which have functions similar to those provided in the server client 12 of FIG. 4 are denoted by like names and like reference characters, and description of them is suitably omitted herein.

In particular, the client 12 of FIG. 32 is different from the client 12 of FIG. 4 in that the PDI-S execution section 321 is provided in place of the PDI-A generator 52 and the history information storage section 322 is provided newly.

The PDI-S execution section 321 executes a PDI-S transmitted thereto from the server 11 to generate a user side PDI-A representative of an answer of a user of the client 12 to a question about the tastes of the user, and supplies the user side PDI-A to the PDI-A storage section 53. The PDI-S execution section 321 executes the PDI-S based on history information hereinafter described as occasion demands.

The history information storage section 322 has stored therein history information which represents a behavior history of a user who owns the client 12. The history information stored in the history information storage section 322 is read out to the PDI-S execution section 321 as occasion demands.

### [Example of Transmission and Reception Process of Content]

Now, a transmission and reception process of content in the broadcasting system 10 configured from the server 11 of FIG. 31 and the client 12 of FIG. 32 is described with reference to a flow chart of FIG. 33.

It is to be noted that processes at steps S 114 to S 116 and S 123 to S126 of the flow chart of FIG. 33 are basically similar to the processes at steps S 14 to S16 and S23 to S26 of the flow chart of FIG. 5, respectively, and therefore, description of them is omitted herein.

In particular, on the provider side such as a broadcasting organization, if a sponsor of content to be broadcast (distributed) or the broadcasting organization itself issues a request for distribution of content to a viewer having a particular taste or attribute, then the PDI-S generator 311 of the server 11 generates, in response to operation of the staff of the provider side, a PDI-S for obtaining a user side PDI-A representative of an answer of a viewer, that is, a user of the client 12 to a question about what taste or attribute the user has at step S111.

### [Another Example of Syntax of XML Schema]

Here, another example of syntax of an XML schema for configuring a PDI-S and a PDI-A in the present embodiment is described with reference to FIG. 34.

It is to be noted that the 1st to 44th rows of the syntax illustrated in FIG. 34 are same as the 1st to 44th rows of the syntax illustrated in FIG. 6, respectively, and therefore, description of them is omitted herein.

The 45th to 50th rows indicate a declaration of elements of a question defined under the name of "QAA" (question whose question type is "AnyAnswerType") among the questions declared in the fifth to ninth rows. An id element indicated in the 47th row represents an ID for identifying the item of the question, and the format thereof is defined by a format ("providerName:[category:]question-ID") similar to that of a provider-unique filtering parameter.

In particular, a question defined by the name of "QAA" (question whose question type is "AnyAnswerType") and an answer to the question are each classified into a provider-unique filtering parameter. It is to be noted that, since a question defined under the name of "QAA" does not restrict the type of an answer, such question (q element) is not defined in the 45th to 50th rows.

Further, an answer (a element) to a question defined under the name of "QAA" can have a format in which only the provider by which the question is set can grasp the substance as hereinafter described. Therefore, the answer is hereinafter referred to as provider-unique filtering parameter of the provider-hiding format.

Referring back to the flow chart of FIG. 33, at step S 112, the PDI-S generator 311 of the server 11 transmits the generated PDI-S to the client 12 through the transmission section 42 and supplies the PDI-S to the PDI-S execution section 312.

At step S121, the reception section 51 of the client 12 receives the PDI-S transmitted thereto from the server 11 and supplies the PDI-S to the PDI-S execution section 321.

It is to be noted that the PDI-S may be received by the client 12, for example, every time it is broadcast (transmitted) at predetermined time intervals from a broadcasting station as a provider in which the server 11 is provided. Or, the PDI-S may be received by the client 12 when the channel of the client 12 is adjusted to a channel of the broadcasting station in which the server 11 is provided.

At step S122, the PDI-S execution section 321 of the client 12 carries out a PDI-S execution process to generate a user side PDI-A.

### [Example of PDI-S Execution Process]

Here, details of the PDI-S execution process by the PDI-S execution section 321 are described with reference to FIG. 35. After the PDI-S execution process is started, the PDI-S execution section 321 causes the display section not shown to display a screen image corresponding to a question defined in the PDI-S to urge the user to select whether a user side PDI-A representative of an answer to the question is to be generated automatically or in response to an input of the user (viewer) of the client 12.

At step S131, the PDI-S execution section 321 decides whether or not the automatic generation of a user side PDI-A is selected. If it is decided at step S 131 that the automatic generation of a user side PDI-A is selected on the screen image displayed on the display section not shown, then the processing advances to step S132.

At step S 132, the PDI-S execution section 321 executes the PDI-S to read out history information from the history information storage section 322 and generate a user side PDI-A based on the history information. More particularly, the PDI-S execution section 321 analyzes the tastes of the user from a behavior history of the user represented by the history information read out from the history information storage section 322 and generates a user side PDI-A representative of an answer to the question defined in the PDI-S based on a result of the analysis of the tastes.

Further, the PDI-S execution section 321 analyzes the tastes of the user from a behavior history of the user represented by history information stored in a database on an external network through the reception section 51 and generates a user side PDI-A representative of an answer to the question defined in the PDI-S based on a result of the analysis of the tastes.

In this manner, the PDI-S execution section 321 executes the PDI-S to interact with the user to generate a user side PDI-A representing an answer which reflects the tastes of the user with a high degree of accuracy to a question defined in the PDI-S.

On the other hand, if it is decided at step S131 that the automatic generation of a PDI-A is not selected on the screen image displayed on the display section not shown, then the processing advances to step S133.

At step S 133, the PDI-S execution section 321 generates a user side PDI-A in response to an input of the user on the screen image displayed on the display section not shown. More particularly, the PDI-S execution section 321 urges the user (viewer) of the client 12 to input or select an answer to the question defined in the PDI-S, the answer displayed on the display section not shown, and generates a user side PDI-A representative of the answer.

### [Example of Screen Display in Interaction with User by PDI-S]

Here, examples of a screen display in an interaction with a user by a PDI-S are described with reference to FIGS. 36 to 39. It is to be noted that it is assumed here that a PDI-S which defines questions same as those defined by the PDI-Q described hereinabove with reference to FIG. 7 is received. Further, it is assumed that screen images corresponding to the question group defined in the received PDI-S are successively displayed on the display section not shown of the client 12.

FIG. 36 shows a screen display example corresponding to the question of "ProviderA:123" in FIG. 7. In FIG. 36, a history reference button 341 on which a message "Depress this button when an answer to 'In which of the following sports are you most interested? (Multiple selection allowed)' is to be automatically generated referring to recent viewing history. Select one or more but three or less of following choices when an answer is to be designated by yourself." including the question indicated in the 12th row of FIG. 7 is displayed, and selection buttons 342-1 to 342-4 for allowing the user to select choices "Baseball," "Basketball," "Soccer" and "Hockey" as candidates for an answer to the question are displayed.

If the history reference button 341 is depressed on the screen image shown in FIG. 36 by the user, then the PDI-S execution section 321 reads out history information representative of a viewing history of television programs, for example, during the past month from the history information storage section 322 to analyze the tastes of the user. Then, the PDI-S execution section 321 selects, from among candidates for an answer to the question of "ProviderA:123," that candidate having a high degree of relevance to a result of the analysis of the tastes and generates a user side PDI-A representative of the answer.

FIG. 37 shows an example of a screen display corresponding to the question of "ProviderA:ProgramX: 123" in FIG. 7. In FIG. 37, a history reference button 351 on which a message "Depress this button when an answer to 'Do you enjoy camping and outdoor recreation? (Only one selection)' is to be automatically generated referring to recent action history. Select only one of the following choices when an answer is to be designated by yourself." including the question indicated in the 20th row of FIG. 7 is displayed and selection buttons 352-1 to 352-3 for allowing the user to select choices "Never," "Occasionally" and "Frequently" as candidates for an answer to the question are displayed.

If the history reference button 351 is depressed on the screen image shown in FIG. 37 by the user, then the PDI-S execution section 321 reads out history information representative of records of going out during the past month such as, for example, a schedule from the history information storage section 322 to analyze the tastes of the user. Then, the PDI-S execution section 321 selects, from among the candidates for an answer to the question of "ProviderA:ProgramX: 123," the candidate which is high in relevance to a result of the analysis of the tastes and generates a user side PDI-A representative of the answer.

FIG. 38 shows an example of a screen display corresponding to the question of "ProviderA:321" in FIG. 7. In FIG. 38, a history reference button 361 on which a message "Depress this button when an answer to 'Who's products are you most interested in recently?' is to be automatically generated referring to recent product search history. Input a maker name freely to the following field when an answer is to be designated by yourself." including the question indicated in the 27th row of FIG. 7 is displayed and an answer inputting field 362 for allowing the user to input a character string as an answer to the question are displayed.

If the history reference button 361 is depressed on the screen image shown in FIG. 38 by the user, then the PDI-S execution section 321 reads out history information representative of commodities searched, for example, during the past month from a database of a company which manages a shopping site on the Internet to analyze the tastes of the user. Then, the PDI-S execution section 321 generates a PDI-A representative of an answer to the question of "ProviderA:321" based on a result of the analysis.

FIG. 39 shows an example of a screen display corresponding to a question of "ProviderA:Special:999" which is not included in the questions defined in the PDI-Q described hereinabove with reference to FIG. 7. It is assumed that the question of "ProviderA:Special:999" is a question whose question type is "AnyAnswerType" described hereinabove. In FIG. 39, a history reference button 371 on which a message "Depress this button when an answer to 'What subject are you most interested in recently?' may be automatically generated referring to recent conversation history. Depress the following cancel button when no automatic generation is required." including the question given by the PDI-S and a cancel button 372 for canceling an answer to the question are displayed.

If the history reference button 371 is depressed on the screen image shown in FIG. 39 by the user, then the PDI-S execution section 321 reads out history information representative of conversations (sentences) transferred, for example, during the past week, for example, from a database of a company which provides a SNS (Social Network Service) on the Internet to analyze the tastes of the user. Then, the PDI-S execution section 321 generates a PDI-A representative of an answer to the question of "ProviderA; Special:999" based on a result of the analysis.

It is to be noted that, in the screen display examples shown in FIGS. 36 and 37, an answer of a user is selected from candidates for an answer to a question defined in the PDI-S. However, candidates for an answer to a question may be analogized from a behavior history of the user represented by history information stored in the history information storage section 322 or an external database such that an answer of a user may be selected from among the analogized candidates for an answer.

FIG. 40 shows another example of a screen display corresponding to the question of "ProviderA:123" in FIG. 7. In FIG. 40, a question presentation field 381 in which a message "Select one or more of the following three candidates which are obtained as a result of an analogy from various kinds of history information of yours as an answer to 'In which of the following sports are you most interested? (Multiple selection allowed)' including the question indicated in the 12th row of FIG. 7 is displayed and selection buttons 382-1 to 382-3 for allowing the user to select choices "Basketball," "Soccer" and "Hockey" as analogized candidates for an answer to the question are displayed.

In this instance, the PDI-S execution section 321 executes the PDI-S to read out history information representative of a viewing history of television programs, for example, during the past month from the history information storage section 322 to analyze the tastes of the user to analogize candidates for an answer to the question of "ProviderA:123." Then, the PDI-S execution section 321 causes selection buttons corresponding to the candidates to be displayed like a screen image shown in FIG. 40. If any of the selection buttons is selected by the user, then the PDI-S execution section 321 generates a user side PDI-A representative of an answer corresponding to the selected selection button.

In this manner, the PDI-S execution section 321 executes the PDI-S to automatically generate a user side PDI-A representative of an answer to a question defined in the PDI-S based on history information of the user or to generate a user side PDI-A representative of an answer to the question inputted or selected by the user.

### [Example of PDI-A]

Here, an example of a PDI-A (user side PDI-A) generated by the PDI-S execution section 321 is described with reference to FIG. 41. It is to be noted that it is assumed that the PDI-A shown in FIG. 41 is a PDI-A generated based on history information of the user.

In particular, the second to seventh rows indicate an answer of the user automatically generated to a question presented by the screen display described hereinabove with reference to FIG. 36. In particular, <id>ProviderA: 123</id> in the third row indicates an id element of the question presented by the screen display of FIG. 36, and <a>Baseball</a> in the fourth row, <a>Soccer</a> in the fifth row and <a>Hockey</a> in the sixth row indicate, as answers to the question, answers selected based on history information of the user by the PDI-S execution section 321.

The 8th to 11th rows indicate an answer of the user automatically generated to the question presented by the screen display described hereinabove with reference to FIG. 37. In particular, <id>ProviderA:ProgramX: 123</id> in the ninth row indicates an id element of the question presented by the screen display of FIG. 37, and <a>Occasionally</a> in the tenth row indicates an answer selected based on the history information of the user by the PDI-S execution section 321 as an answer to the question.

The 12th to 15th rows indicate an answer of the user automatically generated to the question presented by the screen display described hereinabove with reference to FIG. 38. In particular, <id>ProviderA:321</id> in the 13th row indicates an id element of the question presented by the screen display of FIG. 38, and <a>Somy</a> in the 14th row indicates an answer generated based on the history information of the user by the PDI-S execution section 321 as an answer to the question.

The 16th to 19th rows indicate an answer of the user automatically generated to the question presented by the screen display described with reference to FIG. 39. In particular, <id>ProviderA:Special:999</id> in the 17th row indicates an id element of the question presented by the screen display of FIG. 39, and <a>jlKK3Q==</a> in the 18th row indicates an answer generated based on the history information of the user by the PDI-S execution section 321 as an answer to the question.

Here, <a>jlKK30==</a> is a provider-unique filtering parameter of a provider-hiding format in which only a provider by which the question is set can grasp the substance and is encoded by a system such as, for example, the Base64 system. In other words, this provider-unique filtering parameter is prevented from being used as a filtering parameter by any other provider.

The PDI-S execution section 321 supplies the user side PDI-A generated in this manner to the PDI-A storage section 53 so as to be stored. The user side PDI-A stored in the PDI-A storage section 53 is used when it is decided whether or not content distributed from the server 11 matches the tastes of the user of the client 12 as hereinafter described.

It is to be noted that the user side PDI-A stored in the PDI-A storage section 53 is updated by the PDI-S execution section 321 executing the PDI-S in an execution cycle designated in advance by the provider side.

Referring back to the flow chart of FIG. 33, at step S 113, the PDI-S execution section 312 of the server 11 generates a provider side PDI-A to the question defined in the PDI-S from the PDI-S generator 311 and supplies the provider side PDI-A to the metadata distributor 44. In particular, the PDI-S execution section 312 analyzes or executes the PDI-S in response to operation of the staff of the broadcasting station (provider side), causes the display section not shown to display such a screen image corresponding to the question defined in the PDI-S as described hereinabove, for example, with reference to any of FIGS. 36 to 39 and generates a provider side PDI-A representative of an answer to the question. At this time, the staff of the broadcasting station would cause the PDI-S to be analyzed or executed to select an answer corresponding to content to be distributed as an answer to the question defined in the PDI-S. In other words, the provider side PDI-A generated by the PDI-S execution section 312 represents information (answer) for allowing a user (viewer) of the client 12 to view content distributed later taking the tastes of the user into consideration.

Thereafter, in the server 11, content corresponding to the generated provider side PDI-A is specified (inquired about), and content metadata including the provider side PDI-A as content metadata of the specified content is generated. Then, the specified content is distributed together with the generated content metadata.

It is to be noted that also here the content metadata may not be distributed together with the content, but after the content metadata including the provider side PDI-A is transmitted to the client 12 in advance, the content corresponding to the content metadata may be distributed.

Meanwhile, in the client 12, the content and the content metadata distributed from the server 11 are received, and matching between user side PDI-A and the provider side PDI-A is carried out.

Here, it is assumed that, as the user side PDI-A, the PDI-A described hereinabove with reference to FIG. 41 has been generated and stored, and as the provider side PDI-A, the PDI-A illustrated in FIG. 42 has been transmitted from the server 11.

The provider side PDI-A illustrated in FIG. 42 has a basic configuration similar to that of the user side PDI-A illustrated in FIG. 41, and therefore, detailed description of the same is omitted herein. However, this provider side PDI-A indicates that "Baseball" is set as an answer to the question of "ProviderA:123" and "Never" is set as an answer to the question of the "ProviderA:ProgramX:123."

At this time, the client 12 compares the user side PDI-A and the provider side PDI-A with each other, and if at least one of the answers to the questions indicates coincidence, then it is decided that the user side PDI-A and the provider side PDI-A match each other. However, if none of the answers to the questions indicates coincidence, then it is decided that the user side PDI-A and the provider side PDI-A do not match each other. In this instance, since the answer to the question of "ProviderA:123" in the user side PDI-A illustrated in FIG. 41 and the answer to the question of "providerA: 123" in the provider side PDI-A illustrated in FIG. 42 coincide with each other in that both of them include "Baseball," it is decided that the user side PDI-A and the provider side PDI-A match each other.

Now, it is assumed that the PDI-A illustrated in FIG. 43 is transmitted as the provider side PDI-A from the server 11.

The provider side PDI-A illustrated in FIG. 43 indicates that "Basketball" is selected as an answer to the question of "ProviderA:123" and "Never" is selected as an answer to the question of "ProviderA:ProgramX: 123."

In this instance, since the answers to the questions in the user side PDI-A illustrated in FIG. 41 and the answers to the questions in the provider side PDI-A illustrated in FIG. 43 exhibit no coincidence therebetween, it is decided that the user side PDI-A and the provider side PDI-A do not match each other.

Depending upon a result of such a matching process as described above, it is decided whether or not the distributed content is to be acquired.

In the processes described above, in the broadcasting system, on the provider side, a PDI-S for obtaining a user side PDI-A to a question about the tastes of the user is generated by a server, and the PDI-S is transmitted to a client terminal. In response to the PDI-S, a provider side PDI-A representative of an answer set by the provider side is distributed as content metadata of corresponding content. Consequently, as the content metadata, content metadata which meets the needs at the time other than content metadata prescribed by a standardization organization can be applied to content. On the other hand, on the user side, a user side PDI-A is generated by the client terminal executing the PDI-S from the server, and matching between the generated user side PDI-A and the provider side PDI-A from the server is carried out to determine whether or not the content distributed from the server is to be acquired. Consequently, content can be filtered with content metadata which meets the needs at the time other than content metadata prescribed by a standardization organization. Accordingly, content which meets the needs at the same time can be acquired.

Further, in the client terminal, since an interaction with the user can be carried out by the PDI-S, even if a question set on the provider side has the substance which requires a high degree of interactivity, a sufficient interaction can be carried out with the user. Accordingly, a user side PDI-A which reflects the tastes of the user with a high degree of accuracy can be generated, and consequently, an accurate filtering condition can be obtained. As a result, it is possible to acquire content which meets the needs at the time with a high degree of accuracy.

It is to be noted that, also in a broadcasting system wherein a script is executed to carry out an interaction with a user, one of a user side PDI-A and a provider side PDI-A may be represented as a query which evaluates the PDI-A to compare the user side PDI-A and the provider side PDI-A with each other to carry out matching.

In the following, a configuration wherein one of a user side PDI-A and a provider side PDI-A is represented as a query to compare the user side PDI-A and the provider side PDI-A with each other is described.

### [Example 3 of Matching Process by Query Which Evaluates PDI-A]

First, a configuration wherein a provider side PDI-A is represented as a query to compare a user side PDI-A and the provider side PDI-A with each other is described.

FIG. 44 shows an example of a configuration of the server 11 which represents a provider side PDI-A as a query.

The server 11 of FIG. 44 is configured from a transmission section 42, a content accumulation section 45, a content distributor 46, a PDI-S generator 311, a PDI-S execution section 391, and a metadata distributor 392.

It is to be noted that components of the server 11 of FIG. 44 which have functions similar to those provided in the server 11 of FIG. 31 are denoted by like names and like reference characters, and description of them is suitably omitted herein.

In particular, the server 11 of FIG. 44 is different from the server 11 of FIG. 31 in that it includes the PDI-S execution section 391 and the metadata distributor 392 in place of the PDI-S execution section 312 and the metadata distributor 44.

The PDI-S execution section 391 executes a PDI-S from the PDI-S generator 311 to generate a provider side PDI-A representative of an answer set by the provider side to a question about the tastes of a user of the client 12. Then, the PDI-S execution section 391 generates a PDI-A query in which the generated provider side PDI-A is applied to a predetermined conditional statement and supplies the generated PDI-A query to the metadata distributor 392.

The metadata distributor 392 specifies (inquires about), based on the PDI-A query from the PDI-S execution section 391, content corresponding to the PDI-A query from within the content accumulated in the content accumulation section 45. The metadata distributor 392 generates content metadata including the PDI-A query as content metadata of the specified content and transmits the generated content metadata to the client 12 through the transmission section 42.

Further, the client 12 in the present example is same as the client 12 of FIG. 32 except that the content filter 54 of FIG. 32 reads out a user side PDI-A from the PDI-A storage section 53 and filters content based on the user side PDI-A and the PDI-A query included in the content metadata transmitted from the server 11. Therefore, description of the client 12 is omitted herein.

Now, a transmission and reception process of content in the broadcasting system 10 which includes the server 11 of FIG. 44 is described with reference to a flow chart of FIG. 45.

It is to be noted that processes at steps S151, S152, S156, S161 to S163, S165 and S 166 of the flow chart of FIG. 45 are basically similar to the processes at steps S111, S 112, S 116, S121 to S123, S 125 and S 126 of the flow chart of FIG. 33, respectively. Therefore, description of them is omitted herein.

In particular, at step S153, the PDI-S execution section 391 of the server 11 generates a provider side PDI-A to a question defined in a PDI-S from the PDI-S generator 311, generates a PDI-A query in which the generated provider side PDI-A is applied to a predetermined conditional expression, and supplies the PDI-A query to the metadata distributor 392. More particularly, for example, the PDI-S execution section 391 analyzes or executes the PDI-S in response to an operation of the staff of the broadcasting station (provider side) and causes the display section not shown to display, for example, such a screen image corresponding to a question defined in the PDI-S as described hereinabove with reference to any of FIGS. 36 to 39. Then, the PDI-S execution section 391 sets an answer to the question and further causes the staff of the broadcasting station to determine a combination (filtering condition) of such answers to generate a PDI-A query representative of the combination of the answers. At this time, the staff of the broadcasting station would cause the PDI-S to be analyzed or executed to select an answer corresponding to content to be distributed and then determine a combination of such answers as an answer to the questions defined in the PDI-S. In particular, the PDI-A query generated by the PDI-S execution section 391 represents information (combination of answers) for allowing a user (viewer) of the client 12 to view content to be distributed later taking the tastes of the viewer of the client 12 into consideration on the provider side.

At step S 154, the metadata distributor 392 specifies (inquires about), based on the PDI-A query from the PDI-S execution section 391, content corresponding to the PDI-A query from within the content accumulated in the content storage section 45. The content specified here may be that content with regard to which the content metadata has a higher degree of similarity to the PDI-A query from the PDI-S execution section 391 than a predetermined value from among the accumulated contents to which the content metadata are applied in advance or may be that content selected in advance as content to be viewed by the user by the staff of the broadcasting station. It is to be noted that the content specified by the metadata distributor 392 is acquired from the content storage section 45 by the content distributor 46.

At step S 155, the metadata distributor 392 newly generates, based on content metadata applied in advance to the content specified at step S 154 and the PDI-A query from the PDI-S execution section 391, content metadata including the PDI-A query.

Then at step S164, the content filter 54 of the client 12 carries out, based on the PDI-A included in the content metadata from the server 11, matching of the user side PDI-A stored in the PDI-A storage section 53.

Here, it is assumed that the PDI-A described hereinabove with reference to FIG. 41 has been generated and stored as the user side PDI-A and a PDI-A query given below has been transmitted from the server 11.
"//QSA[id='ProviderA:123' and a='Baseball']"

The PDI-A query given above indicates that the user side PDI-A evaluates whether or not "Baseball" is selected as an answer to the question of "ProviderA:123."

At this time, the content filter 54 evaluates the user side PDI-A based on the PDI-A query, and if the user side PDI-A satisfies (is true to) the PDI-A query, then the content filter 54 decides that the user side PDI-A and the PDI-A query match each other. However, if the user side PDI-A does not satisfy (is false to) the PDI-A query, then the content filter 54 decides that the user side PDI-A and the PDI-A query do not match each other. In this instance, in the user side PDI-A illustrated in FIG. 41, since "Baseball" is selected as an answer to the question of "providerA:123," the user side PDI-A and the PDI-A query are decided to match each other.

Since a more complicated filtering condition is represented by a PDI-A query set by the provider side in this manner, it is possible to allow a user (viewer) to acquire content expected by the provider side with a higher degree of certainty.

### [Example 4 of Matching Process by Query Wherein PDI-A Is Evaluated]

Now, a configuration wherein a user side PDI-A is represented as a query and the user side PDI-A and a provider side PDI-A are compared with each other is described.

FIG. 46 shows an example of a functional configuration of the client 12 wherein a user side PDI-A is represented as a query.

The client 12 of FIG. 46 is configured from a reception section 51, a content filter 54, a content reproduction section 55, a content accumulation section 56, a history information storage section 322, a PDI-S execution section 401, and a PDI-A query storage section 402.

It is to be noted that, in the client 12 of FIG. 46, components having functions similar to those provided in the client 12 of FIG. 32 are denoted by like names and like reference characters, and description of them is suitably omitted herein.

In particular, the client 12 of FIG. 46 is different from the client 12 of FIG. 32 in that it includes the PDI-S execution section 401 and the PDI-A query storage section 402 in place of the PDI-S execution section 321 and the PDI-A storage section 53.

The PDI-S execution section 401 executes a PDI-S transmitted thereto from the server 11 to generate a user side PDI-A which represents an answer of a user of the client 12 to a question about the tastes of the user. Then, the PDI-S execution section 401 generates a PDI-A query in which the generated user side PDI-A is applied to a predetermined conditional expression and supplies the generated PDI-A query to the PDI-A query storage section 132.

The PDI-A query storage section 402 stores the PDI-A query from the PDI-S execution section 401. The PDI-A query stored in the PDI-A query storage section 402 is suitably read out to the content filter 54.

It is to be noted that the content filter 54 of FIG. 46 reads out the PDI-A query from the PDI-A query storage section 402 and filters content based on the PDI-A query and a provider side PDI-A included in content metadata transmitted from the server 11.

Further, the server 11 in the present example is same as the server 11 of FIG. 31, and therefore, description of the same is omitted herein.

Now, a content transmission and reception process in the broadcasting system 10 which includes the client 12 of FIG. 46 is described with reference to a flow chart of FIG. 47.

It is to be noted that processes at steps S 171 to S 181, S 183, S 185 and S 186 of the flow chart of FIG. 47 are basically similar to the processes at steps S111 to S121, S123, S125 and S 126 of the flow chart of FIG. 33, and therefore, description of them is omitted herein.

In particular, at step S 182, the PDI-S execution section 401 of the client 12 executes a PDI-S execution process to generate a PDI-A query.

### [Example of PDI-S Execution Process]

Here, details of the PDI-S execution process by the PDI-S execution section 401 are described with reference to FIG. 49. After the PDI-S execution process is started, the PDI-S execution section 401 causes the display section not shown to display a screen image corresponding to a question defined in the PDI-S to urge the user to select whether a PDI-A query in which a user side PDI-A representative of an answer to the question is applied to a predetermined conditional expression is to be generated automatically or is to be generated in response to an input of the user (viewer) of the client 12.

At step S191, the PDI-S execution section 401 decides whether or not the automatic generation of a PDI-A query is selected. If it is decided at step S 191 that the automatic generation of a PDI-A is selected on the screen image displayed on the display section not shown, then the processing advances to step S 192.

At step S 192, the PDI-S execution section 401 executes the PDI-S to read out history information from the history information storage section 322 and generate a PDI-A query based on the history information. More particularly, the PDI-S execution section 401 analyzes the tastes of the user from a behavior history of the user represented by the history information read out from the history information storage section 322 and generates an answer to the question defined in the PDI-S based on a result of the analysis of the tastes. Further, the PDI-S execution section 401 determines combination of such answers (filtering condition) based on the history information to generate a PDI-A query representative of the combination of answers.

Further, the PDI-S execution section 401 analyzes the tastes of the user from a behavior history of the user represented by history information stored in a database on an external network through the reception section 51 and generates an answer to the question defined in the PDI-S based on a result of the analysis of the tastes. Further, the PDI-S execution section 401 determine a combination of such answers (filtering condition) based on the history information to generate a PDI-A query representative of the combination of answers.

In this manner, the PDI-S execution section 401 executes the PDI-S to interact with the user to generate a PDI-A query which represents answers which reflect the tastes of the user with a high degree of accuracy to the questions defined in the PDI-S.

On the other hand, if it is decided at step S191 that the automatic generation of a PDI-A query is not selected on the screen image displayed on the display section not shown, then the processing advances to step S193.

At step S 193, the PDI-S execution section 401 generates a PDI-A query in response to an input of the user on the screen image displayed on the display section not shown. More particularly, the PDI-S execution section 401 urges the user (viewer) of the client 12 to input or select an answer to the question defined in the PDI-S and displayed on the display section not shown. Further, the PDI-S execution section 401 causes the user to determine a combination of such answers (filtering condition) to generate a PDI-A query representative of the combination of answers.

The PDI-S execution section 401 supplies the PDI-A query generated in this manner to the PDI-A query storage section 402 so as to be stored.

Referring back to the flow chart of FIG. 47, at step S 184, the content filter 54 carries out, based on the PDI-A query stored in the PDI-A query storage section 402, matching of the provider side PDI-A included in content metadata from the server 11.

Here, it is assumed that, as the provider side PDI-A, the PDI-A described hereinabove with reference to FIG. 42 has been transmitted from the server 11, and a PDI-A query given below has been generated and stored.
"//QSA[id='ProviderA:123' and a='Baseball']" and //QSA[id='ProviderA:ProgramX:123' and a='Never']

The PDI-A query described above indicates that the provider side PDI-A evaluates whether or not "Baseball" is selected as an answer to the question of "ProviderA:123" and besides "Never" is selected as an answer to the question of "ProviderA:ProgramX:123."

At this time, the content filter 54 evaluates the provider side PDI-A based on the PDI-A query, and if the provider side PDI-A satisfies (is true to) the PDI-A query, then the content filter 54 decides that the provider side PDI-A and the PDI-A query match each other. However, if the provider side PDI-A does not satisfy (is false to) the PDI-A query, then the content filter 54 decides that the provider side PDI-A and the PDI-A query do not match each other. In this instance, in the provider side PDI-A illustrated in FIG. 42, since "Baseball" is selected as an answer to the question of "ProviderA:123" and "Never" is selected as an answer to the question of "ProviderA:ProgramX: 123," the provider side PDI-A and the PDI-A query are decided to match each other.

Since a more complicated filtering condition is represented by a PDI-A query set by the user side in this manner, it is possible to allow a user to acquire content expected by the user side with a higher degree of certainty.

### [Example of Application to Broadcasting System Which Broadcasts in ATSC-M/H System]

Incidentally, also the broadcasting system of the embodiment described above can be applied to a broadcasting system which broadcasts in accordance with the ATSC-M/H system.

In such an instance, a PDI-A (provider side PDI-A) or a PDI-A query is placed in at least one of a "Service" fragment (FIG. 23), a "Schedule" fragment (FIG. 24) and a "Content" fragment (FIG. 25) from among elements which configure the Service Guide illustrated in FIG. 22.

Meanwhile, a PDI-S is placed in an "Interactivity Data" fragment from among the elements which configure the Service Guide illustrated in FIG. 22.

FIG. 49 illustrates details of a configuration of the "Interactivity Data" fragment. A PDI-S is placed into the "Interactive Data" fragment illustrated in FIG. 49 by newly adding a "PDI-S" element to a "PrivateExt" element defined at the lowermost stage. In particular, for example, a "PDI-S" element is represented and encoded in a character string of <xs:element name = "PDI-S" type = "xs:string" xmlns:xs = "http://www.w3.org/2001/XMLSchema"/> by an XML schema.

### [Example of Application to Broadcasting System which Carries Out NRT Broadcasting]

The broadcasting system of the present embodiment can be applied also to a broadcasting system which carries out NRT broadcasting.

In such an instance, a PDI-A (provider side PDI-A), a PDI-A query or a PDI-S transmitted from the server 11 to the client 12 in the broadcasting system 10 described hereinabove is placed into and transmitted together with a "PDI descriptor" which is prescribed newly in the SMT or the NRT-IT (FIG. 29).

FIG. 50 illustrates an example of syntax of the "PDI descriptor." In FIG. 50, each of descriptors to be described are defined together with a bit number (No. of Bits) and a format (Format).

According to the syntax illustrated in FIG. 50, a PDI-A, a PDI-A query or a PDI-S is described in a descriptor "PDI_S or PDI_A or PDI_A_Query" of variable bits.

It is to be noted that the broadcasting system of the present embodiment may naturally be applied to a broadcasting system which broadcasts in accordance with the ATSC-M/H system described hereinabove or a broadcasting system which broadcasts in accordance with any other system than that of a broadcasting system which carries out NRT broadcasting.

Incidentally, in the embodiment described hereinabove, a PDI-A (user side PDI-A and a provider side PDI-A) is generated as metadata of a text expression of the XML or the like and is used for filtering (matching process). In other words, in filtering, texts (XML instances) are compared with each other to carry out a decision of whether or not they are identical with each other.

However, since the process of comparing texts with each other requires the cost in terms of the CPU load, memory usage and so forth, when a large amount of content is to be distributed at a time, there is the possibility that the comparison process may disturb efficient filtering of the distributed content.

Therefore, in the following, an embodiment of a broadcasting system wherein distributed content is filtered in a higher efficiency is described.

### <3. Third Embodiment>

### [Example of Functional Configuration of Server]

First, an example of a functional configuration of a server 11 in a broadcasting system 10 wherein metadata is represented in a bitmap index is described with reference to FIG. 51.

The server 11 of FIG. 51 is configured from a transmission section 42, a content accumulation section 45, a content distributor 46, a PDI-Q generator 411, a PDI-BA generator 412, and a metadata distributor 413.

It is to be noted that components of the server 11 of FIG. 51 which have functions similar to those provided in the server 11 of FIG. 3 are denoted by like names and like reference characters, and description of them is omitted herein suitably.

In particular, the server 11 of FIG. 51 is different from the server 11 of FIG. 3 in that it includes the PDI-Q generator 411, PDI-BA generator 412 and metadata distributor 413 in place of the PDI-Q generator 41, PDI-A generator 43 and metadata distributor 44.

The PDI-Q generator 411 generates a PDI-Q representative of a question about the tastes of a user (viewer) of the client 12, and transmits the PDI-Q to the client 12 through the transmission section 42 and supplies the PDI-Q to the PDI-BA generator 412. An id element of a question defined in the PDI-Q generated by the PDI-Q generator 411 is represented in a bitmap index (bit string) as hereinafter described.

The PDI-BA generator 412 generates, based on the PDI-Q from the PDI-Q generator 411, a PDI-BA (Reference Demographic and Interest Bitmap Answer) (hereinafter referred to suitably as provider side PDI-BA) and supplies the generated PDI-BA to the metadata distributor 413. The PDI-BA is information represented by a bitmap index (bit string) and represents an answer set by the provider side to the question about the tastes of the user of the client 12 described hereinabove corresponding to the PDI-Q.

The metadata distributor 413 specifies (inquires about), based on the PDI-BA from the PDI-BA generator 412, content corresponding to the answer set by the provider side from within content accumulated in the content accumulation section 45. The metadata distributor 413 generates content metadata including the PDI-BA as content metadata of the specified content and transmits the generated content metadata to the client 12 through the transmission section 42.

### [Example of Functional Configuration of Client]

Now, an example of a functional configuration of the client 12 in the broadcasting system 10 wherein metadata is represented in a bitmap index is described with reference to FIG. 52.

The client 12 of FIG. 52 is configured from a reception section 51, a content reproduction section 55, a content accumulation section 56, a PDI-BA generator 421, a PDI-BA storage section 422, and a content filter 423.

It is to be noted that components of the client 12 of FIG. 52 which have functions similar to those provided in the client 12 of FIG. 4 are denoted by like names and like reference characters, and description of them is omitted herein suitably.

In particular, the client 12 of FIG. 52 is different from the client 12 of FIG. 4 in that it includes the PDI-BA generator 421, PDI-BA storage section 422 and content filter 423 in place of the PDI-A generator 52, PDI-A storage section 53 and content filter 54.

The PDI-BA generator 421 generates, based on the PDI-Q transmitted from the server 11, a PDI-BA (hereinafter referred to suitably as user side PDI-BA) and supplies the generated PDI-BA to the PDI-BA storage section 422. The PDI-BA is information represented by a bitmap index and represents an answer of the user to the question about the tastes of the user of the client 12 corresponding to the PDI-Q.

The PDI-BA storage section 422 stores the PDI-BA from the PDI-BA generator 421. The PDI-BA stored in the PDI-BA storage section 422 is read out suitably into the content filter 423.

The content filter 423 reads out the PDI-BA from the PDI-BA storage section 422 and filters content based on the PDI-BA (user side PDI-BA) and the PDI-BA (provider side PDI-BA) included in the content metadata of the content transmitted from the server 11. The content filter 423 supplies the filtered content to the content reproduction section 55 or the content accumulation section 56 in response to a result of the filtering.

### [Example of Transmission and Reception Process of Content]

Now, a transmission and reception process of content in the broadcasting system 10 configured from the server 11 of FIG. 51 and the client 12 of FIG. 52 is described with reference to a flow chart of FIG. 53.

On the provider side such as a broadcasting organization, when, for example, a sponsor of content to be broadcast (distributed) or the broadcasting organization itself asks for distribution of content to a viewer having a particular taste or attribute, the PDI-Q generator 411 of the server 11 generates, at step S211, in response to an operation of the staff on the provider side, a PDI-Q for inquiring of a viewer, that is, of a user of the client 12, about what taste or attribute the user has.

### [Further Example of Syntax of XML Schema]

Here, an example of syntax of an XML schema for configuring a PDI-Q and a PDI-BA in the present embodiment is described with reference to FIGS. 54 and 55.

It is to be noted that the 1st to 50th rows in the syntax illustrated in FIG. 54 are basically similar to the 1st to 50th rows in the syntax illustrated in FIG. 34, respectively, and therefore, detailed description of them is omitted herein.

However, different from FIG. 34, in FIG. 54, the type of the id elements for identifying the items of the questions defined by the name of "QIA," "QBA," "QSA," "QTA" and "QAA" indicated in the 15th, 24th, 31st, 40th and 47th rows, respectively, is defined as "BitmapAnyURIType."

Further, different from FIG. 34, in FIG. 54, the type of answers (a elements) to the questions defined by the name of "QBA," "QSA" and "QAA" indicated in the 26th, 33rd and 48th rows is defined as "BitmapBooleanURIType," "BitmapStringURIType" and "BitmapBase64BinaryURIType," respectively.

The 51st to 57th rows of FIG. 55 indicate a declaration of an attribute of an id element of the type defined by "BitmapAnyURIType."

Meanwhile, the 58th to 64th rows indicate a declaration of an attribute of an a element of the type defined by "BitmapBooleanURIType."

Further, the 65th to 71 st rows indicate a declaration of an attribute of an a element of the type defined by "BitmapStringURIType," and the 72nd to 78th rows indicate a declaration of an attribute of an a element of the type defined by "BitmapBase64BinaryURIType."

More particularly, the 51st to 78th rows of FIG. 55 declare that the id elements of all questions defined in the PDI-Q and the answers (a elements) to the questions defined by the name of "QBA," "QSA" and "QAA" are represented by a bitmap index.

It is to be noted that also the questions and the answers to the questions declared in the syntax illustrated in FIGS. 54 and 55 are distinguished into a provider-common filtering parameter and a provider-unique filtering parameter.

Further, an answer (a element) to a question defined by the name of "QAA" has a format in which only a provider which sets the question can grasp the substance and is a provider-unique filtering parameter of a provider-hiding format encoded in accordance with the Base64 system.

### [Example of PDI-Q]

Now, an example of a PDI-Q configured based on the syntax of FIGS. 54 and 55 is described with reference to FIG. 56.

It is to be noted that questions defined in a PDI-Q illustrated in FIG. 56 are basically same as those of the PDI-Q illustrated in FIG. 7, and therefore, detailed description of them is omitted herein.

However, different from FIG. 7, in FIG. 56, id elements of questions defined by the names of "QBA" and "QSA" and answers (a elements) to the questions are represented in a bitmap index.

In particular, the id element of the question of "Common: 111" in the third row is represented by a bit string of "00000000000101." It is to be noted that <!True=1, False=0 --> in the fourth row indicates that an answer to a question which asks for an answer of the Boolean type is represented by a bit of "1" (True) or "0" (False).

The id element of the question of "ProviderA:123" in the tenth row is represented by a bit string of "00000100000111." "Baseball" in the 13th row, "Basketball" in the 14th row, "Soccer" in the 15th row and "Hockey" in the 16th row which are choices as candidates for an answer to the question are represented by bit strings of "0001," "0010," "0100" and "1000," respectively.

The id element of the question of "ProviderA:ProgramX:123" in the 19th row is represented by a bit string of "00000100000101." Further, "Never" in the 21st row, "Occasionally" in the 22nd row and "Frequently" in the 23rd row which are choices as candidates for an answer to the question are represented by bit strings of "001," "010" and "100," respectively.

In this manner, in the PDI-Q illustrated in FIG. 56, id elements of questions which ask for an answer of the Boolean type and the answer selection type and answers (a elements) to the questions are represented in a bitmap index.

It is to be noted that answers to questions which ask for the integer type and the character string type are not selected from choices as a plurality of (two or more) candidates like answers to questions which ask for answers of the Boolean type and the answer selection type, but are an integer value or a character string inputted arbitrarily by the user. Therefore, the questions which ask for the integer type and the character string type are not represented in a bitmap index. Further, although, according to the syntax of FIGS. 54 and 55, also the id element of questions which ask for the integer type and the character string type can be represented in a bitmap index, it is assumed here that they are represented in a bitmap index.

In the following description, it is assumed that questions defined in a PDI-Q asks for answers of the Boolean type and the answer selection type.

Referring back to the flow chart of FIG. 53, at step S212, the PDI-Q generator 411 of the server 11 transmits the generated PDI-Q to the client 12 through the transmission section 42 and supplies the generated PDI-Q to the PDI-BA generator 412.

At step S221, the reception section 51 of the client 12 receives the PDI-Q transmitted thereto from the server 11 and supplies the received PDI-Q to the PDI-BA generator 421.

It is to be noted that the PDI-Q may be received by the client 12, for example, every time it is broadcast (transmitted) at predetermined time intervals from a broadcasting station as a provider in which the server 11 is provided. Or, the PDI-Q may be received by the client 12 when the channel of the client 12 is adjusted to a channel of the broadcasting station in which the server 11 is provided.

At step S222, the PDI-BA generator 421 of the client 12 generates a user side PDI-BA to a question defined in the PDI-Q received by the reception section 51. In particular, when the PDI-Q from the server 11 is received, the PDI-BA generator 421 causes a display section not shown to display a screen image corresponding to a question defined in the PDI-Q and causes a user (viewer) of the client 12 to input or select an answer to the question to generate a user side PDI-BA representative of the answer. In other words, the PDI-BA generator 421 interacts with the user to generate a user side PDI-BA representative of an answer to a question defined in the PDI-Q.

It is assumed here that the client 12 receives a PDI-Q in which only questions which ask for answers of the Boolean type and the answer selection type are defined in FIG. 56. Further, it is assumed that, on the display section not shown of the client 12, the screen images shown in FIGS. 8, 10 and 11 are successively displayed as screen images corresponding to the question group defined in the received PDI-Q.

Further, it is assumed that the selection button 62-1 is selected as an answer to the question on the screen image corresponding to the question of "common: 111" described hereinabove with reference to FIG. 8 by the user. Further, it is assumed that the selection buttons 82-1, 82-3 and 82-4 are selected as an answer to the question on the screen image corresponding to the question of "ProviderA:123" described hereinabove with reference to FIG. 10 by the user. Furthermore, it is assumed that the selection button 92-2 is selected as an answer to the question on the screen image corresponding to the question of "ProviderA:ProgramX:123" described hereinabove with reference to FIG. 11 by the user.

At this time, the user side PDI-BA generated by the PDI-BA generator 421 is such as given below.

{"00000000000101":"1"
"00000100000111":"1101"
"00000100000101":"010"}

In the user side PDI-BA described above, the first row indicates an id element of the question of "Common: 111" and that "True" is selected as an answer to the question.

The second row indicates an id element of the question of "ProviderA:123" and that "Baseball," "Soccer" and "Hockey" are selected as an answer to the question. Although the bitmap index representation of the answers is "0001," "0100" and "1000," since the question of "ProviderA:123" permits a plurality of (equal to or greater than 1 but equal to or smaller than 3) answers, "1101" which is OR coupling of the bits of the bitmap index representations becomes a bitmap index representation of the answer to the question of "ProviderA:123."

The third row indicates an id element of the question of "ProviderA:ProgramX:123" and that "Occasionally" is selected as an answer to the question. Since the question of "ProviderA:ProgramX:123" restricts the number of answers to only one, the representation does not become a representation of OR coupling of the bits of the bitmap index representations of the candidates for an answer, but "010" representative of "Occasionally" becomes a bitmap index representation of the answer to the question of "ProviderA:ProgramX: 123."

It is to be noted that the values of the bits representative of the answer in the user side PDI-BA are actually mapped to a binary field.

FIG. 57 illustrates an example of an answer in the user side PDI-BA mapped to a binary field.

At a right upper portion of FIG. 57, an id element of the question of "ProviderA:ProgramX:123" and an answer to the question in the user side PDI-BA described hereinabove are indicated. As shown in FIG. 57, upper 6 bits of the id element of the question represented in a bitmap index representation are mapped to lower 6 bits of a bit string B1 of one byte, and lower 8 bits of the id element of the question are mapped to bits of another bit string B2 of one byte. Further, 3 bits of the answer (a element) to the question are mapped to lower 3 bits of a further bit string B3 of one byte.

In this manner, an id element of one question and an answer to the question in the user side PDI-BA can be represented by at most three bytes, and a question and an answer to the question can be specified only by the three bytes.

The PDI-BA generator 421 supplies the user side PDI-BA generated in this manner to the PDI-BA storage section 422 so as to be stored. The user side PDI-BA stored in the PDI-BA storage section 422 is used when it is decided whether or not content distributed from the server 11 matches the tastes of the user of the client 12 as hereinafter described.

Now, referring back to the flow chart of FIG. 53, at step S213, the PDI-BA generator 412 of the server 11 generates a provider side PDI-BA to a question defined in the PDI-Q from the PDI-BA generator 411 and supplies the generated provider side PDI-Q to the metadata distributor 413. In particular, when a PDI-Q is generated in response to operation of the staff of the broadcasting station (provider side), the PDI-BA generator 412 causes the display section not shown to display such a screen image corresponding to the question defined in the PDI-Q as described hereinabove, for example, with reference to any of FIGS. 8, 10 and 11. Then, the PDI-BA generator 412 causes the staff of the broadcasting station to input or select an answer to the question to generate a provider side PDI-BA representative of such answers. At this time, the staff of the broadcasting station would input or select an answer corresponding to the content to be distributed as an answer to the questions defined in the PDI-Q. In other words, the provider side PDI-BA generated by the PDI-BA generator 412 represents information (answer) for allowing a user (viewer) of the client 12 to view content distributed later taking the tastes of the user into consideration on the provider side.

At step S214, the metadata distributor 413 specifies (inquires about), based on the provider side PDI-BA from the PDI-BA generator 412, content corresponding to the provider side PDI-BA from within the content accumulated in the content accumulation section 45. The content specified here may be that content with regard to which the content metadata has a higher degree of similarity to the answer represented by the provider side PDI-BA from the PDI-BA generator 412 than a predetermined value from within the accumulated content to which the content metadata are applied in advance or may be that content selected in advance as content to be viewed by the user by the staff of the broadcasting station. It is to be noted that the content specified by the metadata distributor 413 is acquired from the content accumulation section 45 by the content distributor 46.

At step S215, the metadata distributor 413 newly generates, based on content metadata applied in advance to the content specified at step S215 and the provider side PDI-BA from the PDI-BA generator 412, content metadata including the provider side PDI-BA.

At step S216, the transmission section 42 distributes the acquired content to the content distributor 46 together with the content metadata generated by the metadata distributor 413. At this time, as the content metadata, content metadata prescribed by a standardization organization may be transmitted in addition to the content metadata generated by the metadata distributor 44.

In this manner, as an answer to the questions defined in the PDI-Q, content whose content metadata includes a provider side PDI-BA representative of an answer intended by the provider side, or in other words, content which matches the tastes of the user and which the provider side expects the user to view, is distributed.

It is to be noted that the processes at steps S213 to S216 need not be executed continuously immediately after the process at step S212, but may be executed before a PDI-BA is generated and stored by the client 12 owned by each user.

Further, although it is described that, at step S216, content is distributed together with content metadata, the content may not be distributed together with the content metadata. In particular, after the content metadata including the PDI-BA is transmitted to the client 12 in advance, the content corresponding to the content metadata may be distributed.

When the content and the content metadata are distributed from the server 11 in this manner, the reception section 51 of the client 12 receives the content and the content metadata distributed from the server 11 and supplies the content and the content metadata to the content filter 423 at step S223.

At step S224, the content filter 423 carries out matching between the user side PDI-BA stored in the PDI-BA storage section 422 and the provider side PDI-BA included in the content metadata from the server 11 with each other.

### [Example of Matching Process by Content Filter]

Here, it is assumed that, as the user side PDI-BA, the user side PDI-BA described hereinabove has been generated and stored, and as the provider side PDI-BA, a provider side PDI-BA given below has been transmitted from the server 11.

{"00000100000 11":"0001"}

Although detailed description of the provider side PDI-BA is omitted herein because it has a configuration basically similar to that of the user side PDI-BA described hereinabove, this provider side PDI-BA indicates that "Baseball" is selected as an answer to the question of "ProviderA:123."

At this time, the content filter 423 compares the user side PDI-BA and the provider side PDI-BA with each other, and if at least one of the answers to the questions indicates coincidence, then it is decided that the user side PDI-BA and the provider side PDI-BA match each other. However, if none of the answers to the questions indicates coincidence, then it is decided that the user side PDI-BA and the provider side PDI-BA do not match each other. In this instance, since the answer to the question of "ProviderA:123" in the user side PDI-BA described hereinabove and the answer to the question of "providerA:123" in the present provider side PDI-BA coincide with each other in that both of them include "Baseball," it is decided that the user side PDI-BA and the provider side PDI-BA match each other.

Then, it is assumed that, as the provider side PDI-BA, a PDI-BA given below is transmitted from the server 11.

{"00000100000111":"0010"
"00000100000101":"001"}

This provider side PDI-BA indicates that "Basketball" is selected as an answer to the question of "ProviderA:123" and "Never" is selected as an answer to the question of "ProviderA:Programx:123."

In this instance, since none of the answers to the questions in the user side PDI-BA described hereinabove and the answers to the questions in the present provider side PDI-BA coincide with each other, it is decided that the user side PDI-BA and the provider side PDI-BA do not match each other.

The content filter 423 carries out a matching process between the user side PDI-BA and the provider side PDI-BA in this manner.

At step S225, the content filter 423 decides whether or not the user side PDI-BA and the provider side PDI-BA match each other. If it is decided at step S225 that the user side PDI-BA and the provider side PDI-BA match each other, then the content filter 423 decides that the content distributed from the server 11 matches the tastes of the user (viewer) of the client 12 and supplies the content to the content reproduction section 55 or the content accumulation section 56. Then, the processing advances to step S226.

If the content distributed from the server 11 is supplied from the content filter 423 to the content reproduction section 55, then the content reproduction section 55 reproduces the content at step S226.
Further, if the content distributed from the server 11 is supplied from the content filter 423 to the content accumulation section 56, then the content accumulation section 56 accumulates (records) the content at step S226. The accumulated content is suitably supplied to and reproduced by the content reproduction section 55 in response to an operation instruction of the user.

On the other hand, if it is decided at step S225 that the user side PDI-BA and the provider side PDI-BA do not match each other, then the content filter 423 decides that the content distributed from the server 11 does not match the tastes of the user (viewer) of the client 12, and discards (deletes) the content, thereby ending the processing.

According to the process described above, in a broadcasting system, on the provider side, a PDI-Q representative of a question about the tastes of a user is generated by a server, and the PDI-Q is transmitted to a client terminal. In response to the PDI-Q, a provider side PDI-BA representative of an answer set by the provider side is distributed as content metadata of corresponding content. Consequently, as the content metadata, content metadata which meets to the needs at the time other than content metadata prescribed by a standardization organization can be applied to content. On the other hand, on the user side, a user side PDI-BA representative of an answer of the user to the PDI-Q from the server is generated by the client apparatus, and matching between the generated user side PDI-BA and the provider side PDI-BA from the server is carried out to determine whether or not the content distributed from the server is to be acquired. Consequently, content can be filtered with content metadata which meets the needs at the time other than content metadata prescribed by a standardization organization. Accordingly, content which meets the needs at the time can be acquired.

On the other hand, if the questions defined in the PDI-Q ask for answers of the Boolean type and the answer selection type, then when the client terminal filters content, the user side PDI-BA and the provider side PDI-BA represented in bitmap indexes are compared with each other. Therefore, the cost relating to the CPU load, memory usage and so forth is lower than that by comparison between the user side PDI-BA and the provider side PDI-BA of text representations. Thus, even when a large amount of content is to be distributed at a time, the distributed content can be filtered in a higher efficiency.

It is to be noted that, while, in the foregoing description, it is assumed that the questions defined in the PDI-Q include only those questions which ask for answers of the Boolean type and the answer selection type, naturally they may include questions which ask for answers of the integer type and the character string type. In this instance, the PDI-BA (user side PDI-BA and provider side PDI-BA) includes answers of a text representation as answers to the questions which ask for answers of the integer type and the character string type. In particular, to a question whose id element is represented in a bitmap index representation in the PDI-Q, an answer of a bitmap index representation is generated, but to a question whose id element is not represented in a bitmap index representation, an answer of a text representation (integral value, character string or the like) is generated.

Further, the configuration described hereinabove wherein an id element of a question and an answer to the question are represented by a bitmap index can be applied also to the broadcasting system of the second embodiment.

In the following, a configuration of the broadcasting system of the second embodiment described hereinabove which uses a PDI-BA is described.

### [Another Example of Functional Configuration of Server]

First, another example of a configuration of the server 11 in the broadcasting system 10 wherein metadata is represented in a bitmap index is described with reference to FIG. 58.

The server 11 of FIG. 58 is configured from a transmission section 42, a content accumulation section 45, a content distributor 46, a metadata distributor 413, a PDI-S generator 431 and a PDI-S execution section 432.

It is to be noted that components of the server 11 of FIG. 58 which have functions similar to those provided in the server 11 of FIG. 51 are denoted by like names and like reference characters, and description of them is omitted herein suitably.

In particular, the server 11 of FIG. 58 is different from the server 11 of FIG. 51 in that it includes the PDI-S generator 431 and the PDI-S execution section 432 in place of the PDI-Q generator 411 and the PDI-BA generator 412.

The PDI-S generator 431 generates a PDI-S which is a script for obtaining a user side PDI-BA representative of an answer of a user (viewer) of the client 12 to a question about the tastes of the user. Then, the PDI-S generator 431 transmits the generated PDI-S to the client 12 through the transmission section 42 and supplies the PDI-S to the PDI-S execution section 432.

The PDI-S execution section 432 executes the PDI-S from the PDI-S generator 431 to generate a provider side PDI-BA representative of an answer set by the provider side to the question about the tastes of the user of the client 12 and supplies the provider side PDI-BA to the metadata distributor 413.

### [Another Example of Functional Configuration of Client]

Now, another example of a functional configuration of the client 12 in the broadcasting system 10 wherein metadata is represented by a bitmap index is described with reference to FIG. 59.

The client 12 of FIG. 59 is configured from a reception section 51, a content reproduction section 55, a content accumulation section 56, a PDI-BA storage section 422, a content filter 423, a PDI-S execution section 441 and a history information storage section 422.

It is to be noted that components of the client 12 of FIG. 59 which have functions similar to those provided in the server client 12 of FIG. 52 are denoted by like names and like reference characters, and description of them is suitably omitted herein.

In particular, the client 12 of FIG. 59 is different from the client 12 of FIG. 52 in that the PDI-S execution section 441 is provided in place of the PDI-BA generator 421 and the history information storage section 422 is provided newly.

The PDI-S execution section 441 executes a PDI-S transmitted thereto from the server 11 to generate a user side PDI-BA representative of an answer of a user of the client 12 to a question about the tastes of the user, and supplies the user side PDI-BA to the PDI-BA storage section 422. The PDI-S execution section 441 executes the PDI-S based on history information hereinafter described as occasion demands.

The history information storage section 422 has stored therein history information which represents a behavior history of a user who owns the client 12. The history information stored in the history information storage section 422 is read out to the PDI-S execution section 441 as occasion demands.

### [Example of Transmission and Reception Process of Content]

Now, a transmission and reception process of content and a PDI-S execution process in the broadcasting system 10 configured from the server 11 of FIG. 58 and the client 12 of FIG. 59 is described with reference to flow charts of FIGS. 60 and 61.

It is to be noted that the content transmission and reception process and the PDI-S execution process indicated by the flow charts of FIGS. 60 and 61 are basically similar to the content transmission and reception process and the PDI-S execution process indicated by the flow charts of FIGS. 33 and 35 and executed by the broadcasting system 10 of the second embodiment described hereinabove except that a user side PDI-BA and a provider side PDI-BA are generated in place of generation of a user side PDI-A and a provider side PDI-A. Therefore, description of the processes is omitted herein. It is to be noted that generation of a user side PDI-BA and a provider side PDI-BA is carried out similarly to generation of a user side PDI-BA and a provider side PDI-BA in the content transmission and reception process described hereinabove with reference to the flow chart of FIG. 53.

In particular, according to the process described above, in a broadcasting system, on the provider side, a PDI-S for obtaining a user side PDI-BA to a question about the tastes of a user is generated by a server, and the PDI-S is transmitted to a client terminal. In response to the PDI-S, a provider side PDI-BA representative of an answer set by the provider side is distributed as content metadata of corresponding content. Consequently, as the content metadata, content metadata which meets the needs at the time other than content metadata prescribed by a standardization organization can be applied to content. On the other hand, on the user side, the PDI-S from the server is executed by a client terminal to generate a user side PDI-BA, and matching between the generated user side PDI-BA and the provider side PDI-BA from the server is carried out to determine whether or not the content distributed from the server is to be acquired. Consequently, content can be filtered with content metadata which meets the needs at the time other than content metadata prescribed by a standardization organization. Accordingly, content which meets the needs at the time can be acquired.

On the other hand, if the questions defined in the PDI-S ask for answers of the Boolean type and the answer selection type, then when the client terminal filters content, the user side PDI-BA and the provider side PDI-BA represented in bitmap indexes are compared with each other. Therefore, the cost relating to the CPU load, memory usage and so forth is lower than that by comparison between the user side PDI-BA and the provider side PDI-BA of text representations. Thus, even when a large amount of content is distributed at a time, the distributed content can be filtered in a higher efficiency.

Further, in the client terminal, since an interaction with the user can be carried out by the PDI-S, even if a question set on the provider side has the substance which requires a high degree of interactivity, a sufficient interaction can be carried out with the user. Accordingly, a user side PDI-BA which reflects the tastes of the user with a high degree of accuracy can be generated, and consequently, an accurate filtering condition can be obtained. As a result, it is possible to acquire content which meets the needs at the time with a high degree of accuracy.

Incidentally, also the broadcasting system of the present embodiment described hereinabove can be applied to a broadcasting system which broadcasts in accordance with the ATSC-M/H system.

### [Example of Application to Broadcasting System Which Broadcasts in ATSC-M/H System]

In such an instance, a PDI-BA is placed in at least one of a "Service" fragment, a "Schedule" fragment and a "Content" fragment from among elements which configure the Service Guide illustrated in FIG. 22 as described hereinabove.

FIG. 62 illustrates details of a configuration of the "Service" fragment. A PDI-BA is placed into the "Service" fragment illustrated in FIG. 62 by newly adding a "PDI-BA" element to a "PrivateExt" element defined at the lowermost stage. In particular, for example, a "PDI-BA" element is represented as a bitmap index byte-represented as <xs:element name = "PDI-BA" type = "xs:base64Binary" xmlns:xs = "http://www.w3.org/2001/XMLSchema"/> by an XML schema, and the bitmap index is encoded in a base64 binary format.

FIG. 63 illustrates details of a configuration of the "Schedule" fragment. A PDI-BA is placed into the "Schedule" fragment illustrated in FIG. 63 by newly adding a "PDI-BA" element to the "PrivateExt" element defined at the lowermost stage. In particular, for example, a "PDI-BA" element is represented as a bitmap index byte-represented as <xs:element name = "PDI-BA" type = "xs:base64Binary" xmlns:xs = "http://www.w3.org/2001/XMLSchema"/> by an XML schema, and the bitmap index is encoded in a base64 binary format.

FIG. 64 illustrates details of a configuration of the "Content" fragment. A PDI-BA is placed into the "Content" fragment illustrated in FIG. 64 by newly adding a "PDI-BA" element to the "PrivateExt" element defined at the lowermost stage. In particular, for example, the "PDI-BA" element is represented as a bitmap index byte-represented as <xs:element name = "PDI-BA" type = "xs:base64Binary" xmlns:xs = "http://www.w3.org/2001/XMLSchema"/> by an XML schema, and the bitmap index is encoded in a base64 binary format.

Further, the PDI-Q or PDI-S is placed into the "Interactivity Data" fragment from among the elements which configure the Service Guide illustrated in FIG. 22 as described hereinabove.

Further, the broadcasting system of the present embodiment can be applied also to a broadcasting system which carries out NRT broadcasting.

### [Example of Application to Broadcasting System Which Carries Out NRT Broadcasting]

In such a case, a PDI-BA (provider side PDI-BA) transmitted from the server 11 to the client 12 in the broadcasting system 10 described hereinabove is placed into and transmitted together with "PDI descriptor" prescribed newly in the SMT or the NRT-IT (FIG. 29).

FIG. 65 illustrates an example of syntax of the "PDI descriptor." In FIG. 65, each of descriptors to be described is defined together with a bit number (No. of Bits) and a format (Format).

According to the syntax illustrated in FIG. 65, a PDI-BA is described in a descriptor "PDI_BA" of variable bits.

It is to be noted that the broadcasting system of the present embodiment may naturally be applied to a broadcasting system which broadcasts in accordance with the ATSC-M/H system described hereinabove or a broadcasting system wherein NRT broadcasting is carried out in accordance with a system other than the line broadcasting systems.

While the series of processes described above can be executed by hardware, it may otherwise be executed by software. In the case where the series of processes is executed by software, a program which constructs the software is installed from a program recording medium into a computer incorporated in hardware for exclusive use, a personal computer, for example, for universal use which can execute various functions by installing various programs, and so forth.

The program recording medium in which a program to be installed into a computer and placed into an executable condition by the computer is stored may be, for example, as shown in FIG. 2, a removable medium 31 in the form of a package medium formed from a magnetic disk (including a flexible disk), an optical disk (including a CD-ROM (Compact Disc-Read Only Memory) and a DVD (Digital Versatile Disc)), including a magneto-optical disk), or a semiconductor memory. Else, the program recording medium may be formed as the ROM 22, a hard disk which configures the storage section 28 or the like in which the program is stored temporarily or permanently. Storage of the program into the program recording medium is carried out, as occasion demands, through the communication section 29 which is an interface such as a router and a modem, making use of a wired or wireless communication medium such as a local area network, the Internet or a digital satellite broadcast.

It is to be noted that, in the present specification, steps which describe a program include not only processes which are executed in a time series in the order as described but also processes which may be but need not necessarily be processed in a time series but may be executed in parallel or individually without being processed in a time series.

Further, in the present specification, the term system is used to represent an entire apparatus composed of a plurality of apparatus.

It is to be noted that the embodiment of the present invention is not limited to the embodiments described hereinabove but various alterations can be made without departing from the subject matter of the present invention.

### [Reference Signs List]

10 Broadcasting system, 11 Server, 12 Client, 41 PDI-Q generator, 42 Transmission section, 43 PDI-A generator, 44 Metadata distributor, 45 Content accumulation section, 46 Content distributor, 51 Reception section, 52 PDI-A generator, 53 PDI-A storage section, 54 Content filter, 55 Content reproduction section, 56 Content accumulation section, 111 PDI-A query generator, 112 Metadata distributor, 131 PDI-A query generator, 132 PDI-A query storage section, 311 PDI-S generator, 312 PDI-S execution section, 321 PDI-S execution section, 322 History information storage section, 391 PDI-S execution section, 392 Metadata distributor, 401 PDI-S execution section, 402 PDI-A query storage section, 411 PDI-Q generator, 412 PDI-BA generator, 413 Metadata distributor, 421 PDI-BA generator, 422 PDI-BA storage section, 423 Content filter, 431 PDI-S generator, 432 PDI-S execution section, 441 PDI-S execution section, 442 History information storage section

## Claims

1. A transmission apparatus which distributes content to a client, comprising:
question generation means for generating question information which is information representative of a question about the tastes of a user of the client; and
transmission means for transmitting the question information and provider side answer information, which is information of a bit string representative of an answer set by a provider providing the content to the client, to the question about the tastes of the user.

2. The transmission apparatus according to claim 1, further comprising:
metadata generation means for generating metadata including the provider side answer information as metadata of the content corresponding to the answer set by the provider, wherein
the transmission means transmits the metadata to the client.

3. A transmission method for a transmission apparatus which distributes content to a client, comprising:
a question generation step of generating question information which is information representative of a question about the tastes of a user of the client; and
a transmission step of transmitting the question information and provider side answer information, which is information of a bit string representative of an answer set by a provider providing the content to the client, to the question about the tastes of the user.

4. A reception apparatus which acquires content distributed from a server, comprising:
answer generation means for generating, in response to question information which is transmitted from the server and is information representative of a question about the tastes of a user, user side answer information which is information of a bit string representative of an answer of the user to the question; and
matching means for carrying out matching between the answer information and provider side answer information, which is transmitted from the server and is information of a bit string representative of an answer set by a provider providing the content, to the question to determine acquisition of the content distributed from the server.

5. The reception apparatus according to claim 4, wherein the matching means carries out the matching to determine acquisition of the content corresponding to metadata including the provider side answer information.

6. A reception method for a reception apparatus which acquires content distributed from a server, comprising:
an answer generation step of generating, in response to question information which is transmitted from the server and is information representative of a question about the tastes of a user, user side answer information which is information of a bit string representative of an answer of the user to the question; and
a matching step of carrying out matching between the answer information and provider side answer information, which is transmitted from the server and is information of a bit string representative of an answer set by a provider providing the content, to the question to determine acquisition of the content distributed from the server.

7. A transmission and reception system including a transmission apparatus which distributes content and a reception apparatus which acquires the content distributed from the transmission apparatus, wherein
the transmission apparatus includes
question generation means for generating question information which is information representative of a question about the tastes of a user of the reception apparatus, and
transmission means for transmitting to the reception apparatus the question information and provider side answer information, which is information of a bit string representative of an answer set by a provider providing the content, to the question about the tastes of the user, and
the reception apparatus includes
answer generation means for generating, in response to the question information transmitted from the transmission apparatus, user side answer information which is information of a bit string representative of an answer of the user to the question, and
matching means for carrying out matching between the user side answer information and the provider side answer information transmitted from the transmission apparatus to determine acquisition of the content distributed from the transmission apparatus.
